# EUROPEAN PATENT APPLICATION

(11) **EP 4 841 800 A1**
(43) Date of publication of application: **18.11.2026**
(21) Application number: 25846503.8
(22) Date of filing: 25.04.2025
(51) Int. Cl.: H01M 50/531, H01M 4/13, H01M 10/0562, H01M 4/62

(54) **SOLID-STATE CELL AND MANUFACTURING METHOD THEREFOR, SOLID-STATE BATTERY, AND ELECTRIC DEVICE**

(30) Priority: 31.07.2024 CN 202411045046
(71) Applicant: Contemporary Amperex Technology Co., Limited, Ningde, Fujian 352100 (CN)
(72) Inventor: LIAO, Kejun, Ningde, Fujian 352100 (CN); ZENG, Zipeng, Ningde, Fujian 352100 (CN); HU, Bobing, Ningde, Fujian 352100 (CN); XUAN, Minjie, Ningde, Fujian 352100 (CN); WU, Kai, Ningde, Fujian 352100 (CN)
(74) Representative: Lorenz Seidler Gossel Part. mbB
(86) International application number: PCT/CN2025/091320
(87) International publication number: WO 2026/026055

(57) **Abstract**

The present application relates to a solid-state cell and a manufacturing method therefor, a solid-state battery, and an electric device. The solid-state cell comprises a solid electrolyte portion, and a positive electrode portion and a negative electrode portion which are separated by the solid electrolyte portion; any electrode portion independently comprises an electrode body and a tab portion connected to the electrode body; the electrode body comprises at least one electrode layer; and the electrode layer comprises a current collector layer and an electrode active material layer located on at least one side of the current collector layer. Two composite recesses used for accommodating positive and negative tab portions are formed on at least one side edge of the solid-state cell in the height direction thereof. Each electrode layer is provided with recesses corresponding to the two composite recesses. In the at least one electrode layer, the current collector layer is connected to a corresponding tab at the bottom of at least one recess; and the electrode layer further comprises a conductive adhesive layer located between the current collector layer and the electrode active material layer and at least covering a die-cut edge region of the tab recess.

## Description

### CROSS-REFERENCE TO RELATED APPLICATIONS

The present application claims the priority of Chinese Patent Application CN2024110450465, filed on July 31, 2024, and entitled "Solid-State Cell and Manufacturing Method therefor, Solid-State Cell, and Electric Device", which is incorporated herein by reference in its entirety.

### TECHNICAL FIELD

The present application relates to the technical field of solid batteries, and in particular, to a solid-state cell and a manufacturing method therefor, a solid-state battery, and an electric device.

### BACKGROUND

The statement here merely provides the background information related to the present application and does not necessarily constitute the prior art.

The solid-state battery uses a non-flammable solid electrolyte to replace the organic electrolyte in the traditional liquid secondary battery, so that the safety of the battery is greatly improved, and the solid-state battery is considered a new generation battery that is the most recent to industrialization. Further improvement of the energy density and cycle performance of the solid-state battery is of great significance for promoting the industrialization of the solid-state battery.

### SUMMARY

According to various implementations and various embodiments of the present application, the present application provides a solid-state cell and a manufacturing method thereof, a solid-state battery, and an electric device. The solid-state cell can improve the energy density and cycle performance of the solid-state battery. In addition, the reliability of the solid-state battery may also be improved.

In a first aspect of the present application, provided is a solid-state cell, which includes a solid electrolyte portion and two electrode portions, where one of the two electrode portions is a positive electrode portion, the other one is a negative electrode portion, and the positive electrode portion and the negative electrode portion are separated by the solid electrolyte portion; any electrode portion independently includes an electrode body and a tab portion connected to the electrode body, the electrode body includes at least one electrode layer, and the electrode layer includes a current collector layer and an electrode active material layer located on at least one side of the current collector layer; the tab portion in the positive electrode portion is a positive tab portion, and the tab portion in the negative electrode portion is a negative tab portion;
a height direction of the solid-state cell is denoted as a Y direction, a width direction of the solid-state cell is denoted as an X direction, and a thickness direction of the solid-state cell is denoted as a Z direction; the X direction, the Y direction, and the Z direction are perpendicular to each other;
at an edge on at least one side in the Y direction, two composite recesses disposed on the solid-state cell are respectively denoted as a first composite recess and a second composite recess; the first composite recess is configured to accommodate at least a part of the positive tab portion, and the second composite recess is configured to accommodate at least a part of the negative tab portion; each electrode layer is provided with a recess corresponding to the first composite recess and a recess corresponding to the second composite recess; and
in at least one electrode layer, the current collector layer is connected to a tab at the bottom of at least one recess, the electrode layer further comprises a conductive adhesive layer located between the current collector layer and the electrode active material layer, and the conductive adhesive layer at least covers a die-cut edge region of the recess where the tab is located.

The solid-state cell is provided with a first composite recess at the positive tab portion for bending the positive tab portion inward, and a second composite recess at the negative tab portion for bending the negative tab portion inward, and at this time, the cell active expansion region is disposed in a region that is consistent with the first composite recess and the second composite recess in height and is located outside the first composite recess and the second composite recess in the width direction of the solid-state cell. That is, in the width direction of the solid-state cell, the solid-state cell is provided with the cell active expansion region with the same height as the first composite recess and the second composite recess in the space region other than the positive tab portion and the negative tab portion, so that the solid-state cell can better utilize the space at the tab, thereby greatly increasing the space volume occupied by the electrode portion in the solid-state cell, and significantly improving the volumetric energy density of the solid-state cell and the solid-state battery. The two composite recesses can also provide protection for the tab portion and reduce the risk of tab breakage. Further, a conductive adhesive layer is disposed in a die-cut edge region of the recess where the tab is located, and on the one hand, the conductive adhesive layer may also provide good conductivity between the current collector layer and the electrode active material layer, and in addition, the bonding force is improved, which is beneficial to improving the cycle performance of the solid-state battery. On the other hand, the bonding force between the electrode active material layer and the current collector layer may be improved, which is beneficial to forming a tab recess with a clean edge when the tab is die-cut, may reduce powder falling of the electrode active material, is beneficial to reducing the risk of internal short circuit, and may improve the reliability and production yield of the battery.

In addition, in a manufacturing method for the solid-state cell, when the electrode active material layer is introduced, the active pre-coating layer may cover the tab recess region together, and the electrode active material at the tab recess may be selectively removed more easily by using the difference in the bonding force of the active pre-coating layer to the current collector layer and the conductive adhesive layer, so that the electrode active material layer forms a neat edge contour when the tab is die-cut, which can reduce the powder falling of the electrode active material, thereby improving the production yield of the solid-state cell and the solid-state battery, and can also improve the cycle performance of the manufactured solid-state cell and solid-state battery.

In some implementations, the conductive adhesive layer at least covers the die-cut edge region of each recess in the electrode layer.

By making the conductive adhesive layer at least cover the die-cut edge region of each recess in the electrode layer, the increase of the coverage area of the conductive adhesive layer is more beneficial to improving the bonding force and conductivity between the current collector layer and the electrode active material layer, and is beneficial to further improving the cycle performance of the solid-state battery. On the other hand, the edge neatness of the electrode active material layer at each recess may also be improved, and the powder falling of the electrode active material at each recess may be reduced, which is more beneficial to reducing the risk of internal short circuit and improving the reliability and production yield of the battery.

In some embodiments, the conductive adhesive layer at least covers a cut edge region of the electrode layer.

By making the conductive adhesive layer at least cover the cut edge region of the electrode layer, it is more beneficial to improving the bonding force and conductivity between the current collector layer and the electrode active material layer, and it is beneficial to further improving the cycle performance of the solid-state battery. On the other hand, the edge neatness of the electrode active material layer at each cutting position may be improved, and the powder falling of the electrode active material may be further reduced, which is more beneficial to reducing the risk of internal short circuit and improving the reliability and production yield of the battery.

In some implementations, in the electrode layer including the conductive adhesive layer, a region between the electrode active material layer and the current collector layer includes a covering region provided with the conductive adhesive layer, and further includes or does not comprise a blank region not provided with the conductive adhesive layer; and calculated by a projection in the Z direction, an area percentage of the covering region relative to the electrode active material layer is 64% to 100%.

In some embodiments, in the electrode layer including the conductive adhesive layer, calculated by the projection along the Z direction, a projection region of the conductive adhesive layer is consistent with a projection region of the electrode active material layer.

The increase of the coverage area of the conductive adhesive layer is more beneficial to improving the bonding force and electronic conductivity between the current collector layer and the electrode active material layer, and is further beneficial to improving the cycle performance of the solid-state battery.

In some implementations, the conductive adhesive layer includes an adhesive matrix and a conductive material.

In some implementations, the electrode layer including the conductive adhesive layer satisfies one or more of the following features:
the adhesive matrix including a polyolefin resin, where the polyolefin resin includes one or more of the following polyolefin resins and polyolefin modified resins based on any one of the following polyolefin resins: polyethylene, polypropylene, an ethylene-vinyl acetate copolymer, a styrene-butadiene copolymer, a styrene-ethylene-butylene-styrene block copolymer, a styrene-isoprene-styrene block copolymer, and amorphous poly-α-olefin; and the polyolefin modified resin is a copolymer of the polyolefin resin, maleic anhydride and petroleum resin;
the conductive material including a carbon conductive material;
in the conductive adhesive layer, a mass ratio of the adhesive matrix to the conductive material being (0.6-1.5): 1;
the electrode layer including the conductive adhesive layer having a resistivity of 10 Ω·m to 1000 Ω·m and a bonding force between the current collector layer and the electrode active material layer in the electrode layer being 1 N/m to 50 N/m.

In some implementations, the conductive adhesive layer satisfies one or more of the following features:
the adhesive matrix comprising a polyolefin modified resin, wherein the polyolefin modified resin is a copolymer formed by the polyolefin resin, maleic anhydride and petroleum resin at a mass ratio of 30: (2-5): (8-12);
the conductive material including a carbon conductive material, where the carbon conductive material includes one or more of superconducting carbon, acetylene black, carbon black, Ketjen black, a carbon dot, a carbon nanotube, graphene, a carbon nanofiber, and a mesophase carbon micro-sphere;
a mass percentage of a sum of the adhesive matrix and the conductive material in the conductive adhesive layer being 90% to 98%;
in the conductive adhesive layer, a mass ratio of the adhesive matrix to the conductive material being (0.8-1.4): 1;
the electrode layer including the conductive adhesive layer having a resistivity of 10 Ω·m to 200 Ω·m and a bonding force between the current collector layer and the electrode active material layer in the electrode layer being 3N/m to 20N/m.

By selecting the composition of the conductive adhesive layer, it is beneficial to balancing the bonding force and conductivity between the electrode active material layer and the current collector layer, to better improve the cycle performance of the solid-state battery, and to achieve a comprehensive improvement of the cycle performance, reliability and production yield of the solid-state battery.

In some implementations, the electrode active material layer includes a conductive agent; and in the same electrode layer, calculated by a single side of the current collector layer, a mass percentage of the conductive material in the conductive adhesive layer is higher than a mass percentage of the conductive agent in the electrode active material layer.

By controlling the content gradient between the conductive material in the conductive adhesive layer and the conductive agent in the electrode active material layer, it is more beneficial to improving the conductivity between the electrode active material layer and the current collector layer.

In some implementations, in the corresponding electrode layer, calculated by the single side of the current collector layer, the conductive adhesive layer has a thickness of 0.5 µm to 3 µm.

In some implementations, in the corresponding electrode layer, calculated by the single side of the current collector layer, the conductive adhesive layer has a thickness of 0.5 µm to 1.5 µm.

By controlling the thickness of the conductive adhesive layer within the foregoing range, it is beneficial to improving the bonding force and conductivity between the electrode active material layer and the current collector layer, and also taking into account the advantage of high energy density of the solid-state cell.

In some implementations, an active region of the solid-state cell at a height of the first composite recess and the second composite recess is denoted as a cell active expansion region; and
a height of the electrode body at the cell active expansion region is higher than a height of the electrode body at any one composite recess.

In the foregoing solid-state cell structure, the height of the positive electrode body at the cell active expansion region is higher than the height of the positive electrode body at the first composite recess, and the height of the negative electrode body at the cell active expansion region is higher than the height of the negative electrode body at the second composite recess, so that the solid-state cell can better utilize the space at the tab, thereby greatly increasing the space volume occupied by the electrode portion in the solid-state cell, and significantly improving the volumetric energy density of the solid-state cell and the solid-state battery.

In some implementations, a height of the solid-state cell in the Y direction is denoted as H₀; a maximum height of the cell active expansion region in the Y direction is denoted as H_{Δ}, and a utilization rate of the cell active expansion region in the Y direction is ψ_{Y}= H_{Δ}/H₀×100%;
a width of the solid-state cell in the X direction is denoted as W₀, a width of the cell active expansion region in the X direction is denoted as W_{Δ}, and a utilization rate of the cell active expansion region in the X direction is ψ_{X}= W_{Δ}/W₀×100%;
a projection area of the solid-state cell in the Z direction is denoted as A₀, a projection area of the cell active expansion region in the Z direction is denoted as A_{Δ}, and a two-dimensional utilization rate of the cell active expansion region is ψ_{A}=A_{Δ}/A₀×100%;
the solid-state cell satisfies one or more of the following features:
   ${H}_{Δ} \geq 0.05 mm ;$
   ${ψ}_{Y} \geq 0.05 % ;$
   ${W}_{Δ} \geq 50 mm ;$
   ${ψ}_{X} \geq 60 % ;$ and
   ${ψ}_{A} \geq 0.04 % .$

In some implementations, the solid-state cell satisfies one or more of the following features:
$0.05 mm \leq {H}_{Δ} \leq 1 mm ;$
$0.1 % \leq {ψ}_{Y} \leq 2 % ;$
$50 mm \leq {W}_{Δ} \leq 1000 mm ;$
$60 % \leq {ψ}_{X} \leq 95 % ;$ and
$0.04 % \leq {ψ}_{A} \leq 1.5 % .$

By controlling one or two of the height parameter h_{Δ} and the utilization rate parameter ψ_{Y} of the cell active expansion region within the foregoing ranges, it is beneficial to better utilizing the space in the height direction at the position of the tab.

By controlling one or two of the width parameter w_{Δ} and the utilization rate parameter ψ_{X} of the cell active expansion region within the foregoing ranges, it is beneficial to better utilizing the space in the width direction at the tab position.

By controlling the two-dimensional utilization rate ψ_{A} of the cell active expansion region within the foregoing range, it is beneficial to better comprehensively utilizing the idle space at the tab.

In some implementations, the recess provided with the tab in the electrode layer is denoted as a tab recess, and an extension height of any tab in the Y direction is greater than a height of a corresponding tab recess in the Y direction.

By reserving a certain extension height for the positive tab or the negative tab, it is convenient to use the positive tab or the negative tab as a soft tab to connect a rigid tab in a subsequent process.

In some implementations, at least a part of the tab has a bent section in a corresponding recess.

At least a part of the tab may be bent into the reserved recess, which is beneficial to further increasing the volume occupancy ratio of the electrode portion in the solid-state cell, and may greatly increase the volume energy density of the solid-state cell and the solid-state battery.

In some implementations, a width of the positive tab portion in the X direction is less than a width of the first composite recess in the X direction; and a width of the negative tab portion in the X direction is less than a width of the second composite recess in the X direction.

In some implementations, in the X direction, there is a gap between the positive tab portion and each of two side edges of the first composite recess, and there is a gap between the negative tab portion and each of two side edges of the second composite recess.

By reserving a certain gap at the composite recess for the two side edges of the corresponding tab portion, appropriate movement spaces may be reserved for the positive and negative tab portions, and the positive and negative tab portions may be bent into the composite recess more conveniently.

In some implementations, the solid-state cell has a laminated structure.

In some implementations, the positive electrode portion includes a positive electrode body and a positive tab portion connected to the positive electrode body, the positive electrode body includes at least one positive electrode layer, and the positive electrode layer includes a positive electrode current collector layer and a positive electrode active material layer located on at least one side of the positive electrode current collector layer; each positive electrode layer is provided with a recess corresponding to the first composite recess and a recess corresponding to the second composite recess; in at least one positive electrode layer, the positive electrode current collector layer is connected to a positive tab at the bottom of at least one groove, the positive electrode layer further comprises a positive electrode conductive adhesive layer located between the positive electrode current collector layer and the positive electrode active material layer, and the positive electrode conductive adhesive layer at least covers a die-cut edge region of the recess where the positive tab is located; all positive tabs connected to the positive electrode body jointly form at least a part of the positive tab portion;
the negative electrode portion includes a negative electrode body and a negative tab portion connected to the negative electrode body, the negative electrode body includes at least one negative electrode layer, and the negative electrode layer includes a negative electrode current collector layer and a negative electrode active material layer located on at least one side of the negative electrode current collector layer; each negative electrode layer is provided with a groove corresponding to the first composite recess and a groove corresponding to the second composite recess; in at least one negative electrode layer, the negative electrode current collector layer is connected to a negative tab at the bottom of at least one recess, the negative electrode layer further includes a negative electrode conductive adhesive layer located between the negative electrode current collector layer and the negative electrode active material layer, and the negative electrode conductive adhesive layer at least covers a die-cut edge region of the recess where the negative tab is located; all the negative tabs connected to the negative electrode body jointly form at least a part of the negative tab portion;
the solid electrolyte portion includes at least one solid electrolyte layer, and any adjacent positive electrode layer and negative electrode layer are separated by the solid electrolyte layer; and each solid electrolyte layer is provided with empty recesses corresponding to the first composite recess and the second composite recess, respectively.

When the solid-state cell adopts the foregoing laminated structure, at the first composite recess, the positive tab recess on the positive electrode layer, the empty recess on the negative electrode layer and the empty recess on the solid electrolyte layer may be combined to form a concave space for the positive tab portion to bend inward. At the second composite recess, the negative tab recess on the negative electrode layer, the empty recess on the positive electrode layer and the empty recess on the solid electrolyte layer may be used to form a concave space for the negative tab portion to bend inward, which may significantly expand the active area of the solid-state cell, so that the solid-state cell can better utilize the space at the tab, the space volume occupied by the electrode portion in the solid-state cell may be greatly increased, and the volumetric energy density of the solid-state cell and the solid-state battery may be significantly improved. The two composite recesses can also provide protection for the tab portion and reduce the risk of tab breakage. Further, a conductive adhesive layer is disposed in a die-cut edge region of the recess where the tab is located, and on the one hand, the conductive adhesive layer may also provide good conductivity between the current collector layer and the electrode active material layer, and in addition, the bonding force is improved, which is beneficial to improving the cycle performance of the solid-state battery. On the other hand, the bonding force between the electrode active material layer and the current collector layer may be improved, which is beneficial to forming a tab recess with a clean edge when the tab is die-cut, may reduce powder falling of the electrode active material, is beneficial to reducing the risk of internal short circuit, and may improve the reliability and production yield of the battery.

In addition, in a manufacturing method for the solid-state cell, when the electrode active material layer is introduced, the active pre-coating layer may cover the tab recess region together, and the electrode active material at the tab recess may be selectively removed more easily by using the difference in the bonding force of the active pre-coating layer to the current collector layer and the conductive adhesive layer, so that the electrode active material layer forms a neat edge contour when the tab is die-cut, which can reduce the powder falling of the electrode active material, thereby improving the production yield of the solid-state cell and the solid-state battery, and can also improve the cycle performance of the manufactured solid-state cell and solid-state battery.

In some embodiments, there are a plurality of positive electrode layers in the positive electrode body; and the number of the negative electrode layers in the negative electrode body matches the number of the positive electrode layers in the positive electrode body.

When the number of positive electrode layers in the positive electrode body is multiple, and the number of negative electrode layers in the negative electrode body is multiple that match, the laminated structure corresponds to a multi-layer laminated structure, and at this time, the foregoing cell active expansion region structure design is used to help gain more volumetric energy density at the tab space.

In some implementations, the plurality of positive electrode layers in the positive electrode body are connected to the positive tab; and the plurality of negative electrode layers in the negative electrode body are connected to the negative tab.

When the plurality of positive electrode layers in the positive electrode body are all connected to the positive tabs, and the plurality of negative electrode layers in the negative electrode body are all connected to the negative tabs, it is more beneficial to reducing the waste of space in the case caused by the lamination of the plurality of tabs.

In a second aspect of the present application, provided is a manufacturing method for a solid-state cell, including the following steps
manufacturing a required number of positive electrode sheets, where each of the positive electrode sheets includes a positive electrode current collector layer and a positive electrode active material layer located on at least one side of the positive electrode current collector layer; at an edge of at least one side in the height direction of the positive electrode sheet, the positive electrode sheet is provided with a positive tab recess and a first empty recess; and at least one positive electrode sheet further includes a positive tab connected to the positive electrode current collector layer and a conductive adhesive layer located between the positive electrode current collector layer and the positive electrode active material layer, the conductive adhesive layer is denoted as a positive electrode conductive adhesive layer, the positive tab is connected to a bottom of the positive tab recess of the corresponding positive electrode sheet, and the positive electrode conductive adhesive layer at least covers a die-cut edge region of the positive tab recess;
manufacturing a required number of negative electrode sheets, where each of the negative electrode sheets includes a negative electrode current collector layer and a negative electrode active material layer located on at least one side of the negative electrode current collector layer; at an edge of at least one side in the height direction of the negative electrode sheet, the negative electrode sheet is provided with a negative tab recess and a second empty recess; at least one negative electrode sheet further includes a negative tab connected to the negative current collector layer and a conductive adhesive layer located between the negative current collector layer and the negative electrode active material layer, the conductive adhesive layer is denoted as a negative conductive adhesive layer, the negative tab is connected to a bottom of the negative tab recess of the corresponding negative electrode sheet, and the negative conductive adhesive layer at least covers a die-cut edge region of the negative tab recess;
manufacturing a required number of solid electrolyte membranes, where each of the solid electrolyte membranes is provided with a fourth empty recess and a third empty recess;
laminating the positive electrode sheets, the solid electrolyte membranes and the negative electrode sheets according to the respective required numbers, so that the positive electrode sheets and the negative electrode sheets are separated by the solid electrolyte membranes, the positive tab recess, the fourth empty recess and the second empty recess are aligned in contour and form a first composite recess, and the negative tab recess, the third empty recess and the first empty recess are aligned in contour and form a second composite recess, to obtain a laminated member; wherein each positive electrode sheet constitutes a positive electrode portion, each negative electrode sheet constitutes a negative electrode portion, and each solid electrolyte membrane constitutes a solid electrolyte portion; each positive tab of the positive electrode portion constitutes a soft segment of the positive tab portion, and at least a part of the soft segment of the positive tab portion is accommodated in the first composite recess; and each negative tab of the negative electrode portion constitutes a soft segment of the negative tab portion, and at least a part of the soft segment of the negative tab portion is accommodated in the second composite recess; and
rolling the laminated member to form the solid-state cell.

By assembling the positive electrode sheet with the positive tab embedded in the positive tab recess, the negative electrode sheet with the negative tab embedded into the negative tab recess, and the solid electrolyte membrane provided with the corresponding empty recess, the space utilization rate of the solid-state cell may be greatly improved, and the volumetric energy density of the solid-state cell may be significantly improved. Further, by disposing the positive electrode conductive adhesive layer covering at least the die-cut edge region of the positive tab recess between the positive electrode active material layer and the positive electrode current collector layer, the bonding force and conductivity between the positive electrode active material layer and the positive electrode current collector layer may be improved, which is beneficial to forming the positive tab recess with a clean edge when die-cutting the positive tab, and may reduce the powder falling of the positive electrode active material. By disposing the negative electrode conductive adhesive layer covering at least the die-cut edge region of the negative tab recess between the negative electrode active material layer and the negative electrode current collector layer, the bonding force and conductivity between the negative electrode active material layer and the negative electrode current collector layer may be improved, which is beneficial to improving the cycle performance of the solid-state battery, and is also beneficial to forming a negative tab recess with a clean edge when die-cutting the negative tab, which may reduce the powder falling of the negative electrode active material. By disposing the positive conductive adhesive layer and the negative conductive adhesive layer, it is beneficial to reducing the risk of internal short circuit, and improving the reliability and production yield of the battery.

In some implementations, the positive electrode sheet including the positive tab is manufactured by a method comprising the following steps:
identifying a positive electrode body region and a positive electrode inactive region that are adjacent to each other by a first boundary line on a surface of a positive electrode current collector membrane, the first boundary line extending in a width direction of the positive electrode current collector membrane in a concavely recessed configuration, so that the positive electrode inactive region comprises a positive tab concave region and a first concave region that are concave toward the positive electrode body region, and the positive tab concave region and the first concave region are separated by the positive electrode body region, wherein the positive tab concave region matches the positive tab recess in position, and the first concave region matches the first empty recess in position;
on at least one side surface of the positive current collector membrane, attaching the positive conductive adhesive layer to at least a part of the positive electrode body region by using the first boundary line as a coating boundary;
on at least one side surface of the positive current collector membrane with the positive conductive adhesive layer, attaching a positive electrode active pre-coating layer, so that the positive electrode active pre-coating layer covers the positive electrode body region, the positive tab concave region and the first concave region;
removing a portion of the positive electrode active pre-coating layer covering the positive tab concave region and the first concave region, and exposing a surface of the corresponding positive current collector membrane to obtain a positive electrode sheet to be die-cut, where a remaining portion of the positive electrode active pre-coating layer corresponds to the positive electrode active material layer, and a portion of the positive current collector membrane covered by the positive electrode active material layer corresponds to the positive current collector layer; and
performing die-cutting processing on the positive electrode sheet to be die-cut according to the first boundary line to form the positive electrode sheet, wherein the performing the die-cutting processing on the positive electrode sheet to be die-cut according to the first boundary line includes: die-cutting a corresponding contour of a region of the positive electrode active material layer other than the positive tab concave region, die-cutting, in the positive tab concave region, contours of two side edges of the positive tab recess and the positive tab connected to the positive electrode current collector layer, and die-cutting the first empty recess in the first concave region according to the first boundary line.

In the process of manufacturing the positive electrode sheet including the positive tab, before the positive electrode active pre-coating layer is coated, the conductive adhesive layer having the concave region is disposed on the positive current collector membrane, so that on the one hand, the bonding force and conductivity between the positive electrode active material layer and the positive current collector membrane may be improved, and on the other hand, when the positive electrode active material layer is introduced, the positive electrode active pre-coating layer may cover the concave region together, and the positive active material in the concave region may be selectively removed easily by using the difference in the bonding force of the positive electrode active pre-coating layer to the positive current collector membrane and the conductive adhesive layer, thereby exposing the surface of the positive current collector membrane at the corresponding position, and then the positive tab may be die-cut in the concave region by the die-cutting processing. The conductive adhesive layer may improve the bonding force and conductivity between the positive electrode active material layer and the positive electrode current collector membrane, and is beneficial to forming a neat edge contour when the positive tab is die-cut, which can reduce powder falling of the positive electrode active material, thereby improving the production yield of the solid-state cell and the solid-state battery, and may also improve the cycle performance of the prepared solid-state and solid-state battery. In the manufactured positive electrode sheet, the positive tab may be bent inward into the positive tab recess, thereby improving the space occupancy ratio of the positive electrode active material layer and improving the volumetric energy density of the solid-state cell and the solid-state battery. In addition, the positive tab recess in which the positive tab is located can also provide a protective effect for the positive tab, thereby reducing the risk of breakage of the positive tab.

In some implementations, the negative electrode sheet including the negative tab is manufactured by a method including the following steps:
identifying a negative electrode body region and a negative electrode inactive region that are adjacent to each other by a second boundary line on a surface of a negative electrode current collector membrane, the second boundary line extending in a width direction of the negative electrode current collector membrane in a concavely recessed configuration, so that the negative electrode inactive region comprises a negative tab concave region and a second concave region that are concave toward the negative electrode body region, and the negative tab concave region and the second concave region are separated by the negative electrode body region, where the negative tab concave region matches the negative tab recess in position, and the second concave region matches the second empty recess in position;
on at least one side surface of the negative electrode current collector membrane, attaching the negative electrode conductive adhesive layer to at least a part of the negative electrode body region by using the second boundary line as a coating boundary;
on at least one side surface of the negative current collector membrane with the negative conductive adhesive layer, attaching a negative active pre-coating layer, so that the negative active pre-coating layer covers the negative body region, the negative tab concave region and the second concave region;
removing a portion of the negative active pre-coating layer covering the concave region and the second concave region, and exposing a surface of the corresponding negative current collector membrane to obtain a negative electrode sheet to be die-cut, where a remaining portion of the negative active pre-coating layer corresponds to the negative electrode active material layer, and a portion of the negative current collector membrane covered by the negative electrode active material layer corresponds to the negative current collector layer; and
performing die-cutting processing on the negative electrode sheet to be die-cut according to the second boundary line to form the negative electrode sheet, where the performing the die-cutting processing on the negative electrode sheet to be die-cut according to the second boundary line includes: die-cutting a corresponding contour of a region of the negative electrode active material layer other than the negative tab concave region, die-cutting, in the negative tab concave region, edge contours of two sides of the negative tab recess and the negative tab connected to the negative electrode current collector layer, and die-cutting the second empty recess in the second concave region according to the second boundary line.

In the process of manufacturing the negative electrode sheet including the negative tab, before the negative active pre-coating layer is coated, the conductive adhesive layer having the concave region is disposed on the negative current collector membrane, so that on the one hand, the bonding force and conductivity between the negative electrode active material layer and the negative current collector membrane may be improved, and on the other hand, when the negative electrode active material layer is introduced, the negative active pre-coating layer may cover the concave region together, and the negative active material in the concave region may be selectively removed easily by using the difference in the bonding force of the negative active pre-coating layer to the negative current collector membrane and the conductive adhesive layer, thereby exposing the surface of the negative current collector membrane at the corresponding position, and then the negative tab may be die-cut in the concave region by the die-cutting processing. The conductive adhesive layer may improve the bonding force and conductivity between the negative electrode active material layer and the negative electrode current collector membrane, and is beneficial to forming a neat edge contour when the negative tab is die-cut, which may reduce the powder falling of the negative electrode active material, thereby improving the production yield of the solid-state cell and the solid-state battery, and can also improve the cycle performance of the prepared solid-state cell and solid-state battery. In the manufactured negative electrode plate, the negative tab may be bent inward into the negative tab recess, thereby improving the space occupancy ratio of the negative electrode active material layer and improving the volumetric energy density of the solid-state cell and the solid-state battery. In addition, the negative tab recess in which the negative tab is located can also provide a protective effect for the negative tab, thereby reducing the risk of breakage of the negative tab.

In some implementations, the manufacturing method for a solid-state cell satisfies one or more of the following features:
in the process of manufacturing the positive electrode sheet including the positive tab, on at least one side surface of the positive electrode current collector membrane, coating the positive electrode conductive adhesive layer on an entire region of the positive electrode body region by using the first boundary line as a coating boundary; and
in the process of manufacturing the negative electrode sheet including the negative tab, on at least one side surface of the negative current collector membrane, coating the negative conductive adhesive layer on the entire region of the negative body region by using the second boundary line as a coating boundary.

The increase of the coverage area of the conductive adhesive layer is also more beneficial to improving the bonding force and conductivity between the current collector layer and the electrode active material layer, which is beneficial to further improving the cycle performance of the solid-state battery.

In some implementations, the manufacturing method for a solid-state cell satisfies one or more of the following features:
in the positive electrode sheet including the positive tab, in a height direction of the positive electrode sheet, an extension height of the positive tab in the positive electrode sheet being greater than a height of a corresponding positive tab recess in the positive electrode sheet; and
in the negative electrode sheet including the negative tab, in a height direction of the negative electrode sheet, an extension height of the negative tab in the negative electrode sheet being greater than a height of the corresponding negative tab recess in the negative electrode sheet.

By reserving a certain extension height for the positive tab or the negative tab, it is convenient to use the positive tab or the negative tab as a soft tab to connect a rigid tab in a subsequent process.

In some implementations, the manufacturing method for a solid-state cell satisfies one or more of the following features:
in the manufactured solid-state cell, at least a part of the positive tab having a bent section in the first composite recess; and
in the manufactured solid-state cell, at least a part of the negative tab has a bent section in the second composite recess.

At least a part of the tab may be bent into the corresponding composite recess, which may greatly improve the volumetric energy density
of the solid-state cell and the solid-state battery.

In some implementations, the manufacturing method for a solid-state cell satisfies one or more of the following features:
in the positive electrode sheet including the positive tab, in a width direction of the positive electrode sheet, a width of the positive tab being less than a width of the corresponding positive tab recess; and
in the negative electrode sheet including the negative tab, in a width direction of the negative electrode sheet, a width of the negative tab being less than a width of the corresponding negative tab recess.

In some implementations, the manufacturing method for a solid-state cell satisfies one or more of the following features:
in the positive electrode sheet including the positive tab, in the width direction of the positive electrode sheet, a gap being formed between the positive tab and each of the two side edges of the positive tab recess; and
in the negative electrode sheet including the negative tab, in the width direction of the negative electrode sheet, a gap being formed between the negative tab and each of the two side edges of the negative tab recess.

By reserving certain gaps at the tab recesses for the edges of the two sides of the corresponding tabs, appropriate movement spaces may be reserved for the positive and negative tabs, and the positive and negative tabs may also be bent into the corresponding composite recesses more conveniently.

In some implementations, the required number of positive electrode sheets is multiple; and the required number of the negative electrode sheets matches the required number of the positive electrode sheets.

When there are a plurality of positive electrode sheets are used to assemble the solid-state cell, and correspondingly, a plurality of negative electrode plates are used, the laminated structure at this time corresponds to a multi-layer laminated structure, and the foregoing design of the structure of the cell active expansion region is used, which is beneficial to gaining more volumetric energy density at the tab space.

In some implementations, the plurality of positive electrode sheets include the positive tabs; and the plurality of negative electrode sheets include the negative tabs.

When the plurality of positive electrode sheets all include the positive tab and the plurality of negative electrode sheets all include the negative tab, it is more beneficial to reducing the waste of space in the housing caused by the lamination of the plurality of tabs.

In some implementations, the manufactured solid-state cell is the solid-state cell described in the first aspect of the present application.

In a third aspect of the present application, provided is a solid-state battery, including at least one of the solid-state cell described in the first aspect of the present application and the solid-state cell manufactured by the manufacturing method for a solid-state cell descried in the secondary aspect of the present application.

In some implementations, the solid-state battery is a secondary battery.

The solid-state battery including the solid-state cell described above increases the volume of the electrode body at the height of the tab, improves the space occupancy ratio of the electrode active material layer, and may greatly improve the volumetric energy density. Further, disposing the conductive adhesive layer may improve the bonding force and conductivity between the electrode active material layer and the current collector layer, which is beneficial to forming a tab recess with a neat edge when the tab is die-cut, may reduce the powder falling of the electrode active material, is beneficial to improving the cycle performance of the solid-state battery, and is also beneficial to reducing the risk of internal short circuit, and may improve the reliability and production yield of the battery.

In a fourth aspect of the present application, provided is an electric device, including at least one of the solid-state cell described in the first aspect of the present application, the solid-state cell manufactured by the manufacturing method for a solid-state cell described in the second aspect of the present application, and the solid-state cell described in the third aspect of the present application.

Details of one or more implementations or embodiments of the present application are set forth in the accompanying drawings and the description below. Other features, objectives, and advantages of the present application will be apparent from the specification, and the accompanying drawings, and the claims.

### BRIEF DESCRIPTION OF THE DRAWINGS

To better describe and illustrate the implementations, embodiments, or examples according to the present application, reference can be made to one or more accompanying drawings. Additional details or examples used to describe the accompanying drawings should not be considered as limiting the scope of any of the disclosed application, the currently described implementations, embodiments, or examples, and best modes of these applications as currently understood. Moreover, the same reference numerals are used to denote the same components throughout the accompanying drawings. It should also be noted that the accompanying drawings are all drawn in a simplified form and are only used to conveniently and clearly assist in describing the present application. The various dimensions of each component shown in the drawings are arbitrarily shown, and may be accurate or not drawn to actual scale. For example, the dimensions of components in the drawings are appropriately exaggerated to make the illustration clearer. Unless otherwise specified, the components in the drawings are not necessarily drawn to scale. The present application does not limit the dimensions of each component.

In the accompanying drawings:
FIG. 1 is a schematic structural diagram of a solid-state cell according to an embodiment of the present application, wherein (a) is a front view, and (A-A), (B-B) and (C-C) are cross-sectional views at positions A-A, B-B and C-C, respectively; and the dashed line is the reference line.

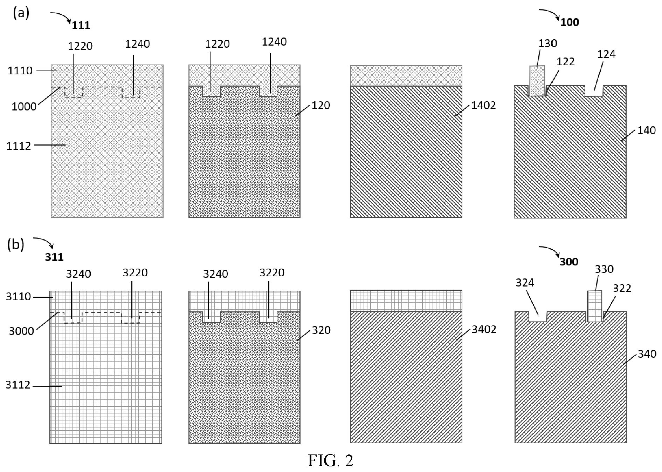

FIG. 2 is a schematic diagram of a manufacturing process of a positive electrode sheet or a negative electrode sheet according to an embodiment of the present application, where (a) four structures involved in the manufacturing process of the positive electrode sheet correspond to the positive electrode current collector membrane, the multi-layer structure formed by laminating the positive conductive adhesive layer on the surface of the positive electrode current collector membrane, the multi-layer structure formed by continuing to coat the positive electrode active pre-coating layer, and the positive electrode sheet including the positive tab formed by die-cutting in sequence from left to right; and (b) four structures involved in the manufacturing process of the negative electrode sheet correspond to the negative electrode current collector membrane, the multi-layer structure formed by laminating the negative conductive adhesive layer on the surface of the negative electrode current collector membrane, the multi-layer structure formed by continuing to coat the negative active pre-coating layer, and the negative electrode sheet including the negative tab formed by die-cutting in sequence from left to right.
FIG. 3 is a schematic structural diagram of a positive electrode sheet according to an embodiment of the present application, where (a) is a front view, and (D-D) is a cross-sectional view at the D-D position.
FIG. 4 is a schematic structural diagram of a negative electrode sheet according to an embodiment of the present application, where (a) is a front view, and (E-E) is a cross-sectional view at the position E-E.
FIG. 5 is a schematic diagram of a solid-state battery cell according to an embodiment of the present application.
FIG. 6 is an exploded view of the solid-state battery cell shown in FIG. 5 according to an embodiment of the present application.
FIG. 7 is a schematic diagram of a battery module according to an embodiment of the present application;
FIG. 8 is a schematic diagram of a battery pack according to an embodiment of the present application;
FIG. 9 is an exploded view of the battery pack shown in FIG. 8 according to an embodiment of the present application;
FIG. 10 is a schematic diagram of an electric device using a battery as a power supply according to an implementation of the present application.

### Description of reference signs:

10, positive electrode layer; 20, solid electrolyte layer; 30, negative electrode layer; 1300, positive tab portion; 1302, first composite recess; 3300, negative tab portion; 3302, second composite recess; X, X direction; Y, Y direction; Z, Z direction; 100, positive electrode sheet; 111, positive electrode current collector; 1000, first boundary line; 1112, positive electrode body region; 1110, positive electrode inactive region; 1220, positive tab concave region; 1240, first concave region; 120, positive electrode conductive adhesive layer; 1402, positive electrode active pre-coating layer; 110, positive electrode current collector layer; 140, positive electrode active material layer; 130, positive tab; 122, positive tab recess; 124, first empty recess; 300, negative electrode sheet; 311, negative electrode current collector membrane; 3000, second boundary line; 3112, negative electrode body region; 3110, negative electrode inactive region; 3220, negative electrode concave region; 3240, second concave region; 320, negative electrode conductive adhesive layer; 3402, negative electrode active pre-coating layer; 310, negative electrode current collector layer; 340, negative electrode active material layer; 330, negative tab; 322, negative tab recess; 324, second empty recess; 1, battery pack; 2, upper box body; 3, lower box body; 4, battery module; 5, solid-state battery cell; 51, housing; 52, solid-state cell; 53, cover plate; and 6, electric device.

### DETAILED DESCRIPTION OF PREFERRED EMBODIMENTS

Some implementations where the solid-state cell and a manufacturing method therefor, a solid-state battery and an electric device provided by the present application are described in detail appropriately with reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if the ranges of 60-120 and 80-110 are listed for a specific parameter, it is understood that the ranges of 60-110 and 80-120 are also expected. Furthermore, if the smallest range values 1 and 2 are listed, and if the largest range values 3, 4 and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

In the present application, unless otherwise specified, "about" means that within a range of reasonable amplitude above and below the present number, the fluctuation range may vary depending on the type and value of the present number. For example, the range of the maximum allowable value may be within an amplitude range of ±10%, ±5%, ± 2%, ±1%, or the like. For example, taking "about 20°C" and its divisor being ±1°C as an example, the divisor values such as 19°C and 19.5°C within the divisor range indicated by "about 20°C" should also be included in the range indicated by "about 20°C".

Unless otherwise defined, "a plurality of", "multiple", "a plurality of items", "several", and the like involved in the present application mean the quantity of two or more. For example, "one or more" means one or greater or equal to two. It can be understood that "any of a plurality of" items refers to any suitable combination of a plurality of items, that is, the combination of "any of a plurality of" items is performed in a manner that does not conflict and can implement the present application.

Unless otherwise specified, all implementations and optional implementations of the present application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly, preferably sequentially. For example, a method M including steps (a) and (b) represents that the method M may include sequentially performed steps (a) and (b), or sequentially performed steps (b) and (a). For another example, mentioning that the method M may further include step (c) represents that step (c) may be added to the method M in any order. For example, the method M may include steps (a), (b), and (c), or steps (a), (c), and (b), or steps (c), (a), and (b), and the like.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A is composed of a1, a2, and a3" or "A is selected from a1, a2, and a3" and a feature or solution in which "A includes not only a1, a2, and a3 but also another member" are provided.

In the present application, unless otherwise specified, M (e.g., m1) means that m1 is a non-limiting example of M, and it may be understood that M is not limited to m1.

In the present application, "optionally", "optional", and "option" mean that there is or not, that is, mean any one of two parallel solutions: "with" or "without". If "option" occurs repeatedly in a technical solution, each "option" is independent, unless otherwise specified without inconsistency or mutual restriction. Unless otherwise specified, in the present application, descriptions such as "optionally include" and "optionally contain" are used, and "optionally include" is used as an example to indicate "may include or not include".

In the present application, unless otherwise specified, a feature or solution corresponding to "and/or" includes any one of two or more related listed items, and also includes any and all combinations of the related listed items, and the any and all combinations include any two related listed items, any more related listed items, or all related listed items. For example, "M and/or N" indicates a group consisting of M, N, and "a combination of M and N". Herein, "including M and/or N" may mean "including M, including N, and including M and N", and may also mean "including M, including N, or including M and N", which can be properly understood according to the sentence in which it is used.

As used herein, "a combination thereof", "any combination thereof", "any combination mode thereof," and the like includes all suitable combination modes of any two or more of listed items.

Herein, "suitable" in "suitable combination mode", "suitable mode", "any suitable mode", and the like allows that the technical solution of the present application can be implemented.

Herein, the terms "preferred", "better", "optimal", "appropriate", "good", and "comparatively good" are merely used to describe preferred implementations or embodiments, and should not be construed to limit the scope of the present application. If "preferred" occurs repeatedly in a technical solution, each "preferred" is independent, unless otherwise specified without inconsistency or mutual restriction.

In the present application, the terms "further", "even further", "particularly", "for example", "such as", "example", and "illustrative", and the like are used for descriptive purposes to indicate differences in content, but should not be construed to limit the scope of the present application.

In the present application, in "first aspect", "second aspect", "third aspect", "fourth aspect", and the like, terms "first", "second", "third", "fourth" and the like are used for descriptive purposes only, and should not be construed as indicating or implying relative importance or number, nor as implicitly indicating the importance or quantity of technical features indicated. Also, "first", "second", "third", "fourth" and the like are used merely for the purpose of describing a non-exhaustive list, and it should be understood that they do not constitute a closed limitation on the quantity.

In the description of the present application, it should be understood that the orientation or positional relationship indicated by the terms such as "length", "width", "upper", "lower", "front", "rear", "left", "right", "vertical", "horizontal", "top", "bottom", "inner" and "outer" is based on the orientation or positional relationship shown in the drawings, only to facilitate the description of the present application and simplify the description, rather than to indicate or imply that the referred device or element must have a specific orientation, be constructed and operated in a specific orientation, and therefore cannot be understood as a limitation to the present application.

In the present application, unless otherwise specified and defined explicitly, the terms "mount", "connect", "join", and "fasten" should be understood in their general senses. For example, the connection may be a fixed connection, a detachable connection, or an integral connection. Those skilled in the art can understand specific meanings of these terms in the present application according to specific situations.

In the description of the implementations of the present application, unless otherwise specified and limited, a first feature being "above" or "below" a second feature may be that the first feature is in direct contact with the second feature, or the first feature is in indirect contact with the second feature through an intermediate medium. In the present disclosure, unless otherwise specified and defined, the first feature "above" or "below" the second feature may indicate a mutual positional relationship in a horizontal plane, or may only indicate that there is an attachment relationship without limiting the mutual positional relationship in the horizontal plane.

In the present disclosure, unless otherwise specified, "laminated" is used to describe the positional relationship of a plurality of layered structures, which means that the plurality of layered structures are laminated in respective thickness directions. The meaning thereof may be understood by those skilled in the art. For example, "including a structural layer A and a structural layer B that are laminated" means that the laminating direction of the structural layer A and the structural layer B is in the respective layer thickness direction, that is, the thickness direction of the structural layer A is consistent or substantially consistent with the thickness direction of the structural layer B. It may be understood that other intermediate structural layers may be disposed between the structural layer A and the structural layer B.

In the present application, the term "room temperature" generally refers to 4°C to 35°C, and may refer to 20°C±5°C. In some implementations or embodiments of the present application, room temperature refers to 20°C to 30°C.

In the present application, when the unit of a data range is related, the unit of a left end point and the unit of a right end point are the same if the unit is attached only after the right end point. For example, 3~5 mm or 3-5 mm each means that the unit of the left end point "3" and the unit of the right end point "5" are both h (hour), which has the same meaning as 3h to 5h. In addition, the similar description of other parameters such as temperature and dimension is also understood in a same manner.

In the present application, "greater than and equal to", "greater than or equal to", and "≥" have the same meaning and can be used interchangeably; "less than and equal to", "less than or equal to", and "≤" have the same meaning and can be used interchangeably; and "greater than" can be equivalently expressed as ">", and "less than" can be equivalently expressed as "<". In the present application, unless otherwise specified, "greater than or equal to" and "≥" may be considered as further providing two solutions of "greater than" and "equal to". In the present application, unless otherwise specified, "less than or equal to" and "≤" may be considered as further providing two solutions of "less than" and "equal to".

In the present application, exemplary descriptions related to "in some implementations (or embodiments)", "in one implementation (or embodiment)", and the like may cover but are not limited to the following meanings: these solutions may be combined with other solutions in a suitable manner to form a new technical solution.

The improvement effects described in the present application, unless otherwise specified, are not intended to be limited to any theory.

In a conventional solid-state battery, a soft tab obtained by die-cutting is located outside an electrode active material layer, and after a cell is assembled, the soft tab is suspended outside an active region of an electrode sheet, and in order to be able to connect a plurality of soft tab together after being placed in a housing and then connect a rigid tab, a certain space in the housing needs to be reserved for the soft tab. After the electrode assembly is encapsulated in the housing, since the soft tab occupies a certain height space, there is always a certain gap between the top of the electrode plate and the bottom of the housing, and the region outside the tab corresponding to this gap is usually vacant, thereby causing the loss of the fixation of the space in the housing. In addition, the side surface of the soft tab is easily broken due to the force, which increases the impedance of the cell and affects the performance of the cell.

In the present application, the "soft tab" may be obtained by die-cutting the current collector membrane in the preparation process of the electrode sheet, and meanwhile, the current collector layer matching the electrode active material layer in position is obtained, that is, the soft tab and the current collector layer may be integrated. However, the present application is not limited thereto. Without limitation, the material of the soft tab may be the same as the material of the corresponding current collector layer. In some non-limiting implementations, the soft tab and the current collector layer may be from the same current collector membrane, at least a part of the current collector membrane forms the current collector layer, and at least another part of the current collector membrane forms the soft tab, and at this time, the soft tab and the current collector layer may be integrated.

In the present application, unless otherwise specified, the "rigid tab" refers to a tab segment located outside the battery housing, and is a metal conductor that leads out the positive and negative electrodes from the cell. Without limitation, the rigid tab of the positive electrode may use aluminum as the metal portion, and the rigid tab of the negative electrode may use nickel as the metal portion.

In addition, during the process of die-cutting the tab, powder falling of the electrode active material in the electrode active material layer may be caused, which in turn affects the cycle performance and reliability of the assembled solid-state cell and solid-state battery.

Based on this, the present application provides a solid-state cell and a manufacturing method therefor, a solid-state battery, and an electric device. The solid-state cell can improve the energy density and cycle performance of the solid-state battery. In addition, the reliability of the solid-state battery may also be improved; the solid-state cell may also be manufactured by a process that can improve the production yield.

In some implementations, the solid-state cell includes a solid electrolyte portion, and a positive electrode portion and a negative electrode portion separated by the solid electrolyte portion, any electrode portions independently includes an electrode body and a tab portion connected to the electrode body, the electrode body includes at least one electrode layer, and the electrode layer includes a current collector layer and an electrode active material layer located on at least one side of the current collector layer. Two composite recesses used for accommodating positive and negative tab portions are formed on at least one side edge of the solid-state cell in the height direction thereof; each of the electrode layers is provided with a recess corresponding to the two composite recesses; and in at least one electrode layer, the current collector layer is connected to the tab at the bottom of the at least one recess, and the electrode layer further includes a conductive adhesive layer located between the current collector layer and the electrode active material layer and at least covering the die-cut edge region of the recess where the tab is located (that is, at least covering the die-cut edge region of the tab recess). The solid-state cell has improved energy density and cycle performance, and in addition, can also improve the reliability of the solid-state battery.

In the present application, unless otherwise specified, the "solid-state battery" provided in the present application refers to a battery in which an electrolyte includes a solid electrolyte; generally, a solid-state battery includes a positive electrode portion, a solid electrolyte portion, and a negative electrode portion. In a charging and discharging process of the battery, active ions are intercalated and deintercalated back and forth between a positive electrode portion and a negative electrode portion. The solid electrolyte portion plays a role of conducting ions between the positive electrode portion and the negative electrode portion, and may also play a role of separating the positive electrode portion from the negative electrode portion to prevent short circuit between the positive electrode and the negative electrode, so that the solid-state battery may not be provided with a separator in a conventional lithium-ion battery. The solid-state battery uses a non-flammable solid electrolyte to replace the organic electrolyte solution in the traditional liquid lithium-ion battery, so that the safety of the battery is greatly improved. In addition to improving safety, the solid-state battery can be better adapted to positive and negative electrode materials with high energy density, and reduce the weight of the system, which is beneficial to improving the energy density.

In the present application, unless otherwise specified, the "solid electrolyte portion" refers to a structural portion including a solid electrolyte. The solid electrolyte portion includes at least one solid electrolyte layer, and the number of solid electrolyte layers matches the number of electrode layers in the electrode portion.

In the present application, unless otherwise specified, the "solid electrolyte" refers to an electrolyte material or an electrolyte substance that exists in a solid form during the storage and manufacturing processes of the solid-state battery and the components constituting the solid-state battery and during the operation of the solid-state battery. It may be understood that the solid electrolyte exists in a solid state at room temperature, but is not limited thereto.

In the present application, unless otherwise specified, the "electrode portion" includes a positive electrode portion and a negative electrode portion. The positive electrode portion includes a positive electrode main body and a positive tab portion connected to the positive electrode main body, and the negative electrode portion includes a negative electrode main body and a negative tab portion connected to the negative electrode main body.

In the present application, unless otherwise specified, the "electrode portion" includes an electrode body and a tab portion connected to the electrode body. The "electrode body" may be a positive electrode body or a negative electrode body. The electrode body in the positive electrode portion is a positive electrode body, and the electrode body in the negative electrode portion is a negative electrode body.

In the present application, unless otherwise specified, the "electrode body" includes at least one electrode layer, and the electrode body may include one or more electrode layers; the number of layers of the electrode body is consistent with the number of electrode layers in the electrode body. The "electrode body" may be a positive electrode body and a negative electrode body. The positive electrode body includes at least one positive electrode layer, the positive electrode body may include one or more positive electrode layers, and the number of the positive electrode layers in the positive electrode body is consistent with the number of the positive electrode layers in the positive electrode body. The negative electrode body includes at least one negative electrode layer, the negative electrode body may include one or more negative electrode layers, and the number of the negative electrode layers in the negative electrode body is consistent with the number of the positive electrode layers in the positive electrode body.

In the present application, unless otherwise specified, a solid electrolyte layer is disposed between any adjacent positive electrode layer and negative electrode layer. Therefore, the number of layers of the solid electrolyte in the solid electrolyte portion matches the number of layers of the electrode layer in the electrode portion.

Generally, a solid-state battery includes a positive electrode layer, a solid electrolyte layer, and a negative electrode layer. In a charging and discharging process of the battery, active ions are intercalated and deintercalated back and forth between a positive electrode layer and a negative electrode layer. The solid electrolyte layer plays a role of conducting ions between the positive electrode layer and the negative electrode layer, and may further isolate the positive electrode layer and the negative electrode layer, to mainly prevent the positive electrode and the negative electrode from being short-circuited.

In some implementations, each electrode layer independently includes a current collector layer and an electrode active material layer located on at least one side of the current collector layer. In some implementations, each positive electrode layer independently includes a positive electrode current collector layer and a positive electrode active material layer located on at least one side of the positive electrode current collector layer, and each negative electrode layer independently includes a negative electrode current collector layer and a negative electrode active material layer located on at least one side of the negative electrode current collector layer.

In the present application, unless otherwise specified, the "electrode active material layer" includes at least one of the positive electrode active material layer of the positive electrode sheet and the negative electrode active material layer of the negative electrode sheet, and the electrode active material layer may refer to the positive electrode active material layer or the negative electrode active material layer according to the detailed circumstances. It can be understood that the positive electrode active material layer contains a positive electrode active material, and the negative electrode active material layer contains a negative electrode active material. In the present application, the "electrode active material layer" may also be simply referred to as an "active material layer".

In the present application, unless otherwise specified, the "tab portion" may be a positive tab portion or a negative tab portion. The tab portion in the positive electrode portion is a positive tab portion, and the positive tab portion is connected to the positive electrode main body. The tab portion in the negative electrode portion is a negative tab portion, and the negative tab portion is connected to the negative electrode body.

In the present application, unless otherwise specified, the "tab portion" independently includes at least one tab, and any "tab" is independently connected to the current collector layer of the corresponding electrode layer. The positive tab portion includes at least one positive tab, and the positive tab is connected to the positive current collector layer of the corresponding positive electrode layer. The negative tab portion includes at least one negative tab, and the negative tab is connected to the negative current collector layer of the corresponding negative electrode layer. Each electrode layer may be provided with a tab or not, but at least one positive electrode body is connected to a positive tab, and at least one negative electrode body is connected to a negative tab.

It may be understood that the connection between the tab portion and the corresponding electrode body is at least a physical connection, and an electrical connection may also be achieved during the cycling of the battery.

In the present application, unless otherwise specified, the "electrode layer" includes an electrode active material. The electrode layer may be a positive electrode layer or a negative electrode layer, and the "electrode active substance" in the electrode layer refers to a substance capable of reversibly intercalating and deintercalating active ions. Unless otherwise specified, the "negative electrode active material" refers to a substance used in the negative electrode sheet and capable of reversibly intercalating and deintercalating active ions; and the "positive electrode active material" refers to a substance used in the positive electrode sheet and capable of reversibly deintercalating and intercalating active ions. When the solid-state cell is charged, the active ions are deintercalated from the positive electrode and intercalated into the negative electrode through the solid electrolyte layer; and when the solid-state cell is discharged, the active ions are deintercalated from the negative electrode and intercalated into the positive electrode. There is no particular limitation on the active ions. Without limitation, the active ions may be lithium ions, which correspond to lithium-ion solid-state batteries in this case.

In some implementations of a first aspect of the present application, provided is a solid-state cell, including a plurality of electrode layers, where at least one electrode layer includes a current collector layer, a tab connected to the current collector layer, an electrode active material layer located on at least one side of the current collector layer, and a conductive adhesive layer located between the current collector layer and the electrode active material layer, the electrode layer is provided with a tab recess at the tab, at least a part of the tab is located in the tab recess, and the conductive adhesive layer at least covers a die-cut edge region of the tab recess. The solid-state cell can improve the energy density and cycle performance of the solid-state battery, and can also improve the reliability of the solid-state battery.

In the present application, unless otherwise specified, a height direction of the solid-state cell is denoted as a Y direction, a width direction is denoted as an X direction, and a thickness direction is denoted as a Z direction. The X direction, the Y direction, and the Z direction are perpendicular to each other.

In some implementations, provided is a solid-state cell, including a solid electrolyte portion and two electrode portions, where one of the electrode portions is a positive electrode portion and the other one is a negative electrode portion, and the positive electrode portion and the negative electrode portion are separated by the solid electrolyte portion; any electrode portions independently includes an electrode body and a tab portion connected to the electrode body, the electrode body includes at least one electrode layer, and the electrode layer includes a current collector layer and an electrode active material layer located on at least one side of the current collector layer; the tab portion in the positive electrode portion is a positive tab portion, and the tab portion in the negative electrode portion is a negative tab portion;
at an edge on at least one side in the Y direction, two composite recesses disposed on the solid-state cell are respectively denoted as a first composite recess and a second composite recess; the first composite recess is configured to accommodate at least a part of the positive tab portion, and the second composite recess is configured to accommodate at least a part of the negative tab portion; each electrode layer is provided with a recess corresponding to the first composite recess and a recess corresponding to the second composite recess; and
in at least one electrode layer, the current collector layer is connected to a tab at the bottom of at least one recess, the electrode layer further comprises a conductive adhesive layer located between the current collector layer and the electrode active material layer, and the conductive adhesive layer at least covers a die-cut edge region of the recess where the tab is located.

In the present application, unless otherwise specified, "at an edge on at least one side in the Y direction, two composite recesses are disposed on the solid-state cell" and "at an edge on at least one side in the X direction, two composite recesses are disposed on the solid-state cell" have the same meaning and can be used interchangeably.

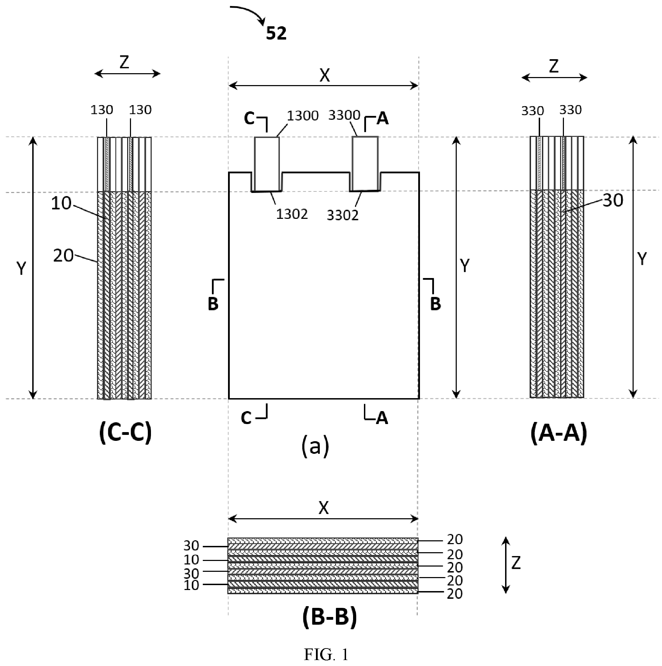

In the present application, "at an edge on at least one side in the Y direction, two composite recesses are disposed on the solid-state cell" means that the solid-state battery core is provided with two composite recesses, and the two composite recesses are located at the edge of the same side of the solid-state cell extending in the X direction, or are respectively located at edges of different side of the solid-state cell extending in the X direction. That is, the two composite recesses may be located on the same side of the solid-state cell in the Y direction, or may be located on different sides of the solid-state cell in the Y direction. In the non-limiting implementation shown in FIG. 1, the first composite recess and the second composite recess are located at the edge of the same side of the solid-state cell extending in the X direction. When the two composite recesses are located on different sides of the solid-state cell in the Y direction, correspondingly, the positive tab portion and the negative tab portion are located on different sides of the solid-state cell, and in this case, the effect of improving the volumetric energy density is more significant by disposing the cell active expansion region in the solid-state cell.

In the present application, unless otherwise specified, in the solid-state cell, the active region that is consistent with the first composite recess and the second composite recess in height in the Y direction and is located outside the first composite recess and the second composite recess in the X direction is denoted as "cell active expansion region".

In the present application, unless otherwise specified, the "active region" refers to: calculated by a projection in the Z direction, a region of the solid-state cell where the electrode active material layer is disposed. Unless otherwise specified, the positive electrode body and the negative electrode body both correspond to the active region, the positive electrode body corresponds to the positive electrode active region, and the negative electrode body corresponds to the negative electrode active region. Unless otherwise specified, the active region of the solid-state cell corresponds to the region other than the positive tab portion and the negative tab portion, calculated by a projection in the Z direction.

In the present application, unless otherwise specified, in the X direction, due to the presence of the first composite recess and the second composite recess, the active region of the solid-state cell has a concave shape at the corresponding edge.

In the present disclosure, unless otherwise specified, the "composite recess" may be the first composite recess or the second composite recess, or may be a combination of the first composite recess and the second composite recess. This may be properly understood in conjunction with the manner of description. For example, "two composite recesses" refers to a combination of a first composite recess and a second composite recess.

In the present application, unless otherwise specified, the "first composite recess" refers to a recess for accommodating at least a part of the positive tab portion in the solid-state cell. At least a part of the positive tab portion is located within the concave region provided by the first composite recess. Unless otherwise specified, the positive tab portion is connected to the positive body at the bottom of the first composite recess. The "bottom of the first composite recess" refers to a side of the first composite recess farthest from the opening in the Y direction, and is also a top of a side of the positive electrode body closest to the first composite recess in the Y direction. Unless otherwise specified, the positive tab portion is not connected to the two side edges of the first composite recess, so that the positive tab portion is movable in the direction perpendicular to the X direction.

In the present application, unless otherwise specified, the "second composite recess" refers to a recess for accommodating at least a part of the negative tab portion in the solid-state cell. At least a part of the negative tab portion is located within the concave region provided by the second composite recess. Unless otherwise specified, the negative tab portion is connected to the negative body at the bottom of the second composite recess. The "bottom of the second composite recess" refers to a side of the second composite recess farthest from the opening in the Y direction, and is also a top of a side of the negative electrode body closest to the second composite recess in the Y direction. Unless otherwise specified, the negative tab portion is not connected to the two side edges of the second composite recess, so that the negative tab portion is movable in the direction perpendicular to the X direction.

In the present application, in the "first composite recess" and the "second composite recess", the terms "first" and "second" are used for descriptive purposes only, and should not be construed as indicating or implying relative importance or number, nor as implicitly indicating the importance or quantity of technical features indicated. Moreover, "first" and "second" are used merely for the purpose of describing a non-exhaustive list, and it should be understood that they do not constitute a closed limitation on the quantity.

In the present application, unless otherwise specified, the "cell active expansion region" is a part of the solid-state cell, the cell active expansion region is an active region provided with an electrode active material layer, the cell active expansion region has the same height as the first composite recess and the second composite recess in the height direction (Y direction) of the solid-state cell, the cell active expansion region is divided into discontinuous regions by the first composite recess and the second composite recess in the width direction (X direction) of the solid-state cell, and two side contours of the first composite recess and the second composite recess extending in the Y direction are provided by adjacent cell active expansion regions. The "cell active expansion region" may also be described as a height region of the solid-state cell provided with two composite recesses in the Y direction. It may be understood that the maximum height of the cell active expansion region in the Y direction is greater than 0.

In the present application, unless otherwise specified, the "conductive adhesive layer" is a structural layer that has both bonding force and conductivity to the current collector layer and the electrode active material layer. Generally, after the conductive adhesive layer is disposed between the current collector layer and the electrode active material layer, the bonding force between the current collector layer and the electrode active material layer is improved.

In some implementations, after the conductive adhesive layer is disposed between the current collector layer and the electrode active material layer, the conductivity between the current collector layer and the electrode active material layer is improved, and the resistivity of the electrode sheet is reduced.

In the present application, the "recess where the tab is located" corresponds to the tab recess. The two side edges of the tab recess are usually formed when the tab is die-cut.

In the present application, unless otherwise specified, "the conductive adhesive layer at least covers the die-cut edge region of the recess where the tab is located" means that the conductive adhesive layer extends from the edge of the recess where the tab is located to a distance in a direction away from the recess, so that the conductive adhesive layer covers at least a part of the region of the current collector layer.

The solid-state cell is provided with a first composite recess at the positive tab portion for bending the positive tab portion inward, and a second composite recess at the negative tab portion for bending the negative tab portion inward, and at this time, the cell active expansion region is disposed in a region that is consistent with the first composite recess and the second composite recess in height and is located outside the first composite recess and the second composite recess in the width direction of the solid-state cell. That is, in the width direction of the solid-state cell, the solid-state cell is provided with the cell active expansion region with the same height as the first composite recess and the second composite recess in the space region other than the positive tab portion and the negative tab portion, so that the solid-state cell can better utilize the space at the tab, thereby greatly increasing the space volume occupied by the electrode portion in the solid-state cell, and significantly improving the volumetric energy density of the solid-state cell and the solid-state battery. The two composite recesses can also provide protection for the tab portion and reduce the risk of tab breakage. Further, a conductive adhesive layer is disposed in a die-cut edge region of the recess where the tab is located, and on the one hand, the conductive adhesive layer may also provide good conductivity between the current collector layer and the electrode active material layer, and in addition, the bonding force is improved, which is beneficial to improving the cycle performance of the solid-state battery. On the other hand, the bonding force between the electrode active material layer and the current collector layer may be improved, which is beneficial to forming a tab recess with a clean edge when the tab is die-cut, may reduce powder falling of the electrode active material, is beneficial to reducing the risk of internal short circuit, and may improve the reliability and production yield of the battery.

In addition, in a manufacturing method for the solid-state cell, when the electrode active material layer is introduced, the active pre-coating layer may cover the tab recess region together, and the electrode active material at the tab recess may be selectively removed more easily by using the difference in the bonding force of the active pre-coating layer to the current collector layer and the conductive adhesive layer, so that the electrode active material layer forms a neat edge contour when the tab is die-cut, which can reduce the powder falling of the electrode active material, thereby improving the production yield of the solid-state cell and the solid-state battery, and can also improve the cycle performance of the manufactured solid-state cell and solid-state battery.

The bonding force between the current collector layer and the electrode active material layer has a meaning well known in the art, and may be measured using an instrument or a method known in the art. For example, a 180°tensile test method may be used, and further for example, reference may be made to the national standard GB/T2790-1995 adhesive 180°peel strength test method. The electrode sheet may be fixed on a test table by using a double-sided tape, the electrode active material layer is peeled off from the current collector layer, a peeling force curve is recorded, and an average value of a plateau segment is taken as a peeling force test value F0, then the bonding force F between the current collector layer and the electrode active material layer may be calculated according to the following formula: F=F0/width of the sample to be measured, and the unit of F is N/m.

Without limitation, the following method may be used to test the bonding force between the current collector layer and the electrode active material layer: the electrode sheet is into a sample to be tested with a certain length and a certain width, for example, 100 mm in length×10 mm in width, and a stainless steel plate with a certain width is taken, where the width of the stainless steel plate is greater than the width of the sample to be tested, for example, the width of the stainless steel plate is 25 mm; a double-sided tape is adhered to the stainless steel plate, where a width of the double-sided tape is greater than the width of the sample to be tested; the sample to be tested is attached to the double-sided adhesive tape, and the surface is rolled back and forth three times (300 mm/min) with a roller, and the mass of the roller may be 2000 g; the sample to be tested is bent at 180°, the electrode active material layer and the current collector layer of the sample to be tested are manually peeled apart by a certain distance, for example, 25 mm, the sample to be tested is fixed on a tester (for example, INSTRON 336), the peeling surface is kept consistent with a force line of the tester, the tester continuously peels at 30 mm/min, the average value of the plateau segment of the obtained peeling force curve is taken as the peeling force F0, and the bonding force between the electrode active material layer and the current collector layer in the test sample is F=F0/width of the sample to be tested (the unit of F is: N/m). Unless otherwise specified, the temperature for testing the bonding force between the current collector layer and the electrode active material layer may be 20°C to 25°C, for example, 20°C, 22 °C, 23°C, 25 °C, and the like.

Without limitation, the following method may also be used to test the bonding force between the current collector layer and the electrode active material layer: referring to the national standard GB/T2790-1995 adhesive 180°peel strength test method, a 180°peel force test is performed at a certain peel speed (for example, 50 mm/min), and the average value of the peel force collected when the electrode active material layer with a length of 60 mm is completely detached from the upper layer of the current collector is taken as the bonding force between the electrode active material layer and the current collector layer.

Without limitation, the following method may be used to "determine whether the conductive adhesive layer improves the bonding force between the current collector layer and the electrode active material layer";
the battery is disassembled, the electrode layer to be tested is extracted, and the bonding force between the current collector layer and the electrode active material layer is tested according to the above method, denoted as F1;
the constituent material of the electrode active material layer is extracted, and the electrode active material layer is spread on one side surface of a current collector foil, cold pressed at 360 MPa, and held for 5 min to obtain a control electrode sheet, and the bonding force between the current collector layer and the electrode active material layer is tested according to the above method, denoted as F2. When the electrode layer to be tested is a negative electrode layer, the foil used for preparing a control electrode sheet is a copper foil. When the electrode layer to be tested is a positive electrode layer, the foil used for preparing a control electrode sheet is an aluminum foil;
By comparing F1 and F2, if F1>F2, it is judged that "the conductive adhesive layer improves the bonding force between the current collector layer and the electrode active material layer".

Without limitation, the following method may be used to "determine whether the conductive adhesive layer improves the conductivity between the current collector layer and the electrode active material layer":
the powder resistivity of the constituent material of the electrode active material layer is compared with the powder resistivity of the constituent material of the conductive adhesive layer, and if the powder resistivity of the constituent material of the conductive adhesive layer is lower, it is judged that "the conductive adhesive layer improves the conductivity between the current collector layer and the electrode active material layer". The constituent material of the electrode active material layer and the constituent material of the conductive adhesive layer are tested by the same test method to obtain the respective powder resistivity.

In the present application, the "powder resistivity" has a meaning well known in the art, and may be measured using an instrument and method known in the art. For example, a four- probe instrument method, such as a ST2722 digital four probe instrument, may be used for testing. The powder resistivity of the sample may be determined in accordance with or with reference to GB/T 30835-2014. Unless otherwise specified, the temperature for testing the powder resistivity may be 20°C to 25°C, for example, as 20°C, 22°C, 23°C, 25°C, and the like.

In some implementations, provided is a solid-state cell 52 (see FIG. 1), including a solid electrolyte portion, a positive electrode portion and a negative electrode portion, where the positive electrode portion and the negative electrode portion are separated by the solid electrolyte portion.

The positive electrode portion includes a positive electrode body and a positive tab portion 1300 connected to the positive electrode body, the positive electrode body includes at least one positive electrode layer 10, and the positive electrode layer includes a positive electrode current collector layer 110 and a positive electrode active material layer 140 located on at least one side of the positive electrode current collector layer 110;
the negative electrode portion includes a negative electrode body and a negative tab portion 3300 connected to the negative electrode body, the negative electrode body includes a negative electrode layer 30 whose quantity matches that of the positive electrode layers 10, and the negative electrode layer 30 includes a negative electrode current collector layer 310 and a negative electrode active material layer 340 located on at least one side of the negative electrode current collector layer 310; and
the solid electrolyte portion includes solid electrolyte layers 20 matching a total number of the positive electrode layers 10 and the negative electrode layers 30;
at an edge on at least one side in the Y direction, two composite recesses disposed on the solid-state cell are respectively denoted as a first composite recess 1302 and a second composite recess 3302; the first composite recess 1302 is configured to accommodate at least a part of the positive tab portion 1300, and the second composite recess 3302 is configured to accommodate at least a part of the negative tab portion 3300;
each positive electrode layer 10 is provided with a positive tab recess 122 corresponding to the first composite recess 1302 and a first recess 124 corresponding to the second composite recess 3302; and in at least one positive electrode layer 10, the positive electrode current collector layer 110 is connected to a positive tab 130 at the bottom of at least one positive tab recess 122, the positive electrode layer 10 further includes a conductive adhesive layer 120 located between the positive electrode current collector layer 110 and the positive electrode active material layer 140, and the positive electrode conductive adhesive layer 120 at least covers a die-cut edge region of the positive tab recess 122;
each negative electrode layer 30 is provided with a negative tab recess 322 corresponding to the second composite recess 3302 and a second empty recess 324 corresponding to the first composite recess 1302; and in at least one negative electrode layer 30, the negative current collector layer 310 is connected to a negative tab 330 at the bottom of at least one negative tab recess 322, the negative electrode layer 30 further includes a negative electrode conductive adhesive layer 320 located between the negative electrode current collector layer 310 and the negative electrode active material layer 340, and the negative electrode conductive adhesive layer 320 at least covers a die-cut edge region of the negative tab recess 322.

In the present application, in the "first recess" and "second recess", the terms "first", "second", and the like are used for descriptive purposes only, and should not be construed as indicating or implying relative importance or number, nor as implicitly indicating the importance or quantity of technical features indicated. Moreover, "first" and "second" are used merely for the purpose of describing a non-exhaustive list, and it should be understood that they do not constitute a closed limitation on the quantity.

In some implementations, the conductive adhesive layer at least covers the die-cut edge region of each recess in the electrode layer.

In the present application, unless otherwise specified, "the conductive adhesive layer at least covers the die-cut edge region of each recess in the electrode layer" means that the conductive adhesive layer extends from the edge of each recess to a distance in a direction away from the recess, so that the conductive adhesive layer covers at least a part of the region of the current collector layer.

By making the conductive adhesive layer at least cover the die-cut edge region of each recess in the electrode layer, the increase of the coverage area of the conductive adhesive layer is more beneficial to improving the bonding force and conductivity between the current collector layer and the electrode active material layer, and is beneficial to further improving the cycle performance of the solid-state battery. On the other hand, the edge neatness of the electrode active material layer at each recess may also be improved, and the powder falling of the electrode active material at each recess may be reduced, which is more beneficial to reducing the risk of internal short circuit and improving the reliability and production yield of the battery.

In some implementations, the conductive adhesive layer at least covers a cut edge region of the electrode layer.

In the present application, unless otherwise specified, "the conductive adhesive layer at least covers the cut edge region of the electrode layer" means that the conductive adhesive layer extends from the cutting edge of the electrode layer to a distance in a direction away from the cutting edge of the electrode layer, so that the conductive adhesive layer covers at least a part of the region of the current collector layer.

By making the conductive adhesive layer at least cover the cut edge region of the electrode layer, it is more beneficial to improving the bonding force and conductivity between the current collector layer and the electrode active material layer, and it is beneficial to further improving the cycle performance of the solid-state battery. On the other hand, the edge neatness of the electrode active material layer at each cutting position may be improved, and the powder falling of the electrode active material may be further reduced, which is more beneficial to reducing the risk of internal short circuit and improving the reliability and production yield of the battery.

In some implementations, the first composite recess and the second composite recess are located at the same side edge of the solid-state cell extending in the X direction. That is, in the Y direction, the first composite recess and the second composite recess are located on the same side of the solid-state cell.

In some implementations, the first composite recess and the second composite recess are located at different side edges of the solid-state cell extending in the X direction. That is, in the Y direction, the first composite recess and the second composite recess are located on different sides of the solid-state cell.

In the present application, the height of the positive electrode body in the Y direction may be denoted as H_{P}, the height of the negative electrode body in the Y direction may be denoted as H_{N}, and the height of the solid-state cell in the Y direction may be recorded as H₀.

In some implementations, H_{P}>(H₀-H_{Δ}).

In some implementations, H_{N}>(H₀-H_{Δ}).

In some implementations, H_{P}>(H₀-H_{Δ}) and H_{N}>(H₀-H_{Δ}).

In the present application, unless otherwise specified, the "height of the positive electrode body in the Y direction" refers to the maximum height of the positive electrode body in the Y direction. In some implementations, the height of the positive electrode body in the Y direction is equal to the sum of the height of the positive electrode body at the first composite recess and the height of the first composite recess.

In the present application, unless otherwise specified, the "height of the negative electrode body in the Y direction refers to the maximum height of the negative electrode body in the Y direction. In some implementations, the height of the negative electrode body in the Y direction is equal to the sum of the height of the negative electrode body at the second composite recess and the height of the second composite recess.

In the present application, unless otherwise specified, the "height of the solid-state cell in the Y direction" refers to the maximum height of the electrode body in the Y direction. Unless otherwise specified, the "height of the solid-state cell in the Y direction" does not include the height of the tab portion.

In the present application, unless otherwise specified, the "maximum height of the cell active expansion region in the Y direction" is consistent with the maximum depth of the first composite recess and the second composite recess in the Y direction.

The solid-state cell has a certain extension length in the X direction and a certain extension height in the Y direction. The two top edges of the solid-state cell having a certain distance in the Y direction may be recorded as "two side edges of the solid-state cell extending in the X direction" or "two side edges of the solid-state battery in the Y direction".

In some implementations, H_{N} is equal to H₀. In this case, the electrode active material layer may be disposed by using the space at the tab as much as possible, thereby improving the volumetric energy density of the solid-state cell and the solid-state battery as much as possible.

In some implementations, in the electrode layer including the conductive adhesive layer, the region between the electrode active material layer and the current collector layer includes a covering region provided with the conductive adhesive layer, and may or may not include a blank region not provided with the conductive adhesive layer. Calculated by a projection in the Z direction, an area percentage of the covering region relative to the electrode active material layer may be 64% to 100%, and further optionally 80% to 100%, but is not limited thereto. Calculated by a projection in the Z direction, the area percentage of the covering region relative to the electrode active material layer may also be any one of the following percentages or an interval selected from any two of the following percentages: 64%, 70%, 75%, 80%, 81%, 85%, 90%, 92%, 95%, 96%, 98%, 99%, 100%, and the like.

In some implementations, in the electrode layer including the conductive adhesive layer, calculated by the projection in the Z direction, a projection region of the conductive adhesive layer is consistent with a projection region of the electrode active material layer. In this case, calculated by the projection in the Z direction, the area percentage of the covering region relative to the electrode active material layer in projection is 100%.

The increase of the coverage area of the conductive adhesive layer is more beneficial to improving the bonding force and electronic conductivity between the current collector layer and the electrode active material layer, and is further beneficial to improving the cycle performance of the solid-state battery.

In some implementations, the conductive adhesive layer includes an adhesive matrix and a conductive material. Without limitation, the adhesive matrix may include a polyolefin resin, and may further include a polyolefin resin and a polyolefin modified resin. Non-limiting examples of the polyolefin resin may include one or more of the following polyolefins and polyolefin modified resins based on any one of the following polyolefin resins: polyethylene, polypropylene, an ethylene-vinyl acetate copolymer, a styrene-butadiene copolymer, a styrene-ethylene-butylene-styrene block copolymer, a styrene-isoprene-styrene block copolymer, and amorphous poly-α-olefin. Without limitation, the polyolefin modified resin may include a copolymer of any one of the foregoing polyolefin resins and maleic anhydride. In some implementations, the polyolefin modified resin is a copolymer of any one polyolefin resin described above, maleic anhydride and petroleum resin.

In some implementations, the adhesive matrix includes a polyolefin resin; further, the polyolefin resin may include, but is not limited to, one or more of any one of the following polyolefin resins and polyolefin modified resins based on the following polyolefin resins: polyethylene, polypropylene, an ethylene-vinyl acetate copolymer, a styrene-butadiene copolymer, a styrene-ethylene-butylene-styrene block copolymer, a styrene-isoprene-styrene block copolymer, and amorphous poly-α-olefin; and the polyolefin modified resin is a copolymer of any one polyolefin resin described above, maleic anhydride and petroleum resin.

In some implementations, the adhesive matrix includes a polyolefin modified resin, and further, the polyolefin modified resin may be, but is not limited to, a copolymer formed by the polyolefin resin, maleic anhydride and petroleum resin at a mass ratio of 30: (2-5): (8-12). The polyolefin resin may include one or more of the polyolefin resins listed above.

Without limitation, the polyolefin resin may have a weight average molecular weight of 1000 kDa to 1500 kDa. The eight average molecular weight of the polyolefin resin may also be any one of the following values or selected from an interval formed by any two of the following values: 1000 kDa, 1100 kDa, 1200 kDa, 1300 kDa, 1400 kDa, 1500 kDa, and the like.

Without limitation, the polyolefin in the polyolefin resin may include one or more of polyethylene, polypropylene, an ethylene-vinyl acetate copolymer, a styrene-butadiene copolymer, a styrene-ethylene-butylene-styrene block copolymer, a styrene-isoprene-styrene block copolymer, and an amorphous poly-α-olefin.

Without limitation, the polyolefin modified resin may be a copolymer of any one of the polyolefin resins modified by maleic anhydride. The polarity of the molecular segment may be increased by introducing maleic anhydride into the polyolefin, and the bonding force between the current collector layer and the electrode active material layer may be improved.

Without limitation, the polyolefin modified resin may be a copolymer of any one of the polyolefin resins with maleic anhydride and petroleum resin. Those skilled in the art may select the appropriate amount of maleic anhydride and the amount of petroleum resin according to the improvement of the bonding force.

Those skilled in the art may identify the components of the conductive adhesive layer by one or more of the following detection methods, including but not limited to: Fourier infrared (FT-IR) spectroscopy, ultraviolet spectroscopy, hydrogen nuclear magnetic resonance (¹H NMR), X-ray diffraction (XRD), gel permeation chromatography (GPC), high performance liquid chromatography (HPLC), mass spectrometry, single crystal X-ray diffraction (SCXRD), inductively coupled plasma spectroscopy (ICP), and the like. These test methods have sample preparation methods and test methods which are known to those skilled in the art and can be adjusted depending on a specific compound structure and a material property. As a non-limiting example, the molecular weight of the adhesive matrix (such as polyolefin resin) may be detected by an HPLC method.

In some implementations, in the polyolefin modified resin, the mass ratio of the structural units derived from the polyolefin resin, the maleic anhydride and the petroleum resin is 30: (2-5): (8-12), optionally 30: (2-5): (9-11), further optionally 30: (2-5): (9.5-10.5), and more preferably 30: (3-5): (9.8-10.2).

Without limitation, the conductive material may include a carbon conductive material. A non-limiting example of the carbon conductive material may include one or more of superconducting carbon, acetylene black, carbon black, Ketjen black, a carbon dot, a carbon nanotube, graphene, a carbon nanofiber, and a mesophase carbon micro-sphere. In some implementations, the carbon conductive material includes one or more of carbon black, a carbon nanotube, graphene and a mesophase carbon micro-sphere.

Without limitation, in the conductive adhesive layer, the mass ratio of the adhesive matrix to the conductive material may be (0.6-1.5): 1, optionally (0.8-1.4): 1, further optionally, (1-1.4): 1, and may also be any one of the following values or selected from an interval formed by any two of the following values: 3:5, 0.7:1, 4:5 (i.e., 0.8:1), 0.9:1, 1:1, 1.1:1, 1.2:1, 1.25:1, 1.3:1, 1.4:1, 1.5:1, and the like.

Without limitation, the mass percentage of the sum of the mass of the adhesive matrix and the mass of the conductive material in the conductive adhesive layer may be 90% to 98%, or may be any one of the following percentages or an interval formed by any two of the following percentages: 90%, 91%, 92%, 93%, 94%, 95%, 96%, 97%, 98%, and the like. As an example, the mass percentage of the sum of the mass of the adhesive matrix and the mass of the conductive material in the conductive adhesive layer may be any one of the following ranges: 90% to 96%, 91% to 96%, and the like.

Without limitation, the weight percentage of the adhesive matrix in the conductive adhesive layer may be 35% to 70%, optionally 35-56%, or may be any one of the following percentages or selected from an interval formed by any two of the following percentages: 35%, 36%, 38%, 40%, 42%, 44%, 45%, 46%, 48%, 50%, 52%, 54%, 55%, 56%, 60%, and the like. The mass percentage of the adhesive matrix in the conductive adhesive layer may also be in any one of the following ranges: 40%:60%, and the like.

Without limitation, the mass percentage of the conductive material in the conductive adhesive layer may be15% to 60%, optionally 38% to 60%, or may be any one of the following percentages or selected from an interval formed by any two of the following percentages: 20%, 30%, 35%, 36%, 38%, 40%, 42%, 44%, 45%, 46%, 48%, 50%, 52%, 54%, 55%, 56%, 58%, 60%, and the like. The mass percentage of the conductive material in the conductive adhesive layer may also be in any one of the following ranges: 20% to 60%, 20% to 50%, and the like.

In the present application, unless otherwise specified, the type and mass percentage of the adhesive matrix in the conductive adhesive layer, the type and mass percentage of the conductive material in the conductive adhesive layer, the mass percentage of the sum of the masses of the adhesive matrix and the conductive material in the conductive adhesive layer, and the mass percentage of the adhesive matrix and the conductive material in the conductive viscous layer may be combined in any suitable manner, so that the resistivity of the electrode layer and the bonding force between the current collector layer and the electrode active material layer in the electrode layer may be adjusted.

In some implementations, the electrode layer including the conductive adhesive layer has a resistivity of less than or equal to 1000 Ω·m and a bonding force between the current collector layer and the electrode active material layer in the electrode layer is greater than or equal to 1 N/m.

In some implementations, the electrode layer including the conductive adhesive layer has a resistivity of 10 Ω·m to 1000 Ω·m and a bonding force between the current collector layer and the electrode active material layer in the electrode layer is 1 N/m to 50 N/m.

In some implementations, the resistivity of the electrode layer including the conductive adhesive layer is less than or equal to 1000 Ω·m, optionally, less than or equal to 200 Ω·m. Without limitation, the resistivity of the electrode layer including the conductive adhesive layer may be any one of the following values or selected from an interval formed by any two of the following values: 10 Ω·m, 12 Ω·m, 15 Ω·m, 16 Ω·m, 18 Ω·m, 20 Ω·m, 25 Ω·m, 30 Ω·m, 35 Ω·m, 40 Ω·m, 45 Ω·m, 50 Ω·m, 60 Ω·m, 70 Ω·m, 80 Ω·m, 90 Ω·m, 100 Ω·m, 120 Ω·m, 150 Ω·m, 160 Ω·m, 180 Ω·m, 200 Ω·m, 250 Ω·m, 300 Ω·m, 400 Ω·m, 500 Ω·m, 600 Ω·m, 700 Ω·m, 800 Ω·m, 900 Ω·m, 1000 Ω·m, and the like, for example, the resistivity of the electrode layer including the conductive adhesive layer may be 10 Ω·m to 200 Ω·m.

In some implementations, the bonding force between the current collector layer and the electrode active material layer in the electrode layer is greater than or equal to 1 N/m, optionally, greater than or equal to 3 N/m. Without limitation, the bonding force between the current collector layer and the electrode active material layer in the electrode layer may be any one of the following values or selected from an interval formed by any two of the following values: 1 N/m, 2 N/m, 3N/m, 4 N/m, 5 N/m, 6 N/m, 8 N/m, 10 N/m, 12 N/m, 14 N/m, 15 N/m, 16 N/m, 18 N/m, 20N/m, 22 N/m, 24 N/m, 25 N/m, 26 N/m, 28 N/m, 30 N/m, 32 N/m, 34 N/m, 35 N/m, 36 N/m, 38 N/m, 40 N/m, 42 N/m, 44 N/m, 45 N/m, 46 N/m, 48 N/m, 50 N/m, and the like, for example, the bonding force between the current collector layer and the electrode active material layer in the electrode layer may be 3 N/m to 20 N/m.

In some implementations, the electrode layer including the conductive adhesive layer has a resistivity of 10 Ω·m to 200 Ω·m and a bonding force between the current collector layer and the electrode active material layer in the electrode layer is 3 N/m to 20 N/m.

The resistivity of the electrode layer including the conductive adhesive layer may be tested by a membrane resistivity test method known in the art, and may be referred to the electrode sheet resistivity test method described below. Unless otherwise specified, the resistivity of the electrode layer including the conductive adhesive layer may be measured at a temperature of 20 °C to 25°C, for example, 20°C, 22°C, 23°C, 25°C, and the like.

The bonding force between the current collector layer and the electrode active material layer in the electrode layer may also refer to the above, and will not be repeated here. The test temperature may be 20°C to 25°C, for example, 20°C, 22°C, 23°C, 25°C, and the like.

By controlling the resistivity of the electrode layer and the bonding force between the current collector layer and the electrode active material layer in the electrode layer within the foregoing ranges, both the conductivity and the bonding force of the conductive adhesive layer may be achieved.

In some implementations, the electrode layer including the conductive adhesive layer satisfies one or more of the following features:
the adhesive matrix including a polyolefin resin, where the polyolefin resin includes one or more of the following polyolefin resins and polyolefin modified resins based on any one of the following polyolefin resins: polyethylene, polypropylene, an ethylene-vinyl acetate copolymer, a styrene-butadiene copolymer, a styrene-ethylene-butylene-styrene block copolymer, a styrene-isoprene-styrene block copolymer, and amorphous poly-α-olefin; and the polyolefin-modified product includes a copolymer of the polyolefin resin modified by one or more units of maleic anhydride and petroleum resin;
the conductive material including a carbon conductive material, where the carbon conductive material
includes one or more of superconducting carbon, acetylene black, carbon black, Ketjen black, a carbon dot, a carbon nanotube, graphene, a carbon nanofiber, and a mesophase carbon micro-sphere; optionally, the carbon conductive material includes one or more of carbon black, a carbon nanotube, graphene, and a mesophase carbon micro-sphere;
a mass percentage of a sum of the adhesive matrix and the conductive material in the conductive adhesive layer being 90% to 98%; and
in the conductive adhesive layer, the mass ratio of the adhesive matrix to the conductive material is 1:1 to 1.4:1.

By selecting the composition of the conductive adhesive layer, it is beneficial to balancing the bonding force and conductivity between the electrode active material layer and the current collector layer, to better improve the cycle performance of the solid-state battery, and to achieve a comprehensive improvement of the cycle performance, reliability and production yield of the solid-state battery.

Without limitation, the conductive adhesive layer may optionally further include an auxiliary agent. The addition of the auxiliary agent may be used to improve the thermal stability and long-term storage of the conductive adhesive layer, and to suppress the carbonization or aging of the conductive adhesive layer at high temperature. Without limitation, the auxiliary agent in the conductive adhesive layer may include one or more of an antioxidant and an anti-aging agent. Non-limiting examples of the auxiliary agent in the conductive adhesive layer may include paraffin. Without limitation, the mass percentage of the auxiliary agent in the conductive adhesive layer may be less than or equal to 10%, further may be 2% to 10%, and may also be any one of the following percentages or an interval formed by any two of the following percentages: 2%, 3%, 4%, 5%, 6%, 7%, 8%, 9%, 10%, and the like. Without limitation, the mass percentage of the auxiliary agent in the conductive adhesive layer may also be any one of the following ranges: 3% to 10%, 4% to 10%, 2% to 9%, 3% to 9%, 4% to 9%, and the like. In some implementations, the conductive adhesive layer includes paraffin, and further, the mass percentage of paraffin in the conductive adhesive layer may be less than or equal to 10%, further may be 2% to 10%, and may also be any one of the following percentages or an interval formed by any two of the following percentages: 2%, 3%, 4%, 5%, 6%, 7%, 8%, 9%, 10%, and the like. For example, the mass percentage may be selected from any one of the following ranges: 3% to 10%, 4% to 10%, 2% to 9%, 3% to 9%, 4% to 9%, and the like.

In some implementations, the electrode active material layer optionally includes a conductive agent; in the same electrode layer, based on a single side of the current collector layer, the mass percentage of the conductive material in the conductive adhesive layer is higher than the mass percentage of the conductive agent in the electrode active material layer.

By controlling the content gradient between the conductive material in the conductive adhesive layer and the conductive agent in the electrode active material layer, it is more beneficial to improving the conductivity between the electrode active material layer and the current collector layer.

In some implementations, in the corresponding electrode layer, based on a single side of the current collector layer, the conductive adhesive layer has a thickness of 0.5 µm to 3 µm, optionally 0.5 µm to 1.5 µm. In the corresponding electrode layer, based on a single side of the current collector layer, the single-side thickness of the conductive adhesive layer may also be any one of the following thicknesses or selected from an interval formed by any two of the following thicknesses: 0.5 µm, 0.6 µm, 0.8 µm, 1 µm, 1.0 µm, 1.2 µm, 1.5 µm, 1.6 µm, 1.8 µm, 2 µm, 2.0 µm, 2.2 µm, 2.4 µm, 2.5 µm, 2.6 µm, 2.8 µm, 3 µm, and the like. In some implementations, in the corresponding electrode layer, based on a single side of the current collector layer, the thickness of the conductive adhesive layer is selected from any one of the following suitable ranges: 0.5 µm to 2.5 µm, 0.5 µm to 2 µm, 0.6 µm to 3 µm, 0.6 µm to 2.5 µm, 0.6 µm to 2 µm, 1 µm to 1.5 µm, or the like.

By controlling the thickness of the conductive adhesive layer within the foregoing range, it is beneficial to improving the bonding force and conductivity between the electrode active material layer and the current collector layer, and also taking into account the advantage of high energy density of the solid-state cell.

In some implementations, the active region of the solid-state cell at the height of the first composite recess and the second composite recess is recorded as the cell active expansion region.

A height of the electrode body at the cell active expansion region is higher than a height of the electrode body at any one of the composite recesses.

In the foregoing solid-state cell structure, the height of the positive electrode body at the cell active expansion region is higher than the height of the positive electrode body at the first composite recess, and the height of the negative electrode body at the cell active expansion region is higher than the height of the negative electrode body at the second composite recess, so that the solid-state cell can better utilize the space at the tab, thereby greatly increasing the space volume occupied by the electrode portion in the solid-state cell, and significantly improving the volumetric energy density of the solid-state cell and the solid-state battery.

In the present application, the height of the solid-state cell in the Y direction may be denoted as H₀. The maximum height of the cell active expansion region in the Y direction is denoted as H_{Δ}, and the utilization rate of the cell active expansion region in the Y direction is ψ_{Y}= H_{Δ}/H₀×100%.

The width of the solid-state cell in the X direction is denoted as W₀, the width of the cell active expansion region in the X direction is denoted as W_{Δ}, and the utilization rate of the cell active expansion region in the X direction is ψ_{X}= W_{Δ}/W₀×100%.

The projection area of the solid-state cell in the Z direction is denoted as A₀, the projection area of the cell active expansion region in the Z direction is denoted as A_{Δ}, and the two-dimensional utilization rate of the cell active expansion region is ψ_{A}=A_{Δ}/A₀×100%.

In the present application, unless otherwise specified, the "projection area of the solid-state cell in the Z direction" refers to the projection area of the electrode body portion in the Z direction, and does not include the projection area of the tab portion in the Z direction.

In some implementations, the solid-state cell satisfies any one or more of the following features:
H_{Δ}≥0.05mm, optionally, 0.05mm≤H_{Δ}≤1mm;
ψ_{Y}≥0.05%, optionally, 0.1%≤ψ_{Y}≤2%;
W_{Δ}≥50mm, optionally, 50mm≤W_{Δ}≤1000mm;
ψ_{X}≥60%, optionally, 60%≤ψ_{X}≤95%;
ψ_{A}≥0.04%, optionally, 0.04%≤ψ_{A}≤1.5%.

In some implementations, the solid-state cell satisfies any one or more of the following features:
$0.05 mm \leq {H}_{Δ} \leq 1 mm ;$
$0.1 % \leq {ψ}_{Y} \leq 2 % ;$
$50 mm \leq {W}_{Δ} \leq 1000 mm ;$
$60 % \leq {ψ}_{X} \leq 95 % ;$ and
$0.04 % \leq {ψ}_{A} \leq 1.5 % .$

Without limitation, H_{Δ}≥0.05mm, optionally, 0.05mm≤H_{Δ}≤1mm. Without limitation, H_{Δ} may also be any one of the following values or selected from an interval formed by any two of the following values: 0.05 mm, 0.06 mm, 0.08 mm, 0.10 mm, 0.1 mm, 0.15 mm, 0.2 mm, 0.20 mm, 0.25 mm, 0.4 mm, 0.5 mm, 0.6 mm, 0.8 mm, 0.9 mm, 1.0 mm, 1 mm, and the like.

Without limitation, ψ_{Y}≥0.05%, optionally, ψ_{Y}≥0.1%, further optionally, 0.1%≤ψ_{Y}≤2%. Without limitation, ψ_{Y} may be any one of the following percentages or selected from an interval selected from any two of the following percentages: 0.05%, 0.06%, 0.08%, 0.1%, 0.2%, 0.4%, 0.5%, 0.6%, 0.8%, 1%, 1.2%, 1.4%, 1.5%, 1.6%, 1.8%, 2%, and the like. Without limitation, ψ_{Y} may also be any one of the following ranges: 0.05%≤ψ_{Y}≤2%, and the like.

By controlling one or two of the height parameter h_{Δ} and the utilization rate parameter ψ_{Y} of the cell active expansion region within the foregoing ranges, it is beneficial to better utilizing the space in the height direction at the position of the tab.

Without limitation, W_{Δ}≥50mm, optionally, 50mm≤W_{Δ}≤1000mm. Without limitation, W_{Δ} may also be any one of the following values or selected from an interval formed by any two of the following values: 50 mm, 60 mm, 80 mm, 100 mm, 120 mm, 150 mm, 200 mm, 250 mm, 300 mm, 400 mm, 500 mm, 600 mm, 700 mm, 800 mm, 900 mm, 1000 mm, and the like.

Without limitation, ψ_{X}≥60%, optionally, 60%≤ψ_{X}≤95%. Without limitation, ψ_{X} may be any one of the following percentages or selected from an interval selected from any two of the following percentages: 60%, 65%, 70%, 75%, 80%, 85%, 90%, 95%, and the like. For example, ψ_{X} may be selected from any one of the following ranges: ψ_{X}≥70%, 70%≤ψ_{X}≤95%, and the like.

By controlling one or two of the width parameter w_{Δ} and the utilization rate parameter ψ_{X} of the cell active expansion region within the foregoing ranges, it is beneficial to better utilizing the space in the width direction at the tab position.

In some implementations, the solid-state cell satisfies: ψ_{A}≥0.04%.

In some implementations, the solid-state cell satisfies: ψ_{A}≥0.05%.

In some implementations, the solid-state cell satisfies: 0.04%≤ψ_{A}≤1.5%.

Without limitation, ψ_{A} may be any one of the following percentages or selected from an interval selected from any two of the following percentages: 0.04%, 0.05%, 0.06%, 0.07%, 0.08%, 0.09%, 0.1%, 0.15%, 0.16%, 0.2%, 0.3%, 0.4%, 0.5%, 0.6%, 0.7%, 0.8%, 0.9%, 1%, 1.2%, 1.4%, 1.5%, and the like, for example, ψ_{A} may be selected from the following ranges: 0.05% to 1.5%, 0.06% to 1.5, 0.1% to 1.5%, 0.15% to 1.5%, 0.04% to 1.2%, 0.05% to 1.2%, 0.06% to 1.2%, 0.1% to 1.2%, 0.15% to 1.2%, 0.16% to 1.5%, 0.16% to 1.2%, and the like.

By controlling the two-dimensional utilization rate ψ_{A} of the cell active expansion region within the foregoing range, it is beneficial to better comprehensively utilizing the idle space at the tab. It may be understood that, relative to the solid-state cell without the cell active expansion region, the percentage increase of the volumetric energy density of the solid-state cell provided with the cell active expansion region may generally be higher than ψ_{A}.

In some implementations, a length of the positive tab portion in the Y direction in the extended state is greater than a height of the first composite recess in the Y direction. In some implementations, the positive tab portion includes a positive tab bending portion located in the first composite recess.

In some implementations, a length of the negative tab portion in the Y direction in the extended state is greater than a height of the second composite recess in the Y direction. In some implementations, the negative tab portion includes a negative tab bending portion located in the second composite recess.

In some implementations, a length of the positive tab portion in the extended state in the Y direction is greater than a height of the first composite recess in the Y direction, and a length of the negative tab portion in the extended state in the Y direction is greater than a height of the second composite recess in the Y direction.

In some implementations, the positive tab portion includes a positive tab bending portion located in the first composite recess; and the negative tab portion includes a negative tab bending portion located in the second composite recess.

In some implementations, the positive tab portion includes a positive tab bending portion located in the first composite recess, and a length of the positive tab in the Y direction in the extended state is greater than a height of the first composite recess in the Y direction;

The negative tab portion includes a negative tab bending portion located in the second composite recess, and a length of the negative tab portion in the Y direction in the extended state is greater than a height of the second composite recess in the Y direction.

In some implementations, the recesses in the electrode layer provided with the tabs are referred to as tab recesses, and the extension height of any one of the tabs in the Y direction is greater than the height of the corresponding tab recess in the Y direction.

By reserving a certain extension height for the positive tab or the negative tab, it is convenient to use the positive tab or the negative tab as a soft tab to connect a rigid tab in a subsequent process.

In some implementations, at least a part of the tabs have a bent section in the corresponding recess.

At least a part of the tab may be bent into the reserved recess, which is beneficial to further increasing the volume occupancy ratio of the electrode portion in the solid-state cell, and may greatly increase the volume energy density of the solid-state cell and the solid-state battery.

In the present application, the extension height of the positive tab portion in the Y direction is denoted as H_{PJ}. When the positive tab portion and the negative tab portion are located on the same side of the solid-state cell in the height direction, in some implementations, H_{PJ}≥H_{Δ}, and optionally, H_{PJ}>H_{Δ}.

In the present application, the extension height of the negative tab portion in the Y direction is denoted as H_{NJ}. When the positive tab portion and the negative tab portion are located on the same side of the solid-state cell in the height direction, in some implementations, H_{NJ}≥H_{Δ}, and optionally, H_{NJ}>H_{Δ}.

Taking a dry method as an example, in the process of preparing the positive electrode sheet or the negative electrode sheet, when the electrode self-supporting sheet is attached to the corresponding current collector membrane, the coating height in the Y direction is controlled to be less than the height of the current collector membrane, and after die cutting, the extension height of the formed tab may be greater than the height of the corresponding recess. It may be understood that the positive electrode self-supporting sheet and the positive electrode current collector membrane are used to prepare the positive electrode sheet, and the positive tab is formed at the positive tab recess; and the negative electrode self-supporting sheet and the negative electrode current collector membrane are used to prepare the negative electrode sheet, and the negative tab is formed at the negative tab recess.

In the present application, unless otherwise specified, the "extension height of the tab" refers to the height of the tab in the Y direction in the extended state.

In some implementations, a width of the positive tab portion in the X direction is less than a width of the first composite recess in the X direction.

In some implementations, a width of the negative tab portion in the X direction is less than a width of the second composite recess in the X direction.

In some implementations, a width of the positive tab portion in the X direction is less than a width of the first composite recess in the X direction; and a width of the negative tab portion in the X direction is less than a width of the second composite recess in the X direction.

In some implementations, in the X direction, there is a gap between the positive tab portion and the two side edges of the first composite recess, and there is a gap between the negative tab portion and the two side edges of the second composite recess.

By reserving a certain gap at the composite recess for the two side edges of the corresponding tab portion, appropriate movement spaces may be reserved for the positive and negative tab portions, and the positive and negative tab portions may be bent into the composite recess more conveniently.

In some implementations, in the X direction, there is a gap between the positive tab portion and the two side edges of the first composite recess, and there is a gap between the negative tab portion and the two side edges of the second composite recess. Without limitation, the width of any gap in the X direction may be independently 10 µm to 5000 µm, and may be independently 0.1 mm to 1 mm, but is not limited thereto, and the width of any gap in the X direction may be independently any one of the following values or an interval formed by any two of the following values: 10 µm, 50 µm, 100 µm, 0.1 mm, 0.15 mm, 0.2 mm, 0.25 mm, 0.3 mm, 0.35 mm, 0.4 mm, 0.5 mm, 0.6 mm, 0.7 mm, 0.8 mm, 0.9 mm, 1 mm, 1.5 mm, 2 mm, 3 mm, 4 mm, and the like, for example, it may be selected from the following ranges: 0.2 mm to 1 mm, 0.15 mm to 1 mm, 0.3 mm to 1 mm, 0.2 mm to 0.5 mm, 0.15 mm to 0.5 mm, 0.3 mm to 0.5 mm, and the like.

By controlling the size of the above gap within a suitable range, the positive and negative tab portions may be prevented from scratching the adjacent structural layers in different states, and the proportion of the expanded active area may be increased as much as possible.

In some implementations, the solid-state cell has a laminated structure.

Without limitation, the size of the solid-state cell may be various sizes known in the applicable field, which may include, but is not limited to, the size specifications of battery products such as button batteries and notebook batteries.

In some implementations, the solid electrolyte portion further includes a solid electrolyte layer. It may be understood that a solid electrolyte layer is disposed between any adjacent positive electrode layer and negative electrode layer. Therefore, the number of layers of the solid electrolyte in the solid electrolyte portion matches the number of layers of the electrode layer in the electrode portion.

In some implementations, the positive electrode body includes at least one positive electrode layer, each positive electrode layer is provided with recesses corresponding to the first composite recess and the second composite recess, and a positive tab is disposed at the recess corresponding to the first composite recess in the at least one positive electrode layer;
the negative electrode body includes at least one negative electrode layer, each negative electrode layer is provided with recesses corresponding to the second composite recess and the first composite recess, and a negative tab is disposed at the recess corresponding to the second composite recess in the at least one negative electrode layer;
the solid electrolyte portion includes at least one solid electrolyte layer, and any adjacent positive electrode layer and negative electrode layer are separated by the solid electrolyte layer; and each solid electrolyte layer is provided with empty recesses corresponding to the first composite recess and the second composite recess respectively.

In the present application, unless otherwise specified, the recess corresponding to the first composite recess in the positive electrode layer is denoted as a "positive tab recess", the positive tab recess may be provided with a positive tab or may be an empty recess, but at least one positive tab recess is provided with a positive tab. It may be understood that the recesses in the positive electrode layer corresponding to the second composite recesses are all empty recesses.

In the present application, unless otherwise specified, the recess corresponding to the second composite recess in the negative electrode layer is denoted as a "negative tab recess", the negative tab recess may be provided with a negative tab or may be an empty recess, but at least one negative tab recess is provided with a negative tab. It may be understood that the recesses in the negative electrode layer corresponding to the first composite recesses are all empty recesses.

In the present application, unless otherwise specified, the "empty recess" includes a recess in the electrode layer which is not provided with the tab, and also includes a recess in the solid electrolyte layer corresponding to two composite recesses. The empty recesses involved in the present application at least include a first empty recess in the positive electrode layer corresponding to the second composite recess, a second empty recess in the negative electrode layer corresponding to the first composite recess, a fourth empty recess in the solid electrolyte layer corresponding to the first composite recess, and a third empty recess in the solid electrolyte layer corresponding to the second composite recess.

In some implementations, the positive electrode portion includes a positive electrode body and a positive tab portion connected to the positive electrode body, the positive electrode body includes at least one positive electrode layer, and the positive electrode layer includes a positive electrode current collector layer and a positive electrode active material layer located on at least one side of the positive electrode current collector layer; each positive electrode layer is provided with a recess corresponding to the first composite recess and a groove corresponding to the second composite recess; in the at least one positive electrode layer, the positive electrode current collector layer is connected to the positive tab at a bottom of the at least one recess, the positive electrode layer further includes a positive electrode conductive adhesive layer located between the positive electrode current collector layer and the positive electrode active material layer, and the positive electrode conductive adhesive layer at least covers a die-cut edge region of the recess where the positive tab is located; all the positive tabs connected to the positive body jointly form at least a part of the positive tab portion;
the negative electrode portion includes a negative electrode body and a negative tab portion connected to the negative electrode body, the negative electrode body includes at least one negative electrode layer, and the negative electrode layer includes a negative electrode current collector layer and a negative electrode active material layer located on at least one side of the negative electrode current collector layer; each negative electrode layer is provided with recesses corresponding to the first composite recess and the second composite recess, respectively; in the at least one negative electrode layer, the negative electrode current collector layer is connected to the negative tab at the bottom of the at least one recess, the negative electrode layer further includes a negative electrode conductive adhesive layer located between the negative electrode current collector layer and the negative electrode active material layer, and the negative electrode conductive adhesive layer at least covers a die-cut edge region of the recess where the negative tab is located; all the negative tabs connected to the negative body jointly form at least a part of the negative tab portion;
the solid electrolyte portion includes at least one solid electrolyte layer, and any adjacent positive electrode layer and negative electrode layer are separated by the solid electrolyte layer; and each solid electrolyte layer is provided with empty recesses corresponding to the first composite recess and the second composite recess, respectively.

In the present application, unless otherwise specified, the "positive tab recess" refers to a recess in the positive electrode layer corresponding to the position of the positive tab portion. For any positive electrode layer, the positive tab recess may be provided with a positive tab or may not be provided with a positive tab, as long as the number of positive tabs connected to all positive electrode layers is greater than or equal to 1.

In the present application, unless otherwise specified, the "negative tab recess" refers to a groove in the negative electrode layer corresponding to the position of the negative tab portion. For any one of the negative electrode layers, the negative tab may be disposed at the negative tab recess, or the negative tab may not be disposed at the negative tab recess, as long as the number of the negative tabs connected to all the negative electrode layers is greater than or equal to 1.

When the solid-state cell adopts the foregoing laminated structure, at the first composite recess, the positive tab recess on the positive electrode layer, the empty recess on the negative electrode layer and the empty recess on the solid electrolyte layer may be combined to form a concave space for the positive tab portion to bend inward. At the second composite recess, the negative tab recess on the negative electrode layer, the empty recess on the positive electrode layer and the empty recess on the solid electrolyte layer may be used to form a concave space for the negative tab portion to bend inward, which may significantly expand the active area of the solid-state cell, so that the solid-state cell can better utilize the space at the tab, the space volume occupied by the electrode portion in the solid-state cell may be greatly increased, and the volumetric energy density of the solid-state cell and the solid-state battery may be significantly improved. The two composite recesses can also provide protection for the tab portion and reduce the risk of tab breakage. Further, a conductive adhesive layer is disposed in a die-cut edge region of the recess where the tab is located, and on the one hand, the conductive adhesive layer may also provide good conductivity between the current collector layer and the electrode active material layer, and in addition, the bonding force is improved, which is beneficial to improving the cycle performance of the solid-state battery. On the other hand, the bonding force between the electrode active material layer and the current collector layer may be improved, which is beneficial to forming a tab recess with a clean edge when the tab is die-cut, may reduce powder falling of the electrode active material, is beneficial to reducing the risk of internal short circuit, and may improve the reliability and production yield of the battery.

In addition, in a manufacturing method for the solid-state cell, when the electrode active material layer is introduced, the active pre-coating layer may cover the tab recess region together, and the electrode active material at the tab recess may be selectively removed more easily by using the difference in the bonding force of the active pre-coating layer to the current collector layer and the conductive adhesive layer, so that the electrode active material layer forms a neat edge contour when the tab is die-cut, which can reduce the powder falling of the electrode active material, thereby improving the production yield of the solid-state cell and the solid-state battery, and can also improve the cycle performance of the manufactured solid-state cell and solid-state battery.

In a thickness direction of the positive electrode layer, the positive electrode active material layer may be located on at least one side of the positive electrode current collector layer. The positive electrode active material layer may be located on only one side of the positive electrode current collector layer, or the positive electrode active material layer may be disposed on both sides of the positive electrode current collector. In some implementations, the thickness direction of the positive electrode layer is consistent with the Z direction.

In the thickness direction of the negative electrode layer, the negative electrode active material layer may be located on at least one side of the negative electrode current collector layer. The negative electrode active material layer may be located on only one side of the negative electrode current collector layer, or the negative electrode active material layer may be provided on both sides of the negative electrode current collector. In some implementations, the thickness direction of the negative electrode layer is consistent with the Z direction.

Without limitation, the positive tab may be made of the same material as the positive current collector layer, and further, the positive tab and the positive current collector layer may be derived from the same current collector membrane. Such positive tabs may be referred to as "soft tabs".

Without limitation, the negative tab may be made of the same material as the negative current collector layer, and further, the negative tab and the negative current collector layer may be derived from the same current collector membrane. Such negative tabs may be referred to as "soft tabs".

When the solid-state cell adopts the foregoing laminated structure, at the first composite recess, the positive tab recess on the positive electrode layer, the empty recess on the negative electrode layer and the empty recess on the solid electrolyte layer may be combined to form a concave space for the positive tab portion to bend inward. At the second composite recess, the negative tab recess on the negative electrode layer, the empty recess on the positive electrode layer, and the empty recess on the solid electrolyte layer may be combined to form a concave space for the negative tab portion to bend inward.

In some implementations, all the positive tabs connected to the positive body together constitute at least a part of the positive tab portion, and in this case, the positive tab portion may further include a positive rigid tab portion.

In some implementations, all the positive tabs connected to the positive body together form the positive tab portion.

In some implementations, all the negative tabs connected to the negative electrode body together constitute at least a part of the negative tab portion, and in this case, the negative tab portion may further include a negative rigid tab portion.

In some implementations, all the negative tabs connected to the negative body together form the negative tab portion.

In some implementations, the number of positive electrode layers in the positive electrode body is one; and the number of the negative electrode layers in the negative electrode body is one

In some implementations, the number of the positive electrode layers in the positive electrode body is multiple; and the number of the negative electrode layers in the negative electrode body matches the number of the positive electrode layers in the positive electrode body.

When the number of positive electrode layers in the positive electrode body is multiple, and the number of negative electrode layers in the negative electrode body is multiple that match, the laminated structure corresponds to a multi-layer laminated structure, and at this time, the foregoing cell active expansion region structure design is used to help gain more volumetric energy density at the tab space.

Without limitation, the number of the positive electrode layers in the positive electrode body may be one or more. The more the number of positive electrode layers in the positive electrode body, the thicker the battery. The appropriate number of layers of the positive electrode layer may be selected as required depending on the size of the solid-state battery.

Calculated by the number of the positive electrode layers in the positive electrode body, the number of the positive electrode layers may be one or more, and generally, the number of the negative electrode layers in the negative electrode body is not less than the number of the positive electrode layers in the positive electrode body.

In some implementations, the number of the positive electrode layers in the positive electrode body is equal to the number of the negative electrode layers in the negative electrode body.

In some implementations, the number of positive electrode layers in the positive electrode body is N_{P}≥1, optionally, N_{P}≥2, further optionally, N_{P}≥5, still further optionally, N_{P}≥10, still further optionally, N_{P}≥20, still further optionally, N_{P}≥30, still further optionally, N_{P}≥40, and still further optionally, N_{P}≥50. Without limitation, the number N_{P} of the positive electrode layers in the positive electrode body is 1 to 60, and optionally 2 to 60. The number N_{P} of the positive electrode layers in the positive electrode body may also be any one of the following values or selected from an interval formed by any two of the following values: 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, and the like.

In some implementations, the number of the positive electrode layers in the positive electrode body is 1.

In some implementations, the plurality of positive electrode layers in the positive electrode body are connected to positive tabs; and the plurality of negative electrode layers in the negative electrode body are connected to the negative tab.

In the present application, unless otherwise specified, when the plurality of positive electrode layers in the positive electrode body are all connected to the positive tab, the plurality of positive tabs are laminated in the Z direction to form a positive tab portion having a multilayer structure, and in this case, the "positive tab portion" may also be referred to as a positive tab laminate.

In the present application, unless otherwise specified, when the plurality of negative electrode layers in the negative electrode body are all connected to the negative tabs, the plurality of negative tabs are laminated in the Z direction to form the negative tab portion of the multilayer structure, and in this case, the "negative tab portion" may also be referred to as a negative tab laminate.

When the plurality of positive electrode layers in the positive electrode body are all connected to the positive tabs, and the plurality of negative electrode layers in the negative electrode body are all connected to the negative tabs, it is more beneficial to reducing the waste of space in the case caused by the lamination of the plurality of tabs.

In the present application, the "tab laminate" includes a positive tab laminate and a negative tab laminate. It may be understood that the plurality of tabs in the tab laminate are each connected to a corresponding electrode layer, and further, each connected to a current collector layer in the corresponding electrode layer. The plurality of positive tabs in the positive tab laminate are each connected to a corresponding positive electrode layer, and further, are each connected to a positive electrode current collector layer in the corresponding positive electrode layer. The plurality of negative tabs in the negative tab laminate are each connected to a corresponding negative electrode layer, and further, are each connected to a negative electrode current collector layer in the corresponding negative electrode layer.

In the solid-state cell, the positive electrode layer is further provided with an empty recess corresponding to the second composite recess, which may be denoted as a first empty recess; the negative electrode layer is further provided with an empty recess corresponding to the first composite recess, which may be denoted as a second empty recess; and the solid electrolyte layer is provided with empty recesses corresponding to the first composite recess and the second composite recess, respectively, the empty recess corresponding to the first composite recess may be denoted as a fourth empty recess, and the empty recess corresponding to the second composite recess may be denoted as a third empty recess.

In the solid-state cell, the positive tab recess, the fourth empty recess, and the second empty recess positionally match to provide a first composite recess that accommodates at least a part of the positive tab portion, and the negative tab recess, the third empty recess, and the first empty recess positionally match to provide a second composite recess that accommodates at least a part of the negative tab portion.

In a second aspect of the present application, provided is a manufacturing method for a solid-state cell, which may be used to manufacture the cell according to the first aspect of the present application.

Without limitation, a prefabricated positive electrode sheet, a prefabricated solid electrolyte membrane and a prefabricated negative electrode sheet may be sequentially laminated, the solid electrolyte membrane is placed between the positive electrode sheet and the negative electrode sheet, and the solid-state cell is prepared by rolling. Without limitation, the rolling may be performed by a cold rolling method or a hot rolling method, but is not limited thereto.

In some implementations, the solid-state cell may be manufactured by a method including steps S100, S200, S300, S400, and S500:
S100: a required number of positive electrode sheets is manufactured, where each of the positive electrode sheets includes a positive electrode current collector layer and a positive electrode active material layer located on at least one side of the positive electrode current collector layer; at an edge of at least one side in the height direction of the positive electrode sheet, the positive electrode sheet is provided with a positive tab recess and a first empty recess; and at least one positive electrode sheet further includes a positive tab connected to the positive electrode current collector layer and a conductive adhesive layer located between the positive electrode current collector layer and the positive electrode active material layer, the conductive adhesive layer is denoted as a positive electrode conductive adhesive layer, the positive tab is connected to a bottom of the positive tab recess of the corresponding positive electrode sheet, and the positive electrode conductive adhesive layer at least covers a die-cut edge region of the positive tab recess;
S200: a required number of negative electrode sheets is manufactured, where each of the negative electrode sheets includes a negative electrode current collector layer and a negative electrode active material layer located on at least one side of the negative electrode current collector layer; at an edge of at least one side in the height direction of the negative electrode sheet, the negative electrode sheet is provided with a negative tab recess and a second empty recess; at least one negative electrode sheet further includes a negative tab connected to the negative current collector layer and a conductive adhesive layer located between the negative current collector layer and the negative electrode active material layer, the conductive adhesive layer is denoted as a negative conductive adhesive layer, the negative tab is connected to a bottom of the negative tab recess of the corresponding negative electrode sheet, and the negative conductive adhesive layer at least covers a die-cut edge region of the negative tab recess;
S300: a required number of solid electrolyte membranes are manufactured, where each of the solid electrolyte membranes is provided with a fourth empty recess and a third empty recess;
S400: the positive electrode sheets, the solid electrolyte membranes and the negative electrode sheets are laminated according to the respective required numbers, so that the positive electrode sheets and the negative electrode sheets are separated by the solid electrolyte membranes, the positive tab recess, the fourth empty recess and the second empty recess are aligned in contour and form a first composite recess, and the negative tab recess, the third empty recess and the first empty recess are aligned in contour and form a second composite recess, to obtain a laminated member; where each positive electrode sheet constitutes a positive electrode portion, each negative electrode sheet constitutes a negative electrode portion, and each solid electrolyte membrane constitutes a solid electrolyte portion; each positive tab of the positive electrode portion constitutes a soft segment of the positive tab portion, and at least a part of the soft segment of the positive tab portion is accommodated in the first composite recess; and each negative tab of the negative electrode portion constitutes a soft segment of the negative tab portion, and at least a part of the soft segment of the negative tab portion is accommodated in the second composite recess; and
S500: The laminated member is rolled to form a solid-state cell.

Calculated by the number of the positive electrode sheets, the number of the laminated positive electrode sheets may be one or more, and generally, the number of the laminated negative electrode sheets is not less than the number of the laminated positive electrode sheets.

Those skilled in the art may implement the steps of the manufacturing method for the solid-state cell by means of a method known in the art under the guidance of the preparation method provided in the second aspect of the present application. For example, the tab die-cutting may be performed by using a laser cutting technology, but is not limited thereto.

In some implementations, the number of laminated positive electrode sheets is equal to the number of laminated negative electrode sheets.

In some implementations, the number of laminated positive electrode sheets is multiple; and the plurality of positive tab contours of the plurality of positive electrode sheets are aligned and together form a positive tab laminate, at least a part of the positive tab laminate is accommodated in the first composite recess, the plurality of negative tab contours of the plurality of negative electrode sheets are aligned and together form a negative tab laminate, and at least a part of the negative tab laminate is accommodated in the second composite recess.

In the present application, unless otherwise specified, the "empty recesses" in the positive electrode sheet, the negative electrode sheet and the solid electrolyte membrane mean that the space of the corresponding recesses is reserved before assembling into the solid-state cell, and after assembling into the cell, the recesses can participate in forming the composite recesses to provide the space matching the tab portions. For example, in some implementations, in addition to the positive tab recess matching the position of the positive tab, the positive electrode sheet for forming the positive electrode layer also reserves a first empty recess for matching the position of the negative tab portion in the solid-state cell. In addition to the negative tab recess matching the position of the negative tab, the negative electrode sheet for forming the negative electrode layer also reserves a second empty recess for matching the position of the positive tab portion in the solid-state cell. The solid electrolyte membrane for forming the solid electrolyte layer reserves a third empty recess for matching the position of the negative tab portion in the solid-state cell and a fourth empty recess for matching the position of the positive tab portion in the solid-state cell.

In the present application, in the "first empty recess", the "second empty recess", the "third empty recess", and the "fourth empty recess", the terms "first", "second", "third", "fourth" and the like are used for descriptive purposes only, and should not be construed as indicating or implying relative importance or number, nor as implicitly indicating the importance or quantity of technical features indicated. Also, the "first", "second", "third", "fourth" and the like are used merely for the purpose of describing a non-exhaustive list, and it should be understood that they do not constitute a closed limitation on the quantity.

In some implementations, the manufacturing method for a solid-state cell may further include one or both of step 600 and step 700:
S600: at least a part of the positive tab portion is bent into the first composite recess to obtain a positive tab bending portion in the first composite recess; and
S700: at least a part of the negative tab portion is bent into the second composite recess to obtain the negative tab bending portion in the second composite recess.

In some implementations, the number of the positive electrode layers is greater than 1, and in this case, the positive electrode portion corresponds to the positive tab laminate, and the negative tab portion corresponds to the negative tab laminate; The manufacturing method for a solid-state cell may further include one or both of step 610 and step 710:
S610: at least a part of the positive tab laminate is bent into the first composite recess to obtain a positive tab bending portion in the first composite recess; and
S710: at least a part of the negative tab laminate is bent into the second composite recess to obtain the negative tab bending portion in the second composite recess.

In the present application, unless otherwise specified, the "tab laminate" may refer to a positive tab laminate or a negative tab laminate. The "positive tab laminate" refers to a laminate formed by laminating a plurality of positive tabs in a thickness direction (Z direction) of the solid-state cell. The "negative tab laminate" refers to a laminate formed by laminating a plurality of negative tabs in the thickness direction (Z direction) of the solid-state cell.

In the present application, unless otherwise specified, the "empty recesses" in the positive electrode sheet, the negative electrode sheet and the solid electrolyte layer mean that the space of the corresponding groove is reserved before assembling into a cell, and after assembling into a cell, it can participate in forming a composite recess to accommodate the tab laminate. For example, in some implementations, in addition to the positive tab recess for accommodating the positive tab, the positive electrode sheet for forming the positive electrode layer also reserves a first empty recess for accommodating the negative tab laminate in the cell. In addition to the negative tab recess for accommodating the negative tab, the negative electrode sheet for forming the negative electrode layer also reserves a second empty recess for accommodating the positive tab laminate in the cell. The solid electrolyte membrane for forming the solid electrolyte layer reserves a third empty recess for accommodating the negative tab laminate in the cell and a fourth empty recess for accommodating the positive tab laminate in the cell.

In some implementations, step S400 includes: the positive electrode sheets, the solid electrolyte membranes and the negative electrode sheets are laminated according to the respective required numbers, so that the positive electrode sheets and the negative electrode sheets are separated by the solid electrolyte membranes, the positive tab recess, the fourth empty recess and the second empty recess are aligned in contour and form a first composite recess, and the negative tab recess, the third empty recess and the first empty recess are aligned in contour and form a second composite recess, to obtain a laminated member, where each positive electrode sheet constitutes a positive electrode portion, each negative electrode sheet constitutes a negative electrode portion, and each solid electrolyte membrane constitutes a solid electrolyte portion; positive tab contours of the positive electrode portion are aligned with and constitute a positive tab laminate, and at least a part of the positive tab laminate is accommodated in the first composite recess; and Negative tab contours of the negative electrode portion are aligned with and constitute a negative tab laminate, and at least a part of the negative tab laminate is accommodated in the second composite recess.

The positive electrode active material layer in the positive electrode sheet may be formed by a dry process, but is not limited thereto.

Taking the dry method as an example, the constituent material of the positive electrode active material layer may be uniformly mixed and then rolled to form a positive self-supporting sheet, and then the positive self-supporting sheet is attached to a positive current collector membrane (such as an aluminum foil) with a conductive adhesive layer, and hot rolled to obtain a positive electrode sheet. A non-limiting example of the hot rolling temperature is 160°C to 180°C.

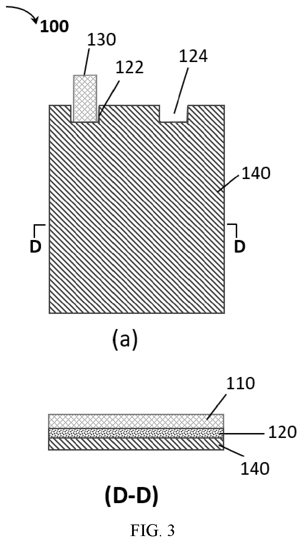

In some implementations, the positive electrode sheet including the positive tab may be manufactured by a method including the following steps (referring to FIG. 2 (a) and FIG. 3, the positive electrode sheet is also a positive electrode sheet including a conductive adhesive layer):
a positive electrode body region 1112 and a positive electrode inactive region 1110 that are adjacent to each other are identified by a first boundary line 1000 on a surface of a positive electrode current collector membrane 111, the first boundary line 1000 extending in a width direction of the positive electrode current collector membrane 111 in a concavely recessed configuration, so that the positive electrode inactive region 1110 includes a positive tab concave region 1220 and a first concave region 1240 that are concave toward the positive electrode body region 1112, and the positive tab concave region 1220 and the first concave region 1240 are separated by the positive electrode body region 1112, where the positive tab concave region 1220 matches the positive tab recess 122 in position, and the first concave region 1240 matches the first empty recess 124 in position;
on at least one side surface of the positive current collector membrane 111, the positive conductive adhesive layer 120 is attached to at least a part of the positive electrode body region 1112 by using the first boundary line 1000 as a coating boundary;
on at least one side surface of the positive current collector membrane 111 with the positive conductive adhesive layer 120, a positive electrode active pre-coating layer 1402 is attached, so that the positive electrode active pre-coating layer 1402 covers the positive electrode body region 1112, the positive tab concave region 1220 and the first concave region 1240;
a portion of the positive electrode active pre-coating layer 1402 covering the positive tab concave region 1220 and the first concave region 1240 is removed, and a surface of the corresponding positive current collector membrane is exposed to obtain a positive electrode sheet to be die-cut, where a remaining portion of the positive electrode active pre-coating layer 1402 corresponds to the positive electrode active material layer 140, and a portion of the positive current collector membrane covered by the positive electrode active material layer 140 corresponds to the positive current collector layer 110; and
die-cutting processing is performed on the positive electrode sheet to be die-cut according to the first boundary line 1000 to form the positive electrode sheet 100, where die-cutting processing is performed on the positive electrode sheet to be die-cut according to the first boundary line 1000, including: a corresponding contour of a region of the positive electrode active material layer 140 other than the positive tab concave region 1220 is die-cut, in the positive tab concave region 1220, contours of two side edges of the positive tab recess 122 and the positive tab 130 connected to the positive electrode current collector layer 110 are die-cut, and the first empty recess 124 in the first concave region 1240 is die-cut according to the first boundary line 1000.

In the process of manufacturing the positive electrode sheet including the positive tab, before the positive electrode active pre-coating layer is coated, the conductive adhesive layer having the concave region is disposed on the positive current collector membrane, so that on the one hand, the bonding force and conductivity between the positive electrode active material layer and the positive current collector membrane may be improved, and on the other hand, when the positive electrode active material layer is introduced, the positive electrode active pre-coating layer may cover the concave region together, and the positive active material in the concave region may be selectively removed easily by using the difference in the bonding force of the positive electrode active pre-coating layer to the positive current collector membrane and the conductive adhesive layer, thereby exposing the surface of the positive current collector membrane at the corresponding position, and then the positive tab may be die-cut in the concave region by the die-cutting processing. The conductive adhesive layer may improve the bonding force and conductivity between the positive electrode active material layer and the positive electrode current collector membrane, and is beneficial to forming a neat edge contour when the positive tab is die-cut, which can reduce powder falling of the positive electrode active material, thereby improving the production yield of the solid-state cell and the solid-state battery, and may also improve the cycle performance of the prepared solid-state and solid-state battery. In the manufactured positive electrode sheet, the positive tab may be bent inward into the positive tab recess, thereby improving the space occupancy ratio of the positive electrode active material layer and improving the volumetric energy density of the solid-state cell and the solid-state battery. In addition, the positive tab recess in which the positive tab is located can also provide a protective effect for the positive tab, thereby reducing the risk of breakage of the positive tab.

The negative electrode active material layer in the negative electrode sheet may be prepared by a dry method.

Taking the dry method as an example, the constituent material of the negative electrode active material layer may be uniformly mixed and then rolled to form a negative self-supporting sheet, and then the negative self-supporting sheet is attached to a negative current collector membrane (such as a copper foil) with a conductive adhesive layer, and hot rolled to obtain a negative electrode sheet. A non-limiting example of the hot rolling temperature is 160°C to 180°C.

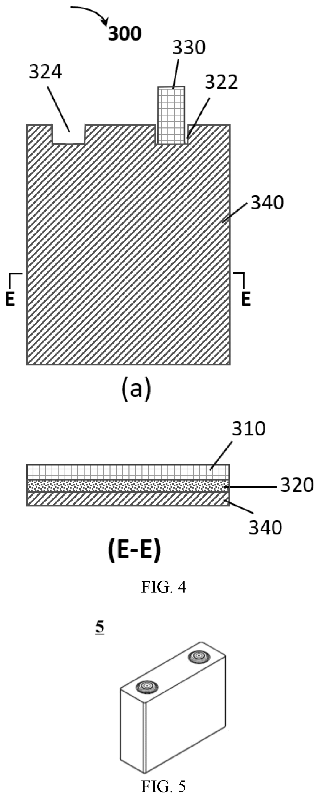

In some implementations, the negative electrode sheet including the negative tab is prepared by a method including the following steps (referring to FIG. 2 (b) and FIG. 4, the negative electrode sheet is also a negative electrode sheet including a conductive adhesive layer):
a negative electrode body region 3112 and a negative electrode inactive region 3110 that are adjacent to each other are identified by a second boundary line 3000 on a surface of a negative electrode current collector membrane 311, the second boundary line 3000 extending in a width direction of the negative electrode current collector membrane 311 in a concavely recessed configuration, so that the negative electrode inactive region 3110 includes a negative tab concave region 3220 and a second concave region 3240 that are concave toward the negative electrode body region 3112, and the negative tab concave region 3220 and the second concave region 3240 are separated by the negative electrode body region 3112, where the negative tab concave region 3220 matches the negative tab recess 322 in position, and the second concave region 3240 matches the second empty recess 324 in position;
on at least one side surface of the negative electrode current collector membrane 311, the negative electrode conductive adhesive layer 320 is attached to at least a part of the negative electrode body region 3112 by using the second boundary line 3000 as a coating boundary;
on at least one side surface of the negative current collector membrane 311 with the negative conductive adhesive layer 320, a negative active pre-coating layer 3402 is attached, so that the negative active pre-coating layer 3402 covers the negative body region 3112, the negative tab concave region 3220 and the second concave region 3240;
a portion of the negative active pre-coating layer 3402 covering the concave region 3220 and the second concave region 3240 is removed, and a surface of the corresponding negative current collector membrane is exposed to obtain a negative electrode sheet to be die-cut, where a remaining portion of the negative active pre-coating layer 3402 corresponds to the negative electrode active material layer 340, and a portion of the negative current collector membrane 310 covered by the negative electrode active material layer corresponds to the negative current collector layer 340; and
die-cutting processing is performed on the negative electrode sheet to be die-cut according to the second boundary line 3000 to form the negative electrode sheet 300, where the die-cutting processing is performed on the negative electrode sheet to be die-cut according to the second boundary line 3000, including: a corresponding contour of a region of the negative electrode active material layer 340 other than the negative tab concave region 3220 is die-cut, in the negative tab concave region 3220, edge contours of two sides of the negative tab recess 322 and the negative tab 330 connected to the negative electrode current collector layer 310 are die-cut, and the second empty recess 324 in the second concave region 3240 is die-cut according to the second boundary line 3000.

In the process of manufacturing the negative electrode sheet including the negative tab, before the negative active pre-coating layer is coated, the conductive adhesive layer having the concave region is disposed on the negative current collector membrane, so that on the one hand, the bonding force and conductivity between the negative electrode active material layer and the negative current collector membrane may be improved, and on the other hand, when the negative electrode active material layer is introduced, the negative active pre-coating layer may cover the concave region together, and the negative active material in the concave region may be selectively removed easily by using the difference in the bonding force of the negative active pre-coating layer to the negative current collector membrane and the conductive adhesive layer, thereby exposing the surface of the negative current collector membrane at the corresponding position, and then the negative tab may be die-cut in the concave region by the die-cutting processing. The conductive adhesive layer may improve the bonding force and conductivity between the negative electrode active material layer and the negative electrode current collector membrane, and is beneficial to forming a neat edge contour when the negative tab is die-cut, which may reduce the powder falling of the negative electrode active material, thereby improving the production yield of the solid-state cell and the solid-state battery, and can also improve the cycle performance of the prepared solid-state cell and solid-state battery. In the manufactured negative electrode plate, the negative tab may be bent inward into the negative tab recess, thereby improving the space occupancy ratio of the negative electrode active material layer and improving the volumetric energy density of the solid-state cell and the solid-state battery. In addition, the negative tab recess in which the negative tab is located can also provide a protective effect for the negative tab, thereby reducing the risk of breakage of the negative tab.

The method of coating the conductive adhesive layer in the process of manufacturing the electrode sheet may be a dry method, which may be used to coat the positive conductive adhesive layer in the process of manufacturing the positive electrode sheet and coat the negative conductive adhesive layer in the process of manufacturing the negative electrode sheet. The conductive adhesive layer may be formed on the current collector layer by using a hot melt dispensing machine (such as ET-420D). For example, the dispensing temperature may be 150°C to 180°C. A hot-melt extrusion process may also be used, the width and thickness are controlled by a nozzle through single-screw extrusion molding, and the hot-melt temperature may be 150°C to 180°C, but is not limited thereto. Non-limiting examples of the dispensing temperature or the hot-melting temperature include 160°C, 170°C, 180°C, and the like, and may also be selected from a range formed by any two of the foregoing temperatures.

The solid electrolyte membrane may be manufactured by the following method, but is not limited thereto: The solid electrolyte membrane is die-cut by means of a laser cutting technology, to obtain a solid electrolyte membrane that matches the shapes of the positive electrode sheet and the negative electrode sheet, a fourth empty recess is formed at a preset position of the positive tab in the positive electrode sheet, and a third empty recess is formed at a preset position of the negative tab in the negative electrode sheet. Further, the fourth empty recess corresponds to a first composite recess for accommodating at least a part of the positive tab portion in the solid-state cell, and the third empty recess corresponds to a second composite recess for accommodating at least a part of the negative tab portion in the solid-state cell.

Without limitation, the solid electrolyte membrane may be manufactured by any suitable known method, for example, the constituent material of the solid electrolyte membrane (such as a solid electrolyte powder, but not limited thereto) may be pressed into a membrane shape under pressure to obtain the solid electrolyte membrane.

In some implementations, the manufacturing method for a solid-state cell satisfies one or more of the following features:
in the process of manufacturing the positive electrode sheet including the positive tab, on at least one side surface of the positive electrode current collector membrane, coating the positive electrode conductive adhesive layer on an entire region of the positive electrode body region by using the first boundary line as a coating boundary; and
in the process of manufacturing the negative electrode sheet including the negative tab, on at least one side surface of the negative electrode current collector membrane, the negative conductive adhesive layer is coated on the entire region of the negative body region by using the second boundary line as a coating boundary.

The increase of the coverage area of the conductive adhesive layer is also more beneficial to improving the bonding force and conductivity between the current collector layer and the electrode active material layer, which is beneficial to further improving the cycle performance of the solid-state battery.

In some implementations, the manufacturing method for a solid-state cell satisfies one or more of the following features:
in the positive electrode sheet comprising the positive tab, in a height direction of the positive electrode sheet, an extension height of the positive tab in the positive electrode sheet being greater than a height of a corresponding positive tab recess in the positive electrode sheet; and
in the negative electrode sheet including the negative tab, in a height direction of the negative electrode sheet, an extension height of the negative tab in the negative electrode sheet being greater than a height of the corresponding negative tab recess in the negative electrode sheet.

By reserving a certain extension height for the positive tab or the negative tab, it is convenient to use the positive tab or the negative tab as a soft tab to connect a rigid tab in a subsequent process.

In some implementations, the manufacturing method for a solid-state cell satisfies one or more of the following features:
in the manufactured solid-state cell, at least a part of the positive tab having a bent section in the first composite recess; and
in the manufactured solid-state cell, at least a part of the negative tab has a bent section in the second composite recess.

At least a part of the tab may be bent into the corresponding composite recess, which may greatly improve the volumetric energy density of the solid-state cell and the solid-state battery.

In some implementations, the manufacturing method for a solid-state cell satisfies one or more of the following features:
in the positive electrode sheet including the positive tab, in a width direction of the positive electrode sheet, a width of the positive tab being less than a width of the corresponding positive tab recess; and
in the negative electrode sheet comprising the negative tab, in a width direction of the negative electrode sheet, a width of the negative tab being less than a width of the corresponding negative tab recess.

In some implementations, the manufacturing method for a solid-state cell satisfies one or more of the following features:
in the positive electrode sheet including the positive tab, in the width direction of the positive electrode sheet, a gap being formed between the positive tab and each of the two side edges of the positive tab recess; and
in the negative electrode sheet including the negative tab, in the width direction of the negative electrode sheet, a gap being formed between the negative tab and each of the two side edges of the negative tab recess.

By reserving certain gaps at the tab recesses for the edges of the two sides of the corresponding tabs, appropriate movement spaces may be reserved for the positive and negative tabs, and the positive and negative tabs may also be bent into the corresponding composite recesses more conveniently.

In some implementations, the required number of positive electrode sheets is multiple; and the required number of the negative electrode sheets matches the required number of the positive electrode sheets.

When there are a plurality of positive electrode sheets are used to assemble the solid-state cell, and correspondingly, a plurality of negative electrode plates are used, the laminated structure at this time corresponds to a multi-layer laminated structure, and the foregoing design of the structure of the cell active expansion region is used, which is beneficial to gaining more volumetric energy density at the tab space.

In some implementations, the plurality of positive electrode sheets includes the positive tabs; and the plurality of negative electrode sheets include the negative tabs.

When the plurality of positive electrode sheets all include the positive tab and the plurality of negative electrode sheets all include the negative tab, it is more beneficial to reducing the waste of space in the housing caused by the lamination of the plurality of tabs.

In some implementations, the manufacturing method for a solid-state cell may further includes step S800: a rigid tab is adapted.

Without limitation, the rigid tab may be adapted in a manner including but not limited to the following: welding a plurality of positive tabs of the positive tab portion into positive soft tabs, and adapting aluminum rigid tabs; and welding the plurality of negative tabs of the negative tab portion into a negative soft tabs, and adapting nickel rigid tabs.

In some implementations, the manufactured solid-state cell is the solid-state cell described in the first aspect of the present application.

In a third aspect of the present application, provided is a solid-state battery, including at least one of the solid-state cell described in the first aspect of the present application and the solid-state cell manufactured by the manufacturing method for a solid-state cell descried in the secondary aspect of the present application.

In some embodiments, the solid-state battery is an all-solid-state battery.

In the present application, unless otherwise specified, the "all-solid-state battery" refers to a solid-state battery in which the electrolyte in the battery is a solid electrolyte, and in this case, the positive electrode layer, the negative electrode layer and the electrolyte part are all solid materials, and the battery is not provided with a liquid electrolyte, and thus may be referred to as an "all-solid-state battery".

The solid-state battery including the solid-state cell described above increases the volume of the electrode body at the height of the tab, improves the space occupancy ratio of the electrode active material layer, and may greatly improve the volumetric energy density. Further, disposing the conductive adhesive layer may improve the bonding force and conductivity between the electrode active material layer and the current collector layer, which is beneficial to forming a tab recess with a neat edge when the tab is die-cut, may reduce the powder falling of the electrode active material, is beneficial to improving the cycle performance of the solid-state battery, and is also beneficial to reducing the risk of internal short circuit, and may improve the reliability and production yield of the battery.

The following describes the positive electrode layer and positive electrode sheet.

The positive electrode layer in the solid-state cell may be provided by one or more of a positive electrode sheet including a conductive adhesive layer and a positive electrode sheet not including a conductive adhesive layer. In some exemplary solid-state cells, at least one positive electrode layer includes a conductive adhesive layer. Unless otherwise specified, the conductive adhesive layer in the positive electrode layer may be denoted as a positive conductive adhesive layer.

The positive electrode sheet including the conductive adhesive layer may be provided by the positive electrode sheet in the second aspect of the present application.

The positive electrode sheet without the conductive adhesive layer may be manufactured by a dry method or a wet method. For example, the membrane may be formed by the dry method. For another example, wet coating and drying may be performed to form a membrane.

In some implementations, the positive electrode sheet includes a positive electrode current collector and a positive electrode active material layer disposed on at least one surface of the positive electrode current collector.

In another aspect of the present application, provided is a positive electrode sheet including a conductive adhesive layer, which includes a positive current collector layer and a positive electrode active material layer disposed on at least one surface of the positive current collector layer; at an edge of at least one side in the height direction of the positive electrode sheet, the positive electrode sheet is provided with a positive tab recess and a first empty recess; and at least one positive electrode sheet further includes a positive tab connected to the positive electrode current collector layer and a conductive adhesive layer located between the positive electrode current collector layer and the positive electrode active material layer, the conductive adhesive layer is denoted as a positive electrode conductive adhesive layer, the positive tab is connected to a bottom of the positive tab recess of the corresponding positive electrode sheet, and the positive electrode conductive adhesive layer at least covers a die-cut edge region of the positive tab recess. Reference may also be made to the context of the present application.

In the present application, unless otherwise specified, the positive electrode sheet at least includes a positive electrode active material layer.

In the present application, unless otherwise specified, the positive electrode active material layer at least includes positive electrode active particles, and usually further includes positive electrode electrolyte particles.

In the present application, unless otherwise specified, the "positive active particles" refer to particles containing a positive electrode active substance, which has the ability to reversibly deintercalate and intercalate active ions.

In the present application, unless otherwise specified, the "positive electrode electrolyte particles" and the "positive electrode solid electrolyte" have the same meaning and may be used interchangeably, which refers to a solid electrolyte that may be used in the positive electrode layer. The positive electrode electrolyte particles may play a role of enhancing the ion conductivity of the positive electrode layer and reducing the interface resistance, and can promote the charge transfer efficiency between the positive electrode active material and the outside and the sufficient release of the capacity.

In some implementations, the positive electrode active substance may be a positive electrode active substance for a battery known in the art. As a non-limiting example, the positive electrode active material may include one or more of the following materials: olivine-structured lithium-containing phosphate, lithium transition metal oxide, and their respective modified compounds. However, the present application is not limited to these materials, and another conventional material that can be used as a positive electrode active material of a battery may also be used. These positive electrode active materials may be used alone or in combination of two or more thereof. Examples of the lithium transition metal oxide may include, but is not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of the olivine-structured lithium-containing phosphate may include, but are not limited to, one or more of lithium iron phosphate, a lithium iron phosphate and carbon composite, lithium manganese phosphate, a lithium manganese phosphate and carbon composite, lithium iron manganese phosphate, and a lithium iron manganese phosphate and carbon composite. Non-limiting examples of the lithium cobalt oxide may include LiCoO₂. Non-limiting examples of the lithium nickel oxide may include LiNiO₂. Non-limiting examples of the lithium manganese oxide may include LiMnO₂ and LiMnO₂O₄. Non-limiting examples of the lithium nickel cobalt manganese oxide may include LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), and LiNi_{0.8}Co_{0.1}Mn_{0.1}O₂ (also abbreviated as NCM₈₁₁). Non-limiting examples of the lithium nickel cobalt aluminum oxide may include LiNi_{0.80}Co_{0.15}Al_{0.05}O₂. An example of the lithium iron phosphate is, for example, LiFePO₄ (also abbreviated as LFP). An example of the lithium manganese phosphate is, for example, LiMnPO₄.

Without limitation, a weight percentage of the positive active particles or the positive electrode active substance in the positive electrode active material layer may be ≥70wt%, further may be ≥80wt%, still further may be ≥90wt%, further may be 70wt% to 99wt%, optionally 80wt% to 95wt%.

Without limitation, a weight percentage of the positive electrolyte particles in the positive electrode active material layer may be 0.1wt% to 30wt%, and optionally 5wt% to 20wt%.

In some implementations, the positive electrode active material layer includes positive electrode electrolyte particles. Without limitation, a weight percentage of the positive electrolyte particles in the positive electrode active material layer may be 0.1wt% to 30wt%, and optionally 5wt% to 20wt%.

In some implementations, the positive electrode active material layer includes positive electrode active particles and positive electrode electrolyte particles.

In some implementations, the positive electrode active material layer includes a conductive agent (may be denoted as a positive electrode conductive agent). As a non-limiting example, the positive electrode conductive agent may be a carbon conductive agent. Without limitation, the carbon conductive agent may include one or more of superconducting carbon, acetylene black, carbon black, Ketjen black, a carbon dot, a carbon nanotube, graphene, and a carbon nanofiber. In some implementations, the positive electrode conductive agent may include, but is not limited to, one or more of SP, KS-6, acetylene black, Ketjen black ECP with a branched structure, SFG-6, a vapor grown carbon fiber VGCF, a carbon nanotube (CNTs), graphene, and the like. Without limitation, the weight percentage of the conductive agent in the positive electrode active material layer may be 0wt% to 10wt%, further may be 0wt% to 8wt%, further may be 0wt% to 5wt%, and further may be 0.1wt% to 3wt%, based on the total weight of the positive electrode active material layer. When the positive electrode active material layer is manufactured into the positive electrode active material layer by the dry method, a positive electrode conductive agent may be disposed in the positive electrode material, which may improve the electron conductivity of the positive electrode active material layer.

In some implementations, the positive electrode active material layer optionally includes a binder (may be denoted as a positive electrode binder). As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. Generally, the weight percentage of the positive electrode binder in the positive electrode active material layer may be 0wt% to 10wt%, further may be 0wt% to 8wt%, still further may be 0.1wt% to 5wt%, and still further may be 1wt% to 5wt%, based on the total weight of the positive electrode active material layer. When the positive electrode material is manufactured into a positive electrode slurry by a wet method and then manufactured into a positive electrode active material layer, a positive electrode binder may be disposed in the positive electrode slurry, which may assist in membrane formation and is also beneficial to promoting the formation of a good electrical contact network between active particles of the positive electrode active material layer.

Without limitation, the positive electrode active material layer may include positive electrode active particles, positive electrode electrolyte particles, a positive electrode conductive agent, and a positive electrode binder. The type and content of each component may refer to the context of the present application.

As a non-limiting example, the positive electrode current collector has two surfaces opposite to each other in its own thickness direction, and the positive electrode active material layer is arranged on either one or both of the two opposite surfaces of the positive electrode current collector.

In some embodiments, the positive electrode current collector may use a metal foil or a composite current collector. For example, an aluminum foil can be used as the metal foil. In the positive electrode current collector, the composite current collector may include a polymer material base layer and a metal layer formed on at least one surface of the polymer material base layer. In the positive electrode current collector, the composite current collector may be obtained by forming a metal material on a polymer material base layer. In the positive electrode current collector, a non-limiting example of the metal material may include one or more of aluminum, an aluminum alloy, nickel, a nickel alloy, titanium, a titanium alloy, silver, a silver alloy, or the like. In the positive electrode current collector, a non-limiting example of the polymer material base layer may include one or more of polypropylene (PP), polyethylene terephthalate (PET), polybutylene terephthalate (PBT), polystyrene (PS), and polyethylene (PE).

In some implementations, the positive electrode sheet excluding the conductive adhesive layer may be manufactured by the following method: The above components for manufacturing the positive electrode sheet, such as the positive electrode active particles, the positive electrode electrolyte particles, the positive electrode conductive agent, the positive electrode binder and any other components, are mixed in a dry state, and then the mixed materials are heated, pressed, and kneaded into an agglomerated material, and hot rolling is performed to form a self-supporting positive electrode sheet, and the self-supporting positive electrode sheet is compounded with the positive electrode current collector by hot rolling, and the self-supporting positive electrode sheet may be compounded on at least one side (single side or double sides) of the positive electrode current collector to obtain the positive electrode sheet. Without limitation, a double planetary mixer may be used for dry mixing. Without limitation, kneading under heating and pressure may be performed using an internal mixer. Without limitation, the temperature for hot rolling may be 75°C to 85°C, further such as 78°C, 80 °C, and 82°C. The method for assembling a solid-state battery by means of the positive electrode sheet may be suitable for industrial mass production.

In some implementations, the positive electrode sheet excluding the conductive adhesive layer may be manufactured by the following method: The above components for manufacturing the positive electrode sheet, such as the positive electrode active particles, the positive electrode electrolyte particles, the positive electrode active conductive agent, the positive electrode binder, and any other components are dispersed in a solvent to form a positive electrode slurry. Further, the positive electrode slurry is coated on at least one side surface of the positive current collector, followed by processes such as drying and cold pressing, to obtain the positive electrode sheet. The cold pressing may be performed using a cold rolling mill. The type of the organic solvent in the positive electrode slurry may include one or more of p-xylene, trimethylbenzene, butyl butyrate, heptane, and the like, and may further be p-xylene. The surface of the positive electrode current collector that is coated with the positive electrode slurry may be either a single surface or both surfaces of the positive electrode current collector. The solid content of the positive electrode slurry may be 40wt% to 80wt%. The viscosity of the positive electrode slurry at room temperature may be adjusted to 5000 mPa·s to 25000 mPa·s. During coating of the positive electrode slurry, calculated by a single-side coating weight on the positive electrode current collector, the coating density per unit area on a dry weight basis (excluding the solvent) may be 15 milligrams/square centimeter (mg/cm²) to 35 mg/cm², which is not limited thereto. The compaction density of the positive electrode sheet may be 3.0 g/cm³ to 3.6 g/cm³, and optionally 3.3 g/cm³ to 3.5 g/cm³.

As used herein, the "compaction density" has the meaning well-known in the art and is one reference index of the energy density of a material. In the present application, unless otherwise specified, the compaction density of the electrode layer refers to the ratio of the mass of the electrode active material layer to the volume thereof. The compaction density of the positive electrode layer or the positive electrode sheet refers to the ratio of the mass of the positive electrode active material layer to the volume thereof. The compaction density of the negative electrode layer of the negative electrode sheet refers to the ratio of the mass of the negative electrode active material layer to the volume thereof.

The composition of the positive electrode active material layer in the positive electrode sheet including the conductive adhesive layer may refer to the non-solvent component of the positive electrode active material layer in the positive electrode sheet not including the conductive adhesive layer, but is not limited thereto.

The following describes the negative electrode layer and negative electrode sheet.

The negative electrode layer in the solid-state cell may be provided by one or more of a negative electrode sheet including a conductive adhesive layer and a negative electrode sheet not including a conductive adhesive layer. In some exemplary solid-state cells, at least one of the negative electrode layers includes a conductive adhesive layer. Unless otherwise specified, the conductive adhesive layer in the negative electrode layer may be denoted as a negative conductive adhesive layer.

The negative electrode sheet including the conductive adhesive layer may be provided by the negative electrode sheet in the second aspect of the present application.

In another aspect of the present application, provided is a negative electrode sheet, including a negative electrode current collector layer and a negative electrode active material layer located on at least one side of the negative electrode current collector layer; at an edge of at least one side in the height direction of the negative electrode sheet, the negative electrode sheet is provided with a negative tab recess and a second empty recess; at least one negative electrode sheet further includes a negative tab connected to the negative current collector layer and a conductive adhesive layer located between the negative current collector layer and the negative electrode active material layer, the conductive adhesive layer is denoted as a negative conductive adhesive layer, the negative tab is connected to a bottom of the negative tab recess of the corresponding negative electrode sheet, and the negative conductive adhesive layer at least covers a die-cut edge region of the negative tab recess.

The negative electrode sheet without the conductive adhesive layer may be manufactured by a dry method or a wet method. For example, the membrane may be formed by the dry method. For another example, wet coating film formation may be performed.

In the present application, unless otherwise specified, the negative electrode sheet at least includes a negative electrode active material layer.

In the present application, unless otherwise specified, the negative electrode active material layer at least includes negative electrode active particles.

In the present application, unless otherwise specified, the "negative electrode active particles" refer to particles containing the negative electrode active substance, which is capable of reversibly intercalating and deintercalating active ions.

In some implementations, the negative electrode sheet includes a negative electrode active material layer that includes negative electrode active particles, and the negative electrode active particles include a negative electrode active substance.

Without limitation, the weight percentage of the negative electrode active particles or the negative electrode active substance in the negative electrode active material layer may be ≥80wt%, and further may be ≥90wt%.

In some implementations, the negative electrode active substance may be a negative electrode active substance well-known in the art for batteries. As a non-limiting example, the positive electrode active substance may include one or more of the following materials: one or more of elemental silicon, elemental tin, a silicon-carbon negative electrode (silicon-carbon negative electrode material), silicon monoxide, graphite, metal lithium, and the like. However, the present application is not limited to these materials or substances, and another conventional material or substance that may be used as a positive electrode active substance of a battery may also be used. These negative electrode active materials may be used alone or in combination of two or more thereof.

In some implementations, the negative electrode sheet may include a negative electrode current collector and a negative electrode active material layer that is disposed on at least one surface of the negative electrode current collector, the negative electrode active material layer including a negative electrode active substance. As a non-limiting example, the negative electrode current collector has two surfaces away from each other in an own thickness direction thereof, and the negative electrode active material layer is disposed on either one or both of the two surfaces of the negative electrode current collector away from each other. In some implementations, the negative electrode current collector may employ a metal foil or composite current collector. For example, a copper foil may be used as the metal foil. In the negative electrode current collector, the composite current collector may include a polymer material base layer and a metal layer formed on at least one surface of the polymer material base layer. In the negative electrode current collector, the composite current collector may be formed by forming a metal material on a polymer material base layer. In the negative electrode current collector, a non-limiting example of the metal material may include one or more of copper, a copper alloy, nickel, a nickel alloy, titanium, a titanium alloy, silver, a silver alloy, or the like. In the negative electrode current collector, a non-limiting example of the polymer material base material may include one or more polypropylene (PP), polyethylene terephthalate (PET), polybutylene terephthalate (PBT), polystyrene (PS), and polyethylene (PE).

In some implementations, the negative electrode active material layer optionally includes a conductive agent (may be denoted as a negative electrode conductive agent). Without limitation, the negative electrode conductive agent may include one or more of superconducting carbon, acetylene black, carbon black, Ketjen black, a carbon dot, a carbon nanotube, graphene, and a carbon nanofiber. Without limitation, a weight percentage of the negative electrode conductive agent in the negative electrode active material layer may be 0 wt% to 15 wt%, further optionally 0 wt% to 10 wt%, and still further optionally 0 wt% to 5 wt%.

In some implementations, the negative electrode active material layer optionally includes a binder (denoted as a negative electrode binder). As a non-limiting example, the negative electrode binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS). Without limitation, the weight percentage of the negative electrode binder in the negative electrode active material layer may be 0 wt% to 10 wt%, further may be 0 wt% to 5 wt%, still further may be 1 wt% to 5 wt%, and still further optionally may be 1 wt% to 3 wt%.

In some implementations, the negative electrode active material layer optionally includes other auxiliary agents, for example, a thickening agent (such as sodium carboxymethyl cellulose (CMC-Na)). The weight percentage of other auxiliary agents in the negative electrode active material layer may be 0 wt% to 15 wt%, further optionally 0 wt% to 10 wt%, still further optionally 0 wt% to 5 wt%, still further optionally 0 wt% to 3 wt%, and still further optionally 0 wt% to 2 wt%.

In some implementations, the negative electrode sheet excluding the conductive adhesive layer may be manufactured by the following method: The above components for manufacturing the negative electrode sheet, such as the negative electrode active particles, the negative electrode conductive agent, and the negative electrode binder, and any other components are dispersed in a solvent (a non-limiting example of the solvent is, for example, N-methylpyrrolidone) to form a negative electrode slurry. Further, the negative electrode slurry is coated on at least one side surface of the negative current collector, followed by processes such as drying and cold pressing, to obtain the negative electrode sheet. The cold pressing may be performed using a cold rolling mill. The surface of the negative electrode current collector that is coated with the negative electrode slurry may be either a single surface or both surfaces of the negative electrode current collector. The solid content of the negative electrode slurry may be 30 wt% to 70 wt%, and optionally 40 wt% to 60 wt%. The viscosity of the negative electrode slurry at room temperature may be adjusted to 2,000 mPa·s to 10,000 mPa·s, and optionally 3,000 mPa·s to 10,000 mPa·s. During coating of the negative electrode slurry, calculated by a single-side coating weight, the coating density per unit area on a dry weight basis (excluding the solvent) may be 1.5 mg/m² to 22 mg/m², which is not limited thereto. The compaction density of the negative electrode sheet may be 1.0 g/cm³ to 2.0 g/cm³, and optionally 1.0 g/cm³ to 1.8 g/cm³.

The composition of the negative electrode active material layer in the negative electrode sheet including the conductive adhesive layer may refer to the non-solvent component of the negative electrode active material layer in the negative electrode sheet without the conductive adhesive layer, but is not limited thereto.

The following describes the solid electrolyte portion and solid electrolyte layer.

The definition of the solid electrolyte portion may refer to the above. The solid electrolyte portion includes at least one solid electrolyte layer.

The solid electrolyte layer plays a role of conducting ions between the positive electrode layer and the negative electrode layer, and may further isolate the positive electrode layer and the negative electrode layer, to mainly prevent the positive electrode and the negative electrode from being short-circuited.

It may be understood that the solid electrolyte layer includes a solid electrolyte. The solid electrolyte in the solid electrolyte layer may be a solid electrolyte known in the art to be usable for a solid-state battery.

The types of solid electrolytes present in different membrane layers of the solid-state battery may be the same or different. For example, the solid electrolytes in the positive electrode electrolyte particles and the solid electrolyte layer may be the same or different.

As a non-limiting example, the solid electrolyte may independently include one or more of the following materials: one or more of a sulfide-based solid electrolyte, a halide-based solid electrolyte, an oxide-based solid electrolyte, a polymer-based solid electrolyte, and the like.

As another non-limiting example, the solid electrolyte may each independently include, but is not limited to, one or more of an oxide-based solid electrolyte, a sulfide-based solid electrolyte, and a halide-based solid electrolyte. In some examples, the solid electrolyte may each independently include, but is not limited to, one or more of an Argyrodite-type sulfide electrolyte and a halide electrolyte. Non-limiting examples of the oxide-based solid electrolyte may include a LISICON-type oxide electrolyte (e.g.,γ-Li₃PO₄, a NASICON-type oxide electrolyte (e.g., Li)₁₊ₓAlₓGe₂₋ₓ(PO₄)₃, Li₁₊ₓAlₓTi₂₋ₓ(PO₄)₃Li, and the like., 0≦x≦1), a Garnet type (e.g., Li₇La₃Zr₂O₁₂ Perovskite type oxide electrolyte (e.g., Li)₃ₓLa_{2/3-x}TiO₃ and the like, 0≤x≤0.5). Non-limiting examples of the sulfide-based solid electrolyte may include one or more of Li₁₀GeP₂S₁₂, Li₂S-P₂S₅, Argyrodite-type (e.g., Li₆PS₅Cl, Li_{5.5}PS_{5.5}Cl_{1.5}, and the like), and the like. Non-limiting examples of the halide-based solid electrolyte may include one or more of Li₃InCl₆, Li₃YCl₆, Li₃ScCl₆, Li₃ErCl₆, Li₂ZrCl₆, and the like.

In some implementations, the solid electrolyte layer may be provided by pressing a solid electrolyte material into a solid electrolyte membrane.

In some implementations, the thickness of the solid electrolyte layer may be 0.1 µm to 1000 µm, optionally 10 µm to 100 µm, 100 µm to 800 µm, 500 µm to 800 µm, or the like.

Without limitation, the positive electrode sheet, the solid electrolyte membrane and the negative electrode sheet may be sequentially laminated, the solid electrolyte membrane is placed between the positive electrode sheet and the negative electrode sheet, and the solid-state cell is prepared by rolling. The rolling method may be cold rolling or hot rolling. A non-limiting example of the temperature at which the hot rolling is performed is 180°C.

The solid-state battery includes at least one solid-state battery cell. The solid-state battery may include one or a plurality of solid-state battery cells.

In the present application, unless otherwise specified, the "solid-state battery cell" refers to a basic unit capable of implementing mutual conversion between chemical energy and electrical energy, and the components are all solid. In some implementations, the solid-state battery cell may be an all-solid battery cell.

In the present application, unless otherwise specified, the "all-solid-state battery cell" refers to a solid-state battery cell in which the electrolyte in the battery is a solid electrolyte, and in this case, the positive electrode layer, the negative electrode layer and the electrolyte portion are all solid materials, and the battery cell is not provided with a liquid electrolyte, and thus may be referred to as an "all-solid-state battery cell".

Without limitation, the solid-state battery cell, which may be an all-solid-state battery cell, may include a positive electrode layer, a solid electrolyte layer, and a negative electrode layer, the solid electrolyte layer being located between the positive electrode layer and the negative electrode layer. In a charging and discharging process of the battery, active ions are intercalated and deintercalated back and forth between a positive electrode layer and a negative electrode layer. The solid electrolyte layer plays a role of conducting ions between the positive electrode layer and the negative electrode layer, and may further isolate the positive electrode layer and the negative electrode layer, to mainly prevent the positive electrode and the negative electrode from being short-circuited.

In some implementations, the solid-state battery cell 5 includes a solid-state cell 52.

In some implementations, the solid-state cell is an all-solid-state cell.

In some implementations, the solid-state cell 52 (which may be an all-solid-state cell) includes a positive electrode layer, a solid electrolyte layer, and a negative electrode layer that are sequentially laminated.

Unless otherwise stated, the solid-state cell satisfies at least one of the following features:
at least one positive electrode layer including the positive electrode sheet including the conductive adhesive layer described in the second aspect of the present application; and
at least one negative electrode layer including the negative electrode sheet including the conductive adhesive layer described in the second aspect of the present application.

In some implementations, the solid-state battery may include an outer package. The outer package may be configured to package the solid-state cell described above.

In some implementations, the outer package of the solid-state battery may be a hard casing, for example, a hard plastic casing, an aluminum casing, or a steel casing. The outer package of the solid-state battery may also be a pouch, such as a bag-type pouch. A material of the pouch may be plastic, and further, non-limiting examples of the plastic may include one or more of polypropylene, polybutylene terephthalate, and polybutylene succinate.

The shape of the solid-state battery cell is not particularly limited in the present application, and may be a cylindrical shape, a square shape, or any other shape. For example, FIG. 5 shows a solid-state battery cell 5 with a square structure as an example.

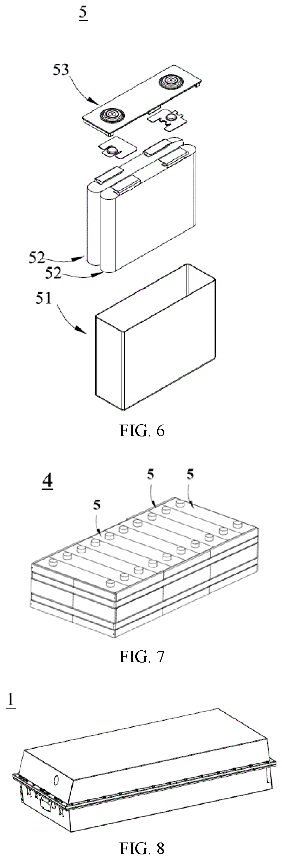

In some implementations, referring to FIG. 6, the outer package may include a housing 51 and a cover plate 53. The housing 51 may include a bottom plate and side plates connected to the bottom plate, and the bottom plate and the side plates define an accommodating chamber. The housing 51 is provided with an opening communicating with the accommodating cavity, and the cover plate 53 can cover the opening to close the accommodating cavity. The solid-state cell 52 is packaged in the accommodating cavity. There may be one or more solid-state cells 52 included in the solid-state battery cell 5, and those skilled in the art may perform selection based on actual requirements.

The solid-state battery may be a battery module 4 or a battery pack 1.

The battery module at least includes one solid-state battery cell. There may be one or more battery cells included in the battery module, and those skilled in the art may select a proper quantity based on an application and the capacity of the battery module.

FIG. 7 shows a battery module 4 as an example. Referring to FIG. 7, in the battery module 4, a plurality of solid-state battery cells 5 may be arranged sequentially in the length direction of the battery module 4. Certainly, the battery cells may alternatively be arranged in any other manner. Further, the plurality of solid-state battery cells 5 may be fastened by using fasteners.

Optionally, the battery module 4 may further include a casing having an accommodating space in which the plurality of solid-state battery cells 5 are accommodated.

In some embodiments, the above battery modules may also be assembled into a battery pack, and there may be one or more battery modules included in the battery pack, and those skilled in the art may select a proper quantity according to the application and capacity of the battery pack.

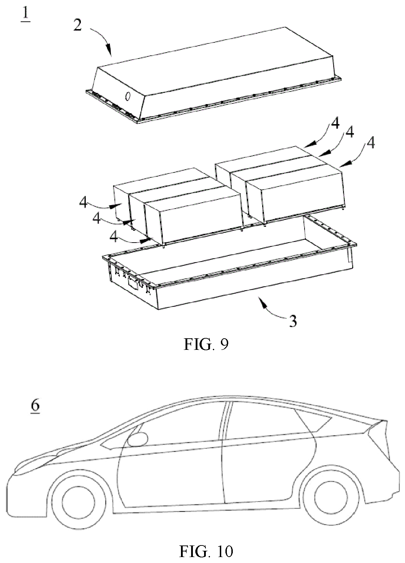

FIG. 8 and FIG. 9 show a battery pack 1 as an example. Referring to FIG. 8 and FIG. 9, a battery case and a plurality of battery modules 4 arranged in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

In a fourth aspect of the present application, provided is an electric device, including at least one of the solid-state cell described in the first aspect of the present application, the solid-state cell manufactured by the manufacturing method for a solid-state cell described in the second aspect of the present application, and the solid-state cell described in the third aspect of the present application.

In some implementations, the electric device includes at least one of the solid-state batteries in the implementations provided by the present application.

Without limitation, the solid-state battery may be used as a power supply for the electric device, or as an energy storage unit for the electric device. The electric apparatus may include, but is not limited thereto, a mobile device, an electric vehicle, an electric train, a ship, a satellite, an energy storage system, and the like. The mobile device may be, for example, a mobile phone, a notebook computer, or the like. The electric vehicle may be, for example, a full electric vehicle, a hybrid electric vehicle, a plug-in hybrid electric vehicle, an electric bicycle, an electric scooter, an electric golf cart, an electric truck, an electric motorcycle, an electric tool, or the like, but is not limited thereto. The electric apparatus may also be applied to the fields of military equipment, aerospace, and the like, as well as to energy storage power systems for hydroelectric, thermal, wind, and solar power stations.

As an electric device, the solid-state battery may be selected according to use requirements of the electric device.

FIG. 10 shows an electric apparatus 6 as an example. The electric apparatus is a pure electric vehicle, a hybrid electric vehicle, a plug-in hybrid electric vehicle, or the like. In order to meet the demand for high power and high energy density of a battery by the electric device, a battery pack or a battery module may be used.

In another example, the electric apparatus may be a cell phone, a tablet computer, a notebook computer, or the like. This device is generally required to be thin and lightweight, and may use a solid-state battery as a power supply.

Examples of the present application are described below. The examples described below are illustrative only and are not to be construed as limiting the present application. In the embodiments, specific techniques or conditions are not indicated, and they are performed according to techniques or conditions described above, according to techniques or conditions described in documents in the art, or according to the specification of the product. The reagents or instruments used without specifying the manufacturer(s) are commercially available conventional products, or can be synthesized from commercially available products by a conventional mode.

In the following examples, the room temperature refers to 20°C to 30°C.

In the following examples, a solid electrolyte layer, a solid electrolyte membrane, a positive electrode current collector membrane, a positive electrode conductive adhesive layer, a positive electrode active pre-coating layer, a positive electrode active material layer, a positive electrode current collector layer, a positive electrode sheet, a negative electrode current collector membrane, a negative electrode conductive adhesive layer, a negative electrode active pre-coating layer, a negative electrode active material layer, a negative electrode current collector layer, and a negative electrode plate are described. The width direction of each solid-state cell coincides with the width direction (X direction) of the solid-state cell, the height direction of each solid-state cell coincides with the height direction (Y direction) of the solid-state cell, and the thickness direction of each solid-state cell coincides with the thickness direction (Z direction) of the solid-state cell.

In the following examples, the tab recess, the corresponding tab and the reserved empty recess are disposed at the edge of the same side of the positive electrode sheet or the negative electrode sheet in the height direction of the electrode sheet, and correspondingly, the positive tab portion and the negative tab portion are disposed on the same side of the solid-state cell in the height direction. In other examples, when the positive tab portion and the negative tab portion are disposed on different sides of the solid-state cell in the height direction, the utilization rate ψ_{Y} of the cell active expansion region in the Y direction and the two-dimensional utilization rate ψ_{A} of the cell active expansion region will be higher.

In the following examples, as a non-limiting example, the shapes and sizes of the positive tab recess, the second empty recess, the fourth empty recess and the first composite recess in the X direction and the Y direction are consistent, the shapes and sizes of the negative tab recess, the first empty recess, the third empty recess and the second composite recess in the X direction and the Y direction are consistent, and the sizes of the positive tab recess and the negative tab recess in the X direction and the Y direction are also basically the same. For each recess described above, the recess depth is equal to the recess height, the width direction of the recess coincides with the X direction, the height or depth direction of the recess coincides with the Y direction, and the thickness direction of the recess coincides with the Z direction.

In the following examples, when the positive electrode sheet and the negative electrode sheet are manufactured, after die-cutting, the width of the positive tab and the width of the negative tab are respectively slightly smaller than the width of the corresponding recess, that is, in the width direction of the electrode sheet, gaps are respectively disposed between the positive tab and the edge on one side of the corresponding tab recess and between the negative tab and the edge on the other side of the corresponding tab recess, and the gap on either side is in a range of 10 µm to 5000 µm and in a range of 0.1 mm to 1 mm. Correspondingly, in the solid-state cell, gaps are disposed between the positive tab portion and the negative tab portion and the edges of the two sides of the corresponding composite recess, and the gap on any side is in a range of 10 µm to 5000 µm and in a range of 0.1 mm to 1 mm.

In the following examples, as a non-limiting example, the height of the positive tab and the height of the negative tab are both set to 15 mm.

In the following examples, as a non-limiting example, a solid-state cell having a laminated structure is used.

In the following examples, a hot melt dispensing machine (ET-420D, EasySight Intelligent Iris) is used to dispense glue at 180°C, and a conductive adhesive layer is attached to the positive electrode current collector membrane aluminum foil or the negative electrode current collector membrane copper foil.

Unless otherwise specified, the "about" in units of micrometers (µm) or nanometers (nm) involved in the following examples is counted as follows: For values accurate to one decimal place, the fluctuation range is within ±0.05; for values between 1 and 9 accurate to the single digit, the fluctuation range is within ±0.2; and for values between 10 and 99 to the single digit, the range of variation is within ±0.5.

### I. Manufacturing of an adhesive material for the conductive adhesive layer

In Example A1, polypropylene (PP, the weight average molecular weight was about 1300 kDa), maleic anhydride (MAH), styrene-ethylene-butylene-styrene block copolymer (SEBS, the weight average molecular weight was about 600 kDa), and petroleum resin (C5) were mixed in a reaction kettle at a weight ratio of 20:4:10:10 at 160°C, and stirred in vacuum to react for 120 min to obtain a maleic anhydride-modified polypropylene resin (belonging to the polyolefin modified resin described above). The maleic anhydride-modified polypropylene, paraffin, antioxidant (thanox1726, Tianjin Rianlon),an anti-aging agent (Tinuvin326, BASF) and a carbon conductive material graphene were mixed at a mass ratio of 50:5:0.2:0.2:50, and stirred at 1200 rpm for about 60 min and at 800 rpm for about 30 min to obtain the adhesive material.

### II. Manufacturing method for a solid-state battery

A positive electrode sheet and a negative electrode sheet are manufactured respectively with reference to the structures of the steps shown in FIG. 2, FIG. 3 and FIG. 4.

### Example A1.

### 1. Preparation of a positive electrode sheet.

A positive electrode body region 1112 and a positive electrode inactive region 1110 that were adjacent to each other were identified by a first boundary line 1000 on a surface of a positive electrode current collector membrane 111, the first boundary line 1000 extending in a width direction of the positive electrode current collector membrane 111 in a concavely recessed configuration, so that the positive electrode inactive region 1110 included a positive tab concave region 1220 and a first concave region 1240 that are concave toward the positive electrode body region 1112, and the positive tab concave region 1220 and the first concave region 1240 were separated by the positive electrode body region 1112, where the positive tab concave region 1220 matched the positive tab recess 122 in position, and the first concave region 1240 matched the first empty recess 124 in position;

On the two side surfaces of the positive electrode current collector membrane 111, a conductive adhesive layer (denoted as a positive electrode conductive adhesive layer 120) was attached to the positive electrode body region 1112 by using the first boundary line 1000 as a coating boundary, and the thickness of the conductive adhesive layer might be refer to Table 2, where an adhesive material of the positive conductive adhesive layer was coated on the selected area by a hot melt dispensing machine (ET-420D), and cooled and solidified to form the conductive adhesive layer;
on the two side surfaces of the positive electrode current collector membrane 111 with the positive electrode conductive adhesive layer 120, a positive electrode self-supporting sheet was attached and hot rolled to form a positive electrode active pre-coating layer 1402, so that the positive electrode active pre-coating layer 1402 covered the positive electrode body region 1112, the positive tab concave region 1220 and the first concave region 1240;
a portion of the positive electrode active pre-coating layer 1402 covering the positive tab concave region 1220 and the first concave region 1240 is removed, and a surface of the corresponding positive current collector membrane is exposed to obtain a positive electrode sheet to be die-cut, where a remaining portion of the positive electrode active pre-coating layer 1402 corresponds to the positive electrode active material layer 140, and a portion of the positive current collector membrane covered by the positive electrode active material layer 140 corresponds to the positive current collector layer 110; and
die-cutting processing was performed on the positive electrode sheet to be die-cut according to the first boundary line 1000 to form the positive electrode sheet 100, where die-cutting processing was performed on the positive electrode sheet to be die-cut according to the first boundary line 1000, including: a corresponding contour of a region of the positive electrode active material layer 140 other than the positive tab concave region 1220 is die-cut, in the positive tab concave region 1220, contours of two side edges of the positive tab recess 122 and the positive tab 130 connected to the positive electrode current collector layer 110 are die-cut, and the first empty recess 124 in the first concave region 1240 is die-cut according to the first boundary line 1000.

In Example A1, the raw material composition of the positive electrode self-supporting sheet was as follows: LiNi_{0.8}Co_{0.1}Mn_{0.1}O₂(NCM811), a sulfide solid electrolyte Li₆PS₅Cl, a conductive agent VGCF (vapor-grown carbon fiber), and a binder polytetrafluoroethylene (PTFE) were mixed at a mass ratio of 84:12.5:2:1.5.

### 2. Manufacturing of a negative electrode sheet.

a negative electrode body region 3112 and a negative electrode inactive region 3110 that were adjacent to each other were identified by a second boundary line 3000 on a surface of a negative electrode current collector membrane 311, the second boundary line 3000 extending in a width direction of the negative electrode current collector membrane 311 in a concavely recessed configuration, so that the negative electrode inactive region 3110 included a negative tab concave region 3220 and a second concave region 3240 that were concave toward the negative electrode body region 3112, and the negative tab concave region 3220 and the second concave region 3240 were separated by the negative electrode body region 3112, where the negative tab concave region 3220 matched the negative tab recess 322 in position, and the second concave region 3240 matched the second empty recess 324 in position;
on the two side surfaces of the negative electrode current collector membrane 311, a conductive adhesive layer (which may be denoted as a negative electrode conductive adhesive layer 320) was attached to the negative electrode body region 3112 by using the second boundary line 3000 as a coating boundary, and the thickness of the conductive adhesive layer might refer to Table 2, where the adhesive material of the negative conductive adhesive layer was coated on the selected area by a hot melt dispensing machine (ET-420D), and cooled and solidified to form the conductive adhesive layer;
on the two side surfaces of the negative electrode current collector membrane 311 with the negative electrode conductive adhesive layer 320, a negative electrode self-supporting sheet was attached and hot rolled to form a negative electrode active pre-coating layer 3402, so that the negative electrode active pre-coating layer 3402 covered the negative electrode body region 3112, the negative tab concave region 3220 and the second concave region 3240;
a portion of the negative active pre-coating layer 3402 covering the concave region 3220 and the second concave region 3240 was removed, and a surface of the corresponding negative current collector membrane was exposed to obtain a negative electrode sheet to be die-cut, where a remaining portion of the negative active pre-coating layer 3402 corresponds to the negative electrode active material layer 340, and a portion of the negative current collector membrane 310 covered by the negative electrode active material layer corresponds to the negative current collector layer 340; and
die-cutting processing was performed on the negative electrode sheet to be die-cut according to the second boundary line 3000 to form the negative electrode sheet 300, where the die-cutting processing was performed on the negative electrode sheet to be die-cut according to the second boundary line 3000, including: a corresponding contour of a region of the negative electrode active material layer 340 other than the negative tab concave region 3220 is die-cut, in the negative tab concave region 3220, edge contours of two sides of the negative tab recess 322 and the negative tab 330 connected to the negative electrode current collector layer 310 are die-cut, and the second empty recess 324 in the second concave region 3240 is die-cut according to the second boundary line 3000.
where the composition of the negative self-supporting sheet was as follows: negative electrode active particles silicon powder, a sulfide solid electrolyte powder Li₆PS₅Cl, and PVDF as a binder were mixed at a mass ratio of 82:15:3.

### 3. Manufacturing of a solid electrolyte membrane.

The solid electrolyte membrane was die-cut by using a laser cutting technology, to obtain a solid electrolyte membrane that matched shapes of the positive electrode sheet and the negative electrode sheet, a fourth empty recess was reserved for the positive tab 130 in the positive electrode sheet 100, and a third empty recess was reserved for the negative tab 330 in the negative electrode sheet 300. Further, the fourth empty recess corresponds to the first composite recess 1302 for accommodating a part of the positive tab portion 1300 in the solid-state cell 52, and the third empty recess corresponds to the second composite recess 3302 for accommodating a part of the negative tab portion 3300 in the solid-state cell 52.

A manufacturing method for the solid electrolyte membrane is as follows: A sulfide electrolyte Li₆PS₅Cl powder was rolled to form a membrane, to obtain a solid electrolyte membrane.

### 4. Laminating and assembling.

The positive electrode sheets 100, the solid electrolyte membranes and the negative electrode sheets 300 were laminated according to the respective required numbers, so that the positive electrode sheets 100 and the negative electrode sheets 300 were separated by the solid electrolyte membranes, the positive tab recess 122, the fourth empty recess and the second empty recess 324 were aligned in contour and form a first composite recess 1302, and the negative tab recess 322, the third empty recess and the first empty recess 124 were aligned in contour and form a second composite recess 3302, to obtain a laminated member, where each positive electrode sheet constituted a positive electrode portion, each negative electrode sheet constituted a negative electrode portion, and each solid electrolyte membrane constituted a solid electrolyte portion; each positive tab of the positive electrode portion constitutes a soft segment 1300 of the positive tab portion, and at least a part of the soft segment 1300 of the positive tab portion was accommodated in the first composite recess 1302; and each negative tab of the negative electrode portion constitutes a soft segment 3300 of the negative tab portion, and at least a part of the soft segment 3300 of the negative tab portion was accommodated in the second composite recess 3302.

### 5. Roll processing.

The laminated member was cold-pressed to form a solid-state cell.

6. Rigid tab adapting. A plurality of positive tabs of the positive tab portion were welded into positive soft tabs, and aluminum rigid tabs were adapted; and the plurality of negative tabs of the negative tab portion were welded into a negative soft tabs, and nickel rigid tabs were adapted. The positive soft tabs were pre-bent, and at least a part of the positive soft tabs extending beyond the first composite recess into the first composite recess; and the negative soft tabs were pre-bent, and at least a part of the negative soft tabs extending beyond the second composite recess into the second composite recess.

7. Aluminum-plastic membrane encapsulation: Pit stamping was performed on an aluminum plastic membrane, the aluminum plastic membrane was placed to overlap with the solid-state cell, and the edge of the aluminum plastic membrane was encapsulated to encapsulate the solid-state cell in the accommodating cavity in the housing to obtain the solid-state battery. The height of the solid-state cell was substantially consistent with the height of the accommodating cavity in the housing.

### III. Volumetric energy density analysis

A solid-state battery is obtained by the method of the second section or a similar method.

### (I) Examples

In Example A1, the number of the positive electrode sheets in the laminated member was 5; the plurality of positive electrode layers in the solid-state cell jointly formed a positive electrode body, and the plurality of negative electrode layers in the solid-state cell jointly formed a negative electrode body. A positive tab portion included a plurality of positive tabs, corresponding to the positive tab laminate; and a negative tab portion included a plurality of negative tabs. corresponding to the negative tab laminate.

Examples A2 to A16 employed substantially the same method as Example 1, except that the cell size and/or the recess size were changed. Reference may be made to Table 1.

Example A17 employed substantially the same method as that of Example 1, except that in step (4), the number of the positive electrode sheets in the laminated member was one, the positive electrode portion only included one positive electrode layer and one positive tab, and the positive tab was used as the positive tab portion, and the aluminum rigid tab was directly adapted. The number of the negative electrode sheets in the laminate was one, the negative electrode portion only included one negative electrode layer and one negative tab, and the negative tab was used as a negative tab portion, and the nickel rigid tab was directly adapted.

### Comparative Examples a1 to a17. A conventional process without the active expansion area.

No cell active expansion region is disposed in Comparative Examples A1 to A17 are based on Examples A1 to A17. When the positive self-supporting sheet was attached in the step of manufacturing the positive electrode sheet, the height region corresponding to the positive tab recess was not covered, that is, the positive electrode active material layer was not provided in the region corresponding to the cell active expansion region in Examples A1-A17, and when the positive tab die-cutting was performed, the height of the positive tab was kept unchanged, and the region of the remaining part of the positive current collector membrane not provided with the positive electrode active material layer was cut off; when the negative self-supporting sheet was attached in the step of manufacturing the negative electrode sheet, the height region corresponding to the negative tab recess was not covered, that is, the region corresponding to the cell active expansion region of Examples A1-A17 was not provided with the negative electrode active material layer, and when the negative lug die-cutting was performed, the height of the negative tab was kept unchanged, and the region of the remaining part of the negative current collector membrane not provided with the negative electrode active material layer was cut off.

### (II) Analysis method

### 1. Volume utilization improvement rate contributed by the cell active expansion region to the solid-state battery.

Volume utilization improvement rate: may be estimated based on the area percentage of the electrode sheet active region with the cell active expansion region relative to that without the cell active expansion region.

According to the parameters in Table 1, the following formula may be used for calculation:
$Volume utilization improvement rate = \left({W}_{Δ}\times {H}_{Δ}\right) / \left({W}_{0}\times \left({H}_{0 -}{H}_{Δ}\right)\right) \times 100 %$

The analysis results may be referred to Table 1.

### 2. Utilization rate parameter of active extension area

(1) The utilization rate of the cell active expansion region in the Y direction (the height direction of the solid-state cell) may be estimated according to the following formula: ψ_{Y}=H_{Δ}/H₀×100%.
(2) The utilization rate of the cell active expansion region in the X direction (the width direction of the solid-state cell) may be estimated according to the following formula: ψ_{X}=W_{Δ}/W₀×100%.
(3) The two-dimensional utilization rate of the cell active expansion region may be estimated according to the following formula: ψ_{A}=A_{Δ}/A₀×100%, where the projection area of the solid-state cell in the Z direction (the thickness direction of the solid-state cell) is denoted as A₀, and the projection area of the cell active expansion region in the Z direction is denoted as A_{Δ}, A₀=W₀×H₀, A_{Δ}=H_{Δ}×(W₀-W_{Δ}).

### (III) Analysis results

Compared with Comparative Examples a1-a17 in which no active expansion region is disposed, the structural designs of Examples a1-a17 may significantly improve the volume utilization rate of the solid-state battery, thereby improving the volumetric energy density of the battery. In Examples A1-A16, taking the number of laminated positive electrode sheets =the number of positive electrode layers in the positive electrode body=5 as an example, it may be understood that those skilled in the art may replace the number of positive electrode layers with other required number of positive electrode layers according to the thickness of the battery, and the same or substantially the same effect of improving the volumetric energy density of the battery may be achieved, as shown in Example 17.

**Table 1.**

| No. | Cell width W₀ (mm) | Cell height H₀ (including the recess portion, not encompassing the tab portion) (mm) | Single groove width (mm) | Single recess height H_{Δ} (equal to the height of the active expansion region in the Y direction) (mm) | Total width W_{Δ} of the portion other than the recess (active expansion region) (mm) | Volume Utilization Enhancement Rate | Ψ_{Y} | Ψ_{X} | ψ_{A} |
|---|---|---|---|---|---|---|---|---|---|
| Example 1 | 50 | 100 | 5 | 0.2 | 40 | 0.16% | 0.2% | 80% | 0.16% |
| Example 2 | 200 | 100 | 5 | 0.2 | 190 | 0.19% | 0.2% | 95% | 0.19% |
| Example 3 | 50 | 50 | 5 | 0.2 | 40 | 0.32% | 0.4% | 80% | 0.32% |
| Example 4 | 50 | 100 | 5 | 0.4 | 40 | 0.32% | 0.4% | 80% | 0.32% |
| Example 5 | 200 | 100 | 5 | 0.4 | 190 | 0.38% | 0.4% | 95% | 0.38% |
| Example 6 | 50 | 100 | 5 | 0.05 | 40 | 0.04% | 0.05% | 80% | 0.04% |
| Example 7 | 50 | 100 | 5 | 1 | 40 | 0.81% | 1% | 80% | 0.80% |
| Example 8 | 200 | 100 | 5 | 0.05 | 190 | 0.05% | 0.05% | 95% | 0.05% |
| Example 9 | 200 | 100 | 5 | 1 | 190 | 0.96% | 1% | 95% | 0.95% |
| Example 10 | 500 | 100 | 10 | 0.05 | 480 | 0.05% | 0.05% | 96% | 0.05% |
| Example 11 | 1000 | 100 | 10 | 0.05 | 980 | 0.05% | 0.05% | 98% | 0.05% |
| Example 12 | 500 | 100 | 10 | 1 | 480 | 0.97% | 1% | 96% | 0.96% |
| Example 13 | 1000 | 100 | 10 | 1 | 980 | 0.99% | 1% | 98% | 0.98% |
| Example 14 | 35 | 200 | 5 | 0.2 | 25 | 0.07% | 0.1% | 71% | 0.07% |
| Example 15 | 25 | 50 | 5 | 0.5 | 15 | 0.61% | 1% | 60% | 0.60% |
| Example 16 | 25 | 50 | 5 | 1 | 15 | 1.22% | 2% | 60% | 1.20% |
| Example 17 | 50 | 100 | 5 | 0.2 | 40 | 0.16% | 0.2% | 80% | 0.16% |

In Table 1, the number of the positive electrode sheets in Examples 1-16 was 5, and the number of the positive electrode sheets in Example 17 was 1.

### IV. Battery performance test

Example B1. A solid-state cell and a solid-state battery are manufactured by the same method as in Example A17. The number of the positive electrode sheets used for manufacturing the solid-state cell is 1.

In Examples B2 to B4, a solid-state cell and a solid-state battery are manufactured by using substantially the same method as that in Example B1, and the main differences are as follows: the amount of maleic anhydride in the polyolefin modified resin was changed. Reference may be made to Table 2.

In Examples B5 to B11, a solid-state cell and a solid-state battery are manufactured by using substantially the same method as that in Example B1, and the main differences are as follows: One or more parameters of the composition and thickness of the conductive adhesive layer are different, and one or more parameters of the type and amount of the adhesive matrix and the thickness of the conductive adhesive layer are changed. Some relevant parameters may be adjusted adaptively, such as the mass ratio of the adhesive matrix to the carbon conductive material. Reference may be made to Table 2.

In Comparative Example b1, the conductive adhesive layer is not disposed, and the cell active expansion region is reserved.

The solid-state cell and the solid-state battery are manufactured by the same method as in Example B1, except that before the electrode self-supporting sheet is attached, the conductive adhesive layer is not disposed, and the electrode active pre-coating layer in each groove recess is selectively removed at the tab die-cutting stage.

In Comparative Example b2, a solid-state cell and a solid-state battery are manufactured by the same method as in Example B1, except that in the process of manufacturing the positive electrode sheet, the polyolefin modified resin in the conductive adhesive coating is replaced with the binder PTFE in the positive electrode active material layer.

In Comparative Example b3, the solid-state cell and a solid-state battery are manufactured by the same method as in Example B1, except that in the process of manufacturing the negative electrode sheet, the polyolefin modified resin in the conductive adhesive coating is replaced with the binder PVDF in the negative electrode active material layer.

Comparative Example b4: A conventional method without the cell active expansion region is adopted: Compared with Example B1, when the positive self-supporting sheet was attached in the step of manufacturing the positive electrode sheet, the height region corresponding to the positive tab recess was not covered, that is, the region corresponding to the cell active expansion region of Example B1 was not provided with the positive electrode active material layer, and when the positive lug die-cutting was performed, the height of the positive tab was kept unchanged, and the region of the remaining part of the positive current collector membrane not provided with the positive electrode active material layer was cut off; and when the negative self-supporting sheet was attached in the step of manufacturing the negative electrode sheet, the height region corresponding to the negative tab recess was not covered, that is, the region corresponding to the cell active expansion region of Examples B1 was not provided with the negative electrode active material layer, and when the negative lug die-cutting was performed, the height of the negative tab was kept unchanged, and the region of the remaining part of the negative current collector membrane not provided with the negative electrode active material layer was cut off.

### Test method:

### (I) Material

The weight-average molecular weight of the manufactured polyolefin modified resin was measured by Waters 2695 Isocratic HPLC gel chromatograph (differential refractive index detector 2141). A polystyrene solution sample with a mass fraction of 3.0 wt% was used as a reference, and a matched chromatographic column (oily: Styragel HT5 DMF7.8*300 mm+Styragel HT4) was selected. A 3.0% adhesive solution of the polyolefin modified resin was formulated with a purified N-methylpyrrolidone (NMP) solvent, and was allowed to stand for one day for later use. During test, firstly, tetrahydrofuran was sucked using a syringe to perform flushing, and the operation was performed several times. Then 5 ml of a test solution was sucked, air in the syringe was removed, and a needle tip was wiped dry. Finally, a sample solution was gradually injected into an injection port. After the reading was stable, the data was acquired to obtain the weight average molecular weight of the polyolefin modified resin.

### (II) Electrode sheet and battery

### 1. The bonding force of the conductive adhesive layer to the current collector layer and the electrode active material layer.

Sample to be tested: The positive electrode sheet and the negative electrode sheet manufactured in each example.

Test method: An electrode sheet was cut into a sample to be tested with a size of 100 mm in length and 10 mm in width, and a stainless steel plate with a width of 25 mm was taken; a double-sided tape (the width of the double-sided tape was greater than 11 mm) was attached to the stainless steel plate; the sample to be tested is attached to the double-sided adhesive tape, and the surface is rolled back and forth three times (300 mm/min) with a roller, and the mass of the roller may be 2000 g; The sample to be tested was bent at 180°, the electrode active material layer and the current collector layer of the sample to be tested were manually peeled apart by 25 mm, the sample to be tested was fixed on a tensile tester, a peeling surface was kept consistent with a force line of the tester, the tensile tester performed peeling continuously at 30 mm/min, the average value of the plateau segment of the obtained peeling force curve was taken as a peeling force F0, and a bonding force between the electrode active material layer and the current collector layer in the test sample was F=F0/width of the sample to be tested (the unit of F was: N/m).

The higher the bonding force, the stronger the bonding between the electrode active material layer and the current collector layer, the more stable the structure of the electrode sheet, and the more beneficial to improving the cycle life of the solid-state battery. In addition, the lower the powder falling risk of the electrode active material, the better the reliability of the solid-state battery.

### 2. Electrode sheet resistivity

The resistivity of the manufactured positive electrode sheet and negative electrode sheet was measured by a membrane resistance measuring instrument, with a unit of Ω·m. A sample was a small round piece with a diameter of 3 mm, each electrode sheet was sampled at three positions, two positions were tested at each position, and the average value of the six test values was calculated as a test result of the electrode sheet resistivity.

The lower the electrode sheet resistivity is, the better the conductivity of the conductive adhesive layer is when the same current collector layer and electrode active material layer are used.

The test values of the resistivity of the positive electrode sheet and the negative electrode sheet may also be regarded as the test values of the resistivity of the electrode layer in the solid-state cell.

### 3. Direct current resistance (DCR) of the battery

DCR test: At 25°C, the battery was charged at a constant current of 1/3C to 3.65V, then charged at a constant voltage of 3.65V to a current of 0.05C, and left for 5 min, and then discharged at a constant current of 1/3C for 90 min, left for 120 min, and the voltage V1 was recorded. Then, the battery was discharged at 4C for 30s, and the voltage V2 was recorded, then (V2-V1)/4C, and the DCR of the battery was obtained.

The better the conductivity of the conductive adhesive layer is, the more advantageous it is to reduce the direct current resistance of the battery.

### 4. Cycle performance of the battery

The test procedure is as follows: The assembled all-solid-state battery was first activated by charging and discharging at 0.1C for 3 cycles to obtain an initial capacity C1 of the battery, then charged and discharged at 0.33C for standard charging and discharging, and then discharged according to the standard charging and discharging rate to obtain a discharge capacity C2, the capacity retention rate of the second cycle was C2/C1×100%, and then a long-cycle test was performed from the third cycle to the 200^{th} cycle, and the cycle capacity retention rate of the corresponding cycle of the battery was calculated to be Cn/C1×100%, where n was an integer of 3 to 200. A voltage test window of the battery was 2.8 to 4.3 V vs. Li⁺/Li (potential vs Li, the active ion was Li⁺), and the battery was tested at 25±3°C, where 1C=200 mA/g.

The test results may refer to "capacity retention rate of 200 cycles, 0.33C" in Table 2.

### 5. Volumetric energy density

The cell volume of the solid-state battery was recorded as V₀.

Capacity test The battery was charged at a constant current of 1/3C to 3.65V, then charged at a constant voltage of 3.65V to a current of 0.05C, and left for 5 min, and then discharged at 1/3C to 2.5V, a capacity C0 was obtained, and a voltage plateau was denoted as U.

Then, the volumetric energy density of the battery VED=C₀×U/V₀.

### Test results and analysis

The weight-average molecular weight of the prepared maleic anhydride-modified polyolefin resin is in the range of 1300 kDa to 1500 kDa, where the weight-average molecular weight of the polyolefin modified resin in Example 1 is about 1500 kDa.

The resistivity of the prepared positive electrode sheet and negative electrode sheet is mostly less than 200 Ω·m, and further in the range of 10 Ω·m to 200 Ω·m.

The conductive adhesive layer is disposed in the solid-state cell and the solid-state battery of Example B1 to Example B11, which improves the bonding force and conductivity between the current collector layer and the electrode active material layer in the electrode sheet. Compared with Comparative Example 1, the solid-state cells and solid-state batteries manufactured in Examples B1 to B11 also have significant cycle performance while having an improved volumetric energy density, and in addition, the direct current resistance of the batteries in Examples B1 to B8 is also reduced to different degrees. Reference may be made to Tables 2-3.

The adhesive matrix in the conductive adhesive layer in Comparative Example 2 to Comparative Example 3 is replaced with the binder in the electrode active material layer. It is found that compared with Example B1 to Example B4, although the bonding force in Comparative Example 2 to Comparative Example 3 is improved, the direct current resistance of the battery is significantly increased, which is caused by a significant increase in interfacial impedance.

**Table 2.**

| No. | Polyolefin modified resin | | Conductive adhesive layer | | | | Bonding force (N/m) between the current collector layer and the electrode active material | | Battery Performance | |
|---|---|---|---|---|---|---|---|---|---|---|
| | Adhesive matrix | | Mass part | | Adhesive matrix: Mass ratio of conductive material | Thickness (µm) | | | Direct current resistance of battery (mΩ) | 200-cycle capacity retentio n rate, 0.33C |
| | Adhesive matrix composition | Mass ratio | Adhesive matrix | Conductive material | | | Positive electrode | Negative electrode | | |
| Example B1 | PP+MAH+SEBS+C 5 copolymer | 20:4:10:10 | 50 | 50 | 1 | About 1 | 4.8 | 10.2 | 62 | 96.8% |
| Example B2 | PP+MAH+SEBS+C 5 copolymer | 20:3:10:10 | 50 | 50 | 1 | About 1 | 5.0 | 10.3 | 64 | 95.3% |
| Example B3 | PP+MAH+SEBS+C 5 copolymer | 20:5:10:10 | 50 | 50 | 1 | About 1 | 4.6 | 10.0 | 60 | 97.2% |
| Example B4 | PP+MAH+SEBS+C 5 copolymer | 20:2:10:10 | 50 | 50 | 1 | About 1 | 5.4 | 10.5 | 68 | 94.8% |
| Example B5 | PP+MAH+SEBS+C 5 copolymer | 20:4:10:10 | 30 | 50 | 0.6 | About 1 | 4.4 | 6.8 | 54 | 97.8% |
| Example B6 | PP+MAH+SEBS+C 5 copolymer | 20:4:10:10 | 40 | 50 | 0.8 | About 1 | 4.3 | 8.2 | 60 | 97.3% |
| Example B7 | PP+MAH+SEBS+C 5 copolymer | 20:4:10:10 | 50 | 40 | 1.25 | About 1 | 5.0 | 10.2 | 65 | 95.8% |
| Example B8 | PE+MAH+SEBS+C 5 copolymer | 20:4:10:10 | 50 | 50 | 1 | About 1 | 4.8 | 10.2 | 62 | 96.8% |
| Example B9 | PP+MAH+SEBS+C 5 copolymer | 20:4:10:10 | 50 | 50 | 1 | About 1.5 | 6.2 | 12.3 | 78 | 95.4% |
| Example B10 | PP+MAH+SEBS+C 5 copolymer | 20:4:10:10 | 50 | 50 | 1 | About 3 | 7.3 | 15.3 | 89 | 93.3% |
| Example B11 | PP+MAH+SEBS+C 5 copolymer | 20:4:10:10 | 50 | 50 | 1 | About 0.6 | 3.6 | 5.7 | 43 | 97.8% |
| Comparative Example b1 | The conductive adhesive layer is not disposed, and the electrode active pre-coating layer in the recess region is removed during tab die-cutting | | | | | | 3.2 | 5.8 | 79 | 92.5% |
| Comparative Example b2 | The positive electrode is replaced with PTFE (consistent with the binder in the positive electrode active material layer) | | 50 | 50 | 1 | About 1 | 6.3 | 12.3 | 123 | 89.7% |
| Comparative Example b3 | The negative electrode is replaced with PVDF (consistent with the binder in the negative electrode active material layer) | | 50 | 50 | 1 | About 1 | 7.8 | 17.6 | 167 | 88.3% |

In Table 2, the polyolefin modified resin is used as the adhesive matrix in the corresponding conductive adhesive layer. PP represents polypropylene, and PE represents polyethylene.

**Table 3. Electrode sheet resistivity**

| No. | Electrode sheet resistivity (Ω·m) | |
|---|---|---|
| | Positive electrode | Negative electrode |
| Example B1 | 103 | 155 |
| Comparative Example b1 | 132 | 201 |

In addition, compared with Comparative Example b4 in which the cell active expansion region is not disposed, taking Example B1 as an example, it is verified that the setting of the cell active expansion region improves the volumetric energy density of the battery.

The above descriptions of the various implementations and examples tend to emphasize differences between the various implementations and examples. The same or similar parts thereof may be mutually referenced. For brevity, details are not described herein again. The technical features of the above-mentioned implementations and examples may be arbitrarily combined, and all possible combinations of the technical features in the above-mentioned embodiments are not described for concise description. However, it should be regarded that the combinations of the technical features are with the range described in the present description as long as there is no inconsistency.

It should be noted that the present application is not limited to the above-described embodiments and examples. The above-described implementations and examples are merely examples, and any implementation having substantially the same configuration as the technical concept and exhibiting the same operation and effect within the scope of the claims of the present application is included in the technical scope of the present application. The implementations and examples described above merely illustrate several implementations and examples of the present application, which are described in detail, but are not to be construed as limiting the scope of the patent. Furthermore, without departing from the gist of the present application, various modifications that can be conceived by those skilled in the art to the implementations or embodiments, and other modes constructed by combining some constituent elements of the implementations or embodiments, are also included within the scope of the present application.

## Claims

1. A solid-state cell, comprising a solid electrolyte portion and two electrode portions, wherein one of the two electrode portions is a positive electrode portion, the other one is a negative electrode portion, and the positive electrode portion and the negative electrode portion are separated by the solid electrolyte portion; any electrode portion independently comprises an electrode body and a tab portion connected to the electrode body, the electrode body comprises at least one electrode layer, and the electrode layer comprises a current collector layer and an electrode active material layer located on at least one side of the current collector layer; the tab portion in the positive electrode portion is a positive tab portion, and the tab portion in the negative electrode portion is a negative tab portion;
a height direction of the solid-state cell is denoted as a Y direction, a width direction of the solid-state cell is denoted as an X direction, and a thickness direction of the solid-state cell is denoted as a Z direction; the X direction, the Y direction, and the Z direction are perpendicular to each other;
at an edge on at least one side in the Y direction, two composite recesses disposed on the solid-state cell are respectively denoted as a first composite recess and a second composite recess; the first composite recess is configured to accommodate at least a part of the positive tab portion, and the second composite recess is configured to accommodate at least a part of the negative tab portion; each electrode layer is provided with a recess corresponding to the first composite recess and a recess corresponding to the second composite recess; and
in at least one electrode layer, the current collector layer is connected to a tab at the bottom of at least one recess, the electrode layer further comprises a conductive adhesive layer located between the current collector layer and the electrode active material layer, and the conductive adhesive layer at least covers a die-cut edge region of the recess where the tab is located.

2. The solid-state cell according to claim 1, wherein the conductive adhesive layer at least covers the die-cut edge region of each recess in the electrode layer.

3. The solid-state cell according to claim 1, wherein the conductive adhesive layer at least covers a cut edge region of the electrode layer.

4. The solid-state cell according to any one of claims 1 to 3, wherein in the electrode layer comprising the conductive adhesive layer, a region between the electrode active material layer and the current collector layer comprises a covering region provided with the conductive adhesive layer, and further comprises or does not comprise a blank region not provided with the conductive adhesive layer; and calculated by a projection in the Z direction, an area percentage of the covering region relative to the electrode active material layer is 64% to 100%.

5. The solid-state cell according to any one of claims 1 to 3, wherein in the electrode layer comprising the conductive adhesive layer, calculated by the projection along the Z direction, a projection region of the conductive adhesive layer is consistent with a projection region of the electrode active material layer.

6. The solid-state cell according to any one of claims 1 to 5, wherein the conductive adhesive layer comprises an adhesive matrix and a conductive material.

7. The solid-state cell according to claim 6, wherein the electrode layer comprising the conductive adhesive layer satisfies one or more of the following features:
the adhesive matrix comprising a polyolefin resin, wherein the polyolefin resin comprises one or more of the following polyolefin resins and polyolefin modified resins based on any one of the following polyolefin resins: polyethylene, polypropylene, an ethylene-vinyl acetate copolymer, a styrene-butadiene copolymer, a styrene-ethylene-butylene-styrene block copolymer, a styrene-isoprene-styrene block copolymer, and amorphous poly-α-olefin; and the polyolefin modified resin is a copolymer of the polyolefin resin, maleic anhydride and petroleum resin;
the conductive material comprising a carbon conductive material, wherein the carbon conductive material comprises one or more of superconducting carbon, acetylene black, carbon black, Ketjen black, a carbon dot, a carbon nanotube, graphene, a carbon nanofiber, and a mesophase carbon micro-sphere;
in the conductive adhesive layer, a mass ratio of the adhesive matrix to the conductive material being (0.6-1.5): 1; and
the electrode layer comprising the conductive adhesive layer having a resistivity of 10 Ω·m to 1000 Ω·m and a bonding force between the current collector layer and the electrode active material layer in the electrode layer being 1 N/m to 50 N/m.

8. The solid-state cell according to claim 7, wherein the conductive adhesive layer satisfies one or more of the following features:
the adhesive matrix comprising a polyolefin modified resin, wherein the polyolefin modified resin is a copolymer formed by the polyolefin resin, maleic anhydride and petroleum resin at a mass ratio of 30: (2-5): (8-12);
the conductive material comprising a carbon conductive material;
a mass percentage of a sum of the adhesive matrix and the conductive material in the conductive adhesive layer being 90% to 98%;
in the conductive adhesive layer, a mass ratio of the adhesive matrix to the conductive material being (0.8-1.4): 1; and
the electrode layer comprising the conductive adhesive layer having a resistivity of 10 Ω·m to 200 Ω·m and a bonding force between the current collector layer and the electrode active material layer in the electrode layer being 3 N/m to 20 N/m.

9. The solid-state cell according to any one of claims 6 to 8, wherein the electrode active material layer comprises a conductive agent; and in the same electrode layer, calculated by a single side of the current collector layer, a mass percentage of the conductive material in the conductive adhesive layer is higher than a mass percentage of the conductive agent in the electrode active material layer.

10. The solid-state cell according to any one of claims 1 to 9, wherein in the corresponding electrode layer, calculated by the single side of the current collector layer, the conductive adhesive layer has a thickness of 0.5 µm to 3 µm.

11. The solid-state cell according to claim 10, wherein in the corresponding electrode layer, calculated by the single side of the current collector layer, the conductive adhesive layer has a thickness of 0.5 µm to 1.5 µm.

12. The solid-state cell according to any one of claims 1 to 11, wherein an active region of the solid-state cell at a height of the first composite recess and the second composite recess is denoted as a cell active expansion region; and
a height of the electrode body at the cell active expansion region is higher than a height of the electrode body at any one composite recess.

13. The solid-state cell according to claim 12, wherein a height of the solid-state cell in the Y direction is denoted as H₀; a maximum height of the cell active expansion region in the Y direction is denoted as H_{Δ}, and a utilization rate of the cell active expansion region in the Y direction is ψ_{Y}= H_{Δ}/H₀×100%;
a width of the solid-state cell in the X direction is denoted as W₀, a width of the cell active expansion region in the X direction is denoted as W_{Δ}, and a utilization rate of the cell active expansion region in the X direction is ψ_{X}= W_{Δ}/W₀×100%;
a projection area of the solid-state cell in the Z direction is denoted as A₀, a projection area of the cell active expansion region in the Z direction is denoted as A_{Δ}, and a two-dimensional utilization rate of the cell active expansion region is ψ_{A}=A_{Δ}/A₀×100%;
the solid-state cell satisfies one or more of the following features: ${H}_{Δ} \geq 0.05 mm ;$ ${ψ}_{Y} \geq 0.05 % ;$ ${W}_{Δ} \geq 50 mm ;$ ${ψ}_{X} \geq 60 % ;$ and ${ψ}_{A} \geq 0.04 % .$

14. The solid-state cell according to claim 13, wherein the solid-state cell satisfies one or more of the following features: $0.05 mm \leq {H}_{Δ} \leq 1 mm ;$ $0.1 % \leq {ψ}_{Y} \leq 2 % ;$ $50 mm \leq {W}_{Δ} \leq 1000 mm ;$ $60 % \leq {ψ}_{X} \leq 95 % ;$ and $0.04 % \leq {ψ}_{A} \leq 1.5 % .$

15. The solid-state cell according to any one of claims 1 to 13, wherein the recess provided with the tab in the electrode layer is denoted as a tab recess, and an extension height of any tab in the Y direction is greater than a height of a corresponding tab recess in the Y direction.

16. The solid-state cell according to any one of claims 1 to 15, wherein at least a part of the tab has a bent section in a corresponding recess.

17. The solid-state cell according to any one of claims 1 to 16, wherein a width of the positive tab portion in the X direction is less than a width of the first composite recess in the X direction; and a width of the negative tab portion in the X direction is less than a width of the second composite recess in the X direction.

18. The solid-state cell according to claim 17, wherein in the X direction, there is a gap between the positive tab portion and each of two side edges of the first composite recess, and there is a gap between the negative tab portion and each of two side edges of the second composite recess.

19. The solid-state cell according to any one of claims 1 to 18, wherein the solid-state cell has a laminated structure.

20. The solid-state cell according to claim 19, wherein the positive electrode portion comprises a positive electrode body and a positive tab portion connected to the positive electrode body, the positive electrode body comprises at least one positive electrode layer, and the positive electrode layer comprises a positive electrode current collector layer and a positive electrode active material layer located on at least one side of the positive electrode current collector layer; each positive electrode layer is provided with a recess corresponding to the first composite recess and a recess corresponding to the second composite recess; in at least one positive electrode layer, the positive electrode current collector layer is connected to a positive tab at the bottom of at least one groove, the positive electrode layer further comprises a positive electrode conductive adhesive layer located between the positive electrode current collector layer and the positive electrode active material layer, and the positive electrode conductive adhesive layer at least covers a die-cut edge region of the recess where the positive tab is located; all positive tabs connected to the positive electrode body jointly form at least a part of the positive tab portion;
the negative electrode portion comprises a negative electrode body and a negative tab portion connected to the negative electrode body, the negative electrode body comprises at least one negative electrode layer, and the negative electrode layer comprises a negative electrode current collector layer and a negative electrode active material layer located on at least one side of the negative electrode current collector layer; each negative electrode layer is provided with a groove corresponding to the first composite recess and a groove corresponding to the second composite recess; in at least one negative electrode layer, the negative electrode current collector layer is connected to a negative tab at the bottom of at least one recess, the negative electrode layer further comprises a negative electrode conductive adhesive layer located between the negative electrode current collector layer and the negative electrode active material layer, and the negative electrode conductive adhesive layer at least covers a die-cut edge region of the recess where the negative tab is located; all the negative tabs connected to the negative electrode body jointly form at least a part of the negative tab portion;
the solid electrolyte portion comprises at least one solid electrolyte layer, and any adjacent positive electrode layer and negative electrode layer are separated by the solid electrolyte layer; and each solid electrolyte layer is provided with empty recesses corresponding to the first composite recess and the second composite recess, respectively.

21. The solid-state cell according to claim 20, wherein there are a plurality of positive electrode layers in the positive electrode body; and the number of the negative electrode layers in the negative electrode body matches the number of the positive electrode layers in the positive electrode body.

22. The solid-state cell according to claim 20 or 21, wherein the plurality of positive electrode layers in the positive electrode body are connected to the positive tab; and the plurality of negative electrode layers in the negative electrode body are connected to the negative tab.

23. A manufacturing method for a solid-state cell, comprising the following steps:
manufacturing a required number of positive electrode sheets, wherein each of the positive electrode sheets comprises a positive electrode current collector layer and a positive electrode active material layer located on at least one side of the positive electrode current collector layer; at an edge of at least one side in the height direction of the positive electrode sheet, the positive electrode sheet is provided with a positive tab recess and a first empty recess; and at least one positive electrode sheet further comprises a positive tab connected to the positive electrode current collector layer and a conductive adhesive layer located between the positive electrode current collector layer and the positive electrode active material layer, the conductive adhesive layer is denoted as a positive electrode conductive adhesive layer, the positive tab is connected to a bottom of the positive tab recess of the corresponding positive electrode sheet, and the positive electrode conductive adhesive layer at least covers a die-cut edge region of the positive tab recess;
manufacturing a required number of negative electrode sheets, wherein each of the negative electrode sheets includes a negative electrode current collector layer and a negative electrode active material layer located on at least one side of the negative electrode current collector layer; at an edge of at least one side in the height direction of the negative electrode sheet, the negative electrode sheet is provided with a negative tab recess and a second empty recess; at least one negative electrode sheet further includes a negative tab connected to the negative current collector layer and a conductive adhesive layer located between the negative current collector layer and the negative electrode active material layer, the conductive adhesive layer is denoted as a negative conductive adhesive layer, the negative tab is connected to a bottom of the negative tab recess of the corresponding negative electrode sheet, and the negative conductive adhesive layer at least covers a die-cut edge region of the negative tab recess;
manufacturing a required number of solid electrolyte membranes, wherein each of the solid electrolyte membranes is provided with a fourth empty recess and a third empty recess;
laminating the positive electrode sheets, the solid electrolyte membranes and the negative electrode sheets according to the respective required numbers, so that the positive electrode sheets and the negative electrode sheets are separated by the solid electrolyte membranes, the positive tab recess, the fourth empty recess and the second empty recess are aligned in contour and form a first composite recess, and the negative tab recess, the third empty recess and the first empty recess are aligned in contour and form a second composite recess, to obtain a laminated member; wherein each positive electrode sheet constitutes a positive electrode portion, each negative electrode sheet constitutes a negative electrode portion, and each solid electrolyte membrane constitutes a solid electrolyte portion; each positive tab of the positive electrode portion constitutes a soft segment of the positive tab portion, and at least a part of the soft segment of the positive tab portion is accommodated in the first composite recess; and each negative tab of the negative electrode portion constitutes a soft segment of the negative tab portion, and at least a part of the soft segment of the negative tab portion is accommodated in the second composite recess; and
rolling the laminated member to form the solid-state cell.

24. The manufacturing method for a solid-state cell according to claim 23, wherein the positive electrode sheet comprising the positive tab is manufactured by a method comprising the following steps:
identifying a positive electrode body region and a positive electrode inactive region that are adjacent to each other by a first boundary line on a surface of a positive electrode current collector membrane, the first boundary line extending in a width direction of the positive electrode current collector membrane in a concavely recessed configuration, so that the positive electrode inactive region comprises a positive tab concave region and a first concave region that are concave toward the positive electrode body region, and the positive tab concave region and the first concave region are separated by the positive electrode body region, wherein the positive tab concave region matches the positive tab recess in position, and the first concave region matches the first empty recess in position;
on at least one side surface of the positive current collector membrane, attaching the positive conductive adhesive layer to at least a part of the positive electrode body region by using the first boundary line as a coating boundary;
on at least one side surface of the positive current collector membrane with the positive conductive adhesive layer, attaching a positive electrode active pre-coating layer, so that the positive electrode active pre-coating layer covers the positive electrode body region, the positive tab concave region and the first concave region;
removing a portion of the positive electrode active pre-coating layer covering the positive tab concave region and the first concave region, and exposing a surface of the corresponding positive current collector membrane to obtain a positive electrode sheet to be die-cut, wherein a remaining portion of the positive electrode active pre-coating layer corresponds to the positive electrode active material layer, and a portion of the positive current collector membrane covered by the positive electrode active material layer corresponds to the positive current collector layer; and
performing die-cutting processing on the positive electrode sheet to be die-cut according to the first boundary line to form the positive electrode sheet, wherein the performing the die-cutting processing on the positive electrode sheet to be die-cut according to the first boundary line comprises: die-cutting a corresponding contour of a region of the positive electrode active material layer other than the positive tab concave region, die-cutting, in the positive tab concave region, contours of two side edges of the positive tab recess and the positive tab connected to the positive electrode current collector layer, and die-cutting the first empty recess in the first concave region according to the first boundary line.

25. The manufacturing method for a solid-state cell according to claim 24, wherein the negative electrode sheet comprising the negative tab is manufactured by a method comprising the following steps:
identifying a negative electrode body region and a negative electrode inactive region that are adjacent to each other by a second boundary line on a surface of a negative electrode current collector membrane, the second boundary line extending in a width direction of the negative electrode current collector membrane in a concavely recessed configuration, so that the negative electrode inactive region comprises a negative tab concave region and a second concave region that are concave toward the negative electrode body region, and the negative tab concave region and the second concave region are separated by the negative electrode body region, wherein the negative tab concave region matches the negative tab recess in position, and the second concave region matches the second empty recess in position;
on at least one side surface of the negative electrode current collector membrane, attaching the negative electrode conductive adhesive layer to at least a part of the negative electrode body region by using the second boundary line as a coating boundary;
on at least one side surface of the negative current collector membrane with the negative conductive adhesive layer, attaching a negative active pre-coating layer, so that the negative active pre-coating layer covers the negative body region, the negative tab concave region and the second concave region;
removing a portion of the negative active pre-coating layer covering the concave region and the second concave region, and exposing a surface of the corresponding negative current collector membrane to obtain a negative electrode sheet to be die-cut, wherein a remaining portion of the negative active pre-coating layer corresponds to the negative electrode active material layer, and a portion of the negative current collector membrane covered by the negative electrode active material layer corresponds to the negative current collector layer; and
performing die-cutting processing on the negative electrode sheet to be die-cut according to the second boundary line to form the negative electrode sheet, wherein the performing the die-cutting processing on the negative electrode sheet to be die-cut according to the second boundary line comprises: die-cutting a corresponding contour of a region of the negative electrode active material layer other than the negative tab concave region, die-cutting, in the negative tab concave region, edge contours of two sides of the negative tab recess and the negative tab connected to the negative electrode current collector layer, and die-cutting the second empty recess in the second concave region according to the second boundary line.

26. The manufacturing method for a solid-state cell according to claim 25, satisfying one or more of the following features:
in the process of manufacturing the positive electrode sheet including the positive tab, on at least one side surface of the positive electrode current collector membrane, coating the positive electrode conductive adhesive layer on an entire region of the positive electrode body region by using the first boundary line as a coating boundary; and
in the process of manufacturing the negative electrode sheet including the negative tab, on at least one side surface of the negative current collector membrane, coating the negative conductive adhesive layer on the entire region of the negative body region by using the second boundary line as a coating boundary.

27. The manufacturing method for a solid-state cell according to claim 25 or 26, satisfying one or more of the following features:
in the positive electrode sheet comprising the positive tab, in a height direction of the positive electrode sheet, an extension height of the positive tab in the positive electrode sheet being greater than a height of a corresponding positive tab recess in the positive electrode sheet; and
in the negative electrode sheet comprising the negative tab, in a height direction of the negative electrode sheet, an extension height of the negative tab in the negative electrode sheet being greater than a height of the corresponding negative tab recess in the negative electrode sheet.

28. The manufacturing method for a solid-state cell according to any one of claims 25 to 27, satisfying one or more of the following features:
in the manufactured solid-state cell, at least a part of the positive tab having a bent section in the first composite recess; and
in the manufactured solid-state cell, at least a part of the negative tab has a bent section in the second composite recess.

29. The manufacturing method for a solid-state cell according to any one of claims 25 to 28, satisfying one or more of the following features:
in the positive electrode sheet comprising the positive tab, in a width direction of the positive electrode sheet, a width of the positive tab being less than a width of the corresponding positive tab recess; and
in the negative electrode sheet comprising the negative tab, in a width direction of the negative electrode sheet, a width of the negative tab being less than a width of the corresponding negative tab recess.

30. The manufacturing method for a solid-state cell according to any one of claims 25 to 29, satisfying one or more of the following features:
in the positive electrode sheet comprising the positive tab, in the width direction of the positive electrode sheet, a gap being formed between the positive tab and each of the two side edges of the positive tab recess; and
in the negative electrode sheet comprising the negative tab, in the width direction of the negative electrode sheet, a gap being formed between the negative tab and each of the two side edges of the negative tab recess.

31. The manufacturing method for a solid-state cell according to any one of claims 23 to 29, wherein the required number of positive electrode sheets is multiple; and the required number of the negative electrode sheets matches the required number of the positive electrode sheets.

32. The manufacturing method for a solid-state cell according to claim 31, wherein the plurality of positive electrode sheets comprise the positive tabs; and the plurality of negative electrode sheets comprise the negative tabs.

33. The manufacturing method for a solid-state cell according to claim 23, wherein the manufactured solid-state cell is the solid-state cell according to any one of claims 1 to 22.

34. A solid-state battery, comprising one or more of the solid-state cell according to any one of claims 1 to 22 and the solid-state cell manufactured by the manufacturing method for a solid-state cell according to any one of claims 23 to 32.

35. The solid-state battery according to claim 34, wherein the solid-state battery is an all-solid-state battery.

36. An electric device, comprising at least one of the solid-state cell according to any one of claims 1 to 22, the solid-state cell prepared by the manufacturing method for a solid-state cell according to any one of claims 23 to 32, and the solid-state battery according to claim 34 or 35.
